(19) **Europäisches Patentamt**
**European Patent Office**
**Office européen des brevets**

(11) **EP 2 600 621 A1**

(12) **EUROPEAN PATENT APPLICATION**
published in accordance with Art. 153(4) EPC

(43) Date of publication:
**05.06.2013 Bulletin 2013/23**

(21) Application number: **12820307.2**

(22) Date of filing: **03.07.2012**

(51) Int Cl.:
*H04N 13/00* (2006.01)     *H04N 7/173* (2011.01)

(86) International application number:
**PCT/JP2012/067017**

(87) International publication number:
**WO 2013/018490 (07.02.2013 Gazette 2013/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.08.2011   JP 2011171398**
**09.09.2011   JP 2011197709**

(71) Applicant: **Sony Corporation**
**Tokyo 108-0075 (JP)**

(72) Inventor: **TSUKAGOSHI, Ikuo**
**Tokyo 108-0075 (JP)**

(74) Representative: **Ealey, Douglas Ralph**
**D Young & Co LLP**
**120 Holborn**
**London EC1N 2DY (GB)**

(54) **TRANSMISSION DEVICE, TRANSMISSION METHOD, AND RECEIVING DEVICE**

(57)     A reception device with a 3D function can appropriately acquire corresponding disparity information together with data of overlapping information.

A first private data stream (a 2D stream) including data of overlapping information and a second private data stream (a 3D extension stream) including disparity information are included in a multiplexed data stream. Association information associating the first private data stream with the second private data stream is included in the multiplexed data stream. For example, identification information which is common to descriptors describing information related to both of the streams is described as the association information. A reception device with a 3D function at a reception side can efficiently and appropriately extract and decode both of the streams based on the association information.

*FIG. 15*

## Description

TECHNICAL FIELD

The present technology relates to a transmission device, a transmission method, and a reception device. Particularly, the present technology relates to a transmission device that transmits data of overlapping information and disparity information together with stereoscopic image data including left-eye image data and right-eye image data.

BACKGROUND ART

For example, in Patent Document 1, a transmission system of stereoscopic image data using a television broadcast wave has been proposed. In this transmission system, stereoscopic image data including left-eye image data and right-eye image data is transmitted, and a stereoscopic image display using binocular parallax is performed.

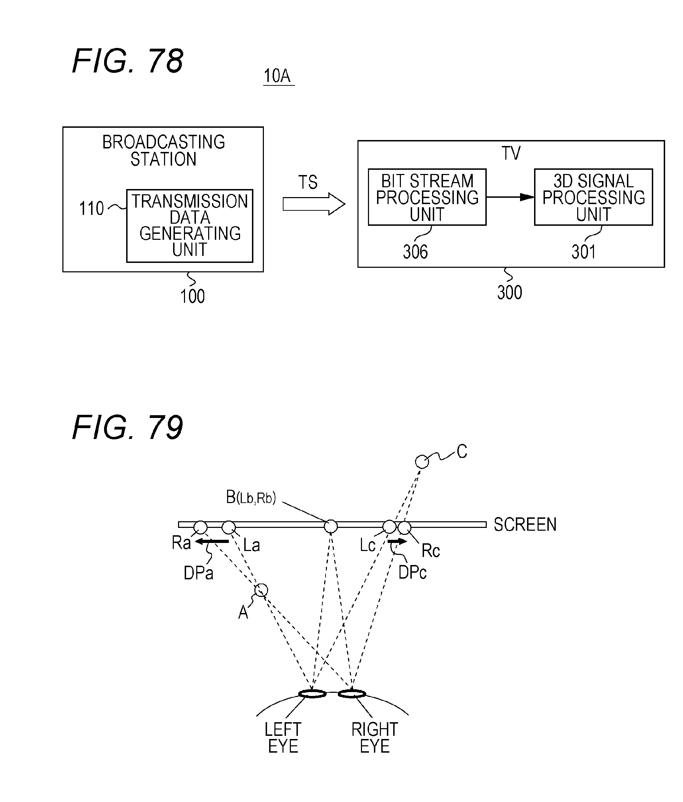

Fig. 79 illustrates a relation between a horizontal display position of an object (body) on a screen and a reproduction position of a stereoscopic image thereof in a stereoscopic image display using binocular parallax. For example, for object A of which a left image La is displayed to be shifted to the right side and a right image Ra is displayed to be shifted to the left side as illustrated on the screen in the figure, the left and right lines of sights intersect with each other on a further front side than the screen face, and so the reproduction position of the stereoscopic image is located on a further front side than the screen face. DPa represents a disparity vector in a horizontal direction related to the object A.

In addition, for example, for object B of which a left image Lb and a right image Rb are displayed at the same position as illustrated on the screen in the figure, the left and right lines of sights intersect with each other on the screen face, and so the reproduction position of the stereoscopic image is on the screen face. Furthermore, for example, for object C of which the left image Lc is displayed to be shifted to the left side and the right image Rc is displayed to be shifted to the right side as illustrated on the screen in the figure, the left and right lines of sights intersect with each other on a further inner side than the screen face, and so the reproduction position of the stereoscopic image is located on a further inner side than the screen face. DPc represents a disparity vector in a horizontal direction related to the object C.

CITATION LIST

PATENT DOCUMENT

Patent Document 1: Japanese Patent Application Laid-Open No. 2005-6114

SUMMARY OF THE INVENTION

PROBLEMS TO BE SOLVED BY THE INVENTION

As described above, when a stereoscopic image is displayed, a viewer usually perceives a sense of perspective of a stereoscopic image using binocular parallax. Overlapping information overlapping an image such as a subtitle is expected to be rendered in conjunction with a stereoscopic image display with a sense of depth in a three dimension (3D) space as well as a two dimension (2D) space. For example, when a subtitle is displayed to overlap (be overlaid with) an image, if the subtitle is not displayed ahead of an object within a closest image in terms of a sense of perspective, the viewer is likely to feel an inconsistency in a sense of perspective.

In this regard, there may be considered a technique in which disparity information between a left-eye image and a right-eye image data are transmitted together with data of overlapping information, and a reception side causes parallax to occur between left-eye overlapping information and right-eye overlapping information. In a reception device capable of displaying a stereoscopic image, disparity information is meaningful information. When a broadcasting station transmits data of overlapping information and disparity information through individual private data streams (PES streams), a reception device with a 3D function needs to easily recognize the presence of two PES streams and acquire corresponding disparity information together with data of overlapping information.

The present technology is directed to causing a reception device with a 3D function to be able to appropriately acquire corresponding disparity information tougher with data of overlapping information.

SOLUTIONS TO PROBLEMS

A concept of the present technology is a transmission device, including:

an image data output unit that outputs left-eye image data and right-eye image data configuring a stereoscopic image;

an overlapping information data output unit that outputs data of overlapping information overlapping an image based on the left-eye image data and the right-eye image data;

a disparity information output unit that outputs disparity information for shifting the overlapping information overlapping the image based on the left-eye image data and the right-eye image data and causing disparity to occur; and

a data transmitting unit that transmits multiplexed data stream including a video data stream including the image data, a first private data stream including the data of the overlapping information, and a second private data stream including the disparity information,

wherein association information associating the first private data stream with the second private data stream is included in the multiplexed data stream.

In the present technology, an image data output unit outputs left-eye image data and right-eye image data configuring a stereoscopic image. An overlapping information data output unit outputs data of overlapping information overlapping an image based on the left-eye image data and the right-eye image data. Here, overlapping information is information such as a subtitle, a graphics, or a text which overlaps an image. A disparity information output unit that outputs disparity information for shifting the overlapping information overlapping the image based on the left-eye image data and the right-eye image data and causing disparity to occur.

A data transmitting unit transmits multiplexed data stream. The multiplexed data stream includes a video data stream including image data, a first private data stream including data of overlapping information, and a second private data stream including disparity information. Association information associating the first private data stream with the second private data stream is included in the multiplexed data stream.

In the present technology, for example, identification information which is common to a first descriptor describing information related to the first private data stream and a second descriptor describing information related to the second private data stream may be described as the association information. In this case, the common identification information may be defined by a special value representing that the first private data stream and the second private data stream are present.

Further, in the present technology, the multiplexed data stream may include the first private data stream and the second private data stream corresponding to each of a plurality of language services, and the pieces of common identification information corresponding to the respective language services may be set to be different from each other. Thus, even in the multilingual service, a reception device with a 3D function at a reception side can properly extract and decode the first private data stream and the second private data stream which are associated with each other for each language service.

Further, in the present technology, for example, the data of the overlapping information may be subtitle data of a DVB format, and a common composition page ID may be described in a first subtitle descriptor corresponding to the first private data stream and a subtitle descriptor corresponding to the second private data stream.

Further, in the present technology, for example, linguistic information may be described in the first descriptor and the second descriptor, and the linguistic information described in the second descriptor may be set to represent a non-language. In this case, for example, the linguistic information representing the non-language may be any one of language codes included in a space of "zxx" or "qaa" to "qrz" representing an ISO language code. Thus, a reception device with a legacy 2D function can prevent the second private data stream including the disparity information from being extracted and decoded, and prevent the disparity information from interfering with the reception process.

As described above, in the present technology, the association information associating the first private data stream with the second private data stream is included in the multiplexed data stream. Thus, the reception device with the 3D function at the reception side can efficiently and appropriately extract and decode the first private data stream and the second private data stream which are associated with each other based on the association information.

Further, in the present technology, for example, identification information which is common to a first descriptor describing information related to the first private data stream and a second descriptor describing information related to the second private data stream may be described as the association information, and type information representing information for a stereoscopic image display may be described in the first descriptor and the second descriptor. For example, the data of the overlapping information may be subtitle data of a DVB format, and the type information may be subtitle type information.

In this case, although the type information representing the information for the stereoscopic image display is described, since the disparity information is not included in the first private data stream, the reception device with the 3D function at the reception side can recognize the second private data stream including the disparity information, search for the second private data stream including the disparity information based on the common identification information, and decode the second private data stream including the disparity information.

Further, in the present technology, for example, a descriptor describing dedicated linking information for linking the first private data stream with the second private data stream may be included in the multiplexed data stream. For example, the descriptor may be a dedicated descriptor describing the dedicated linking information. Alternatively, the existing descriptor may be extended to describe the association information. In this case, the descriptor includes the first descriptor and the second descriptor respectively corresponding to the first private data stream and the second private data stream, and the identification information which is common to the first descriptor and the second descriptor is described.

Another concept of the present technology is a reception device, including:

a data receiving unit that receives multiplexed data stream including a video data stream including left-eye image data and right-eye image data configuring a stereoscopic image, a first private data stream including data of overlapping information overlapping an image based on the left-eye image data and the right-eye image data, and a second private data stream including disparity information for shifting the overlapping information overlapping the image based on the left-eye image data and the right-eye image data and causing disparity to occur;

a first decoding unit that extracts the video data stream from the multiplexed data stream and decodes the video data stream; and

a second decoding unit that extracts the first private data stream and the second private data stream from the multiplexed data stream and decodes the first private data stream and the second private data stream,

wherein association information associating the first private data stream with the second private data stream is included in the multiplexed data stream, and

the second decoding unit extracts the first private data stream and the second private data stream from the multiplexed data stream based on the association information.

In the present technology, a data receiving unit receives a multiplexed data stream including a video data stream, a first private data stream, and a second private data stream. Further, a first decoding unit extracts the video data stream from the multiplexed data stream, and decodes the video data stream. Further, a second decoding unit extracts the first private data stream and the second private data stream from the multiplexed data stream, and decodes the first private data stream and the second private data stream.

Here, association information associating the first private data stream with the second private data stream is included in the multiplexed data stream. Thus, the second decoding unit can properly extract and decode the first private data stream and the second private data stream which are associated with each other based on the association information, and acquire data of overlapping information and disparity information corresponding thereto.

EFFECTS OF THE INVENTION

According to the present technology, a reception device with a 3D function can easily acquire corresponding disparity information together with data of overlapping information.

BRIEF DESCRIPTION OF DRAWINGS

Fig. 1 is a block diagram illustrating a configuration example of an image transceiving system according to an embodiment of the invention.

Fig. 2 is a block diagram illustrating a configuration example of a transmission data generating unit in a broadcasting station.

Fig. 3 is a diagram illustrating image data of a pixel format of 1920×1080.

Fig. 4 is a diagram to describe a "top-and-bottom" format, a "side by side" format, and a "frame sequential" format, which are a transmission format of stereoscopic image data (3D image data).

Fig. 5 is a diagram for describing an example of detecting a disparity vector of a right-eye image to a left-eye image.

Fig. 6 is a diagram for describing that a disparity vector is obtained by a block matching method.

Fig. 7 is a diagram illustrating an example of an image when a value of a disparity vector of each pixel is used as a brightness value of each pixel.

Fig. 8 is a diagram illustrating an example of a disparity vector of each block.

Fig. 9 is a diagram for describing a downsizing process executed by a disparity information creating unit of a transmission data generating unit.

Fig. 10 is a diagram illustrating an example of a region defined on a screen and a sub region defined in the region in subtitle data.

Fig. 11 is a diagram illustrating configurations of a 2D stream and a 3D extension stream included in a transport stream TS.

Fig. 12 is a diagram for describing association of time stamp (PTS) values included in PES headers of a 2D stream (PES1 (1): PES#1) and a 3D extension stream (PES2 (2): PES#2).

Fig. 13 is a diagram illustrating an example in which a time stamp (PTS) values of a 2D stream and a 3D extension stream are set to different values from each other.

Fig. 14 is a diagram illustrating another example in which a time stamp (PTS) values of a 2D stream and a 3D extension stream are set to different values from each other.

Fig. 15 is a diagram illustrating a configuration example of a transport stream TS including a 2D stream and a 3D extension stream.

Fig. 16 is a diagram illustrating a structure of a PCS (page_composition_segment) configuring subtitle data.

Fig. 17 is a diagram illustrating a correspondence relation between each value of "segment_type" and a segment type.

Fig. 18 is a diagram for describing information (component_type = 0x15, 0x25) representing a format of a newly defined 3D subtitle.

Fig. 19 is a diagram illustrating that a subtitle descriptor (subtitling_descriptor) and a component descriptor (component_descriptor) included in a transport steam are extracted.

Fig. 20 is a diagram illustrating that a PES stream (a 2D stream and a 3D extension stream) included in a transport steam is extracted.

Fig. 21 is a diagram illustrating that any one of language codes included in a space of "qaa" to "qrz" which are ISO language codes are used as an ISO language code representing a non-language.

Fig. 22 is a diagram illustrating an excerpt of an ISO language code (ISO 639-2 Code) list.

Fig. 23 is a diagram illustrating a stream configuration example of a subtitle data stream (a 2D stream and a 3D extension stream).

Fig. 24 is a diagram illustrating an example of syntax of a component descriptor (component_descriptor).

Fig. 25 is a diagram illustrating an example of syntax of a subtitle descriptor (subtitling_descriptor).

Fig. 26 is a diagram illustrating an example in which disparity information is updated using an interval period, the interval period is fixed, and the period is equal to an update period.

Fig. 27 is a diagram illustrating an example in which disparity information is updated using an interval period, and a short period is used as the interval period.

Fig. 28 is a diagram illustrating a configuration example of a 3D extension stream.

Fig. 29 is a diagram illustrating an update example of disparity information when a DSS segment is sequentially transmitted.

Fig. 30 is a diagram illustrating an update example of the disparity information (disparity) in which an update frame interval is represented by a multiple of an interval period (ID: interval duration) serving as a unit time.

Fig. 31 is a diagram illustrating a display example of a subtitle in which two regions serving as a subtitle display region are included in a page region (Area for Page_default).

Fig. 32 is a diagram illustrating an example of a disparity information curve of each region and a page when both disparity information of a region unit and disparity information of a page unit including all regions are included in a DSS segment as disparity information (Disparity) to be sequentially updated in a subtitle display period.

Fig. 33 is a diagram illustrating a structure in which disparity information of a page and each region is transmitted.

Fig. 34 is a diagram (1/3) illustrating an example of syntax of a DSS.

Fig. 35 is a diagram (2/3) illustrating an example of syntax of a DSS.

Fig. 36 is a diagram (3/3) illustrating an example of syntax of a DSS.

Fig. 37 is a diagram (1/4) illustrating main data specifying content (semantics) of a DSS.

Fig. 38 is a diagram (2/4) illustrating main data specifying content (semantics) of a DSS.

Fig. 39 is a diagram (3/4) illustrating main data specifying content (semantics) of a DSS.

Fig. 40 is a diagram (4/4) illustrating main data specifying content (semantics) of a DSS.

Fig. 41 is a diagram illustrating a broadcast reception concept when a set-top box and a television receiver are devices with a 3D function.

Fig. 42 is a diagram illustrating a broadcast reception concept when a set-top box and a television receiver are devices with a legacy 2D function.

Fig. 43 is a diagram illustrating a broadcast reception concept when receivers are a device with a legacy 2D function (2D receiver) and a device with a 3D function (3D receiver).

Fig. 44 is a diagram illustrating a stream configuration example of a subtitle data stream (a 2D stream and a 3D extension stream) when a bilingual service is provided.

Fig. 45 is a diagram illustrating a configuration example of a transport stream TS when a bilingual service is provided.

Fig. 46 is a diagram illustrating a stream configuration example of a subtitle data stream (a 2D stream and a 3D extension stream) when a 3D extension stream is used as an ancillary page.

Fig. 47 is a diagram illustrating a configuration example of a transport stream TS when a 3D extension stream is used as an ancillary page.

Fig. 48 is a diagram for describing information when 3D service determination is performed.

Fig. 49 is a flowchart illustrating an example of a 3D service determining process in a receiver (a set-top box).

Fig. 50 is a flowchart illustrating another example of a 3D service determining process in a receiver (a set-top box).

Fig. 51 is a flowchart schematically illustrating the flow of a process of a receiver (a set-top box) when it is determined that a service is a 3D service.

Fig. 52 is a diagram illustrating a configuration example of a 3D PES stream (a 3D stream).

Fig. 53 is a diagram illustrating a display example of a subtitle (graphics information) on an image and a sense of perspective of a background, a near-view object, and a subtitle.

Fig. 54 is a diagram illustrating a display example of a subtitle on an image, and a left-eye subtitle LGI and a right-eye subtitle RGI for displaying a subtitle.

Fig. 55 is a block diagram illustrating a configuration example of a set-top box configuring an image transceiving system.

Fig. 56 is a block diagram illustrating a configuration example (3D support) of a bit stream processing unit configuring a set-top box.

Fig. 57 is a block diagram illustrating an example of syntax of a multi-decoding descriptor used to associate with a 2D stream with a 3D extension stream.

Fig. 58 is a block diagram illustrating a configuration example of a television receiver configuring an image transceiving system.

Fig. 59 is a block diagram illustrating a stream configuration example of a subtitle data stream (a 2D stream and a 3D extension stream) when "subtitling_type" of a 2D stream is set to 3D.

Fig. 60 is a block diagram illustrating a configuration example of a transport stream TS when "subtitling_type" of a 2D stream is set to 3D.

Fig. 61 is a block diagram illustrating a stream configuration example of a subtitle data stream (a 2D stream and a 3D extension stream) when a bilingual service is provided.

Fig. 62 is a flowchart schematically illustrating the flow of a process of a receiver (set-top-box) when a service is determined as a 3D service.

Fig. 63 is a block diagram illustrating a stream configuration example of a subtitle data stream (a 2D stream and a 3D extension stream) when a composition page ID is defined by a special value (special_valueA).

Fig. 64 is a diagram illustrating a configuration example of a transport stream TS when a composition page ID is defined by a special value (special_valueA).

Fig. 65 is a diagram illustrating a stream configuration example of a subtitle data stream (a 2D stream and a 3D extension stream) when a bilingual service is provided.

Fig. 66 is a flowchart schematically illustrating the flow of a process of a receiver (set-top-box) when a service is determined as a 3D service.

Fig. 67 is a diagram illustrating a stream configuration example of a subtitle data stream (a 2D stream and a 3D extension stream) when dedicated information (linking information) for linking of a 3D extension stream is described in a descriptor.

Fig. 68 is a diagram illustrating an example of syntax of a stream association ID descriptor.

Fig. 69 is a diagram illustrating content (semantics) of main information in a syntax example of a stream association ID descriptor.

Fig. 70 is a diagram illustrating an example of syntax of an extended component descriptor.

Fig. 71 is a diagram illustrating content (semantics) of main information in a syntax example of an extended component descriptor.

Fig. 72 is a diagram illustrating a configuration example of the transport stream TS when dedicated information (linking information) for linking of a 3D extension stream is described in a descriptor.

Fig. 73 is a diagram illustrating a stream configuration example of a subtitle data stream (a 2D stream and a 3D extension stream) when a bilingual service is provided.

Fig. 74 is a diagram illustrating a configuration example of a transport stream TS when a bilingual service is provided.

Fig. 75 is a flowchart schematically illustrating the flow of a process of a receiver (set-top box) when a service is determined as a 3D service.

Fig. 76 is a block diagram illustrating another configuration example of a set-top box configuring an image transceiving system.

Fig. 77 is a block diagram illustrating another configuration example of a television receiver configuring an image transceiving system.

Fig. 78 is a block diagram illustrating another configuration example of an image transceiving system.

Fig. 79 is a diagram for describing a relation between display positions of left and right images of an object on a screen and a reproduction position of a stereoscopic image when a stereoscopic image is displayed using binocular parallax.

MODE FOR CARRYING OUT THE INVENTION

Hereinafter, a mode for carrying out the present invention (hereinafter, referred to as an "embodiment") will be described. The description will be presented in the following order:

1. Embodiment
2. Modified Example

<1. Embodiment>

[Configuration Example of Image Transceiving System]

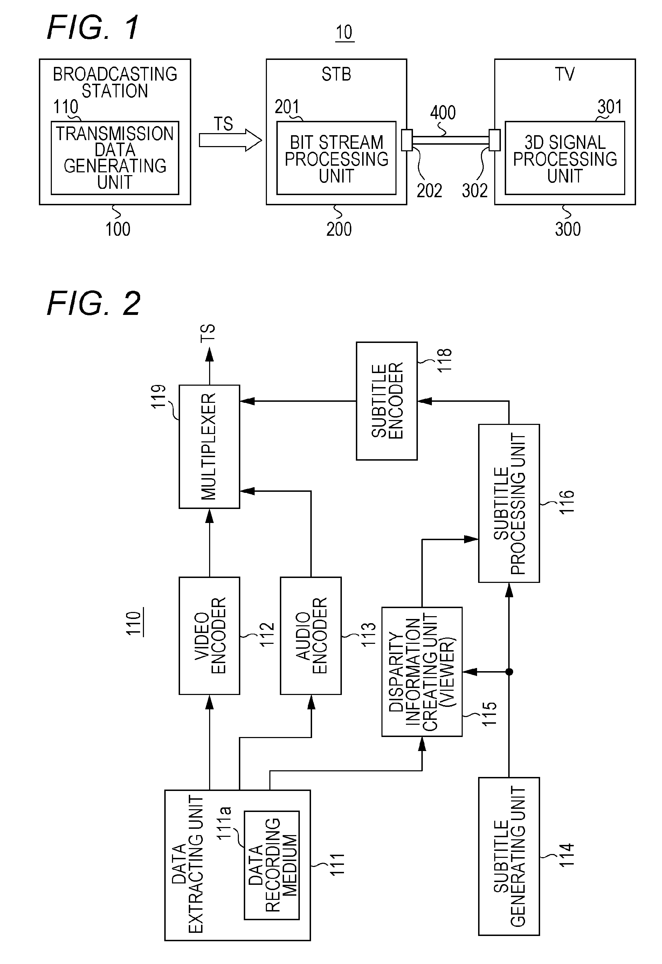

Fig. 1 illustrates a configuration example of an image transceiving system 10 according to an embodiment. The image transceiving system 10 includes a broadcasting station 100, a set-top box (STB) 200, and a television receiver (TV) 300.

The set-top box 200 is connected with the television receiver 300 through a digital interface of HDMI (High Definition Multimedia Interface). The set-top box 200 is connected with the television receiver 300 using an HDMI cable 400. An HDMI terminal 202 is disposed in the set-top box 200. An HDMI terminal 302 is disposed in the television receiver 300. One end of the HDMI cable 400 is connected to the HDMI terminal 202 of the set-top box 200, and the other end of the HDMI cable 400 is connected to the HDMI terminal 302 of the television receiver 300.

[Description of Broadcasting Station]

The broadcasting station 100 transmits a transport stream TS through a broadcast wave. The broadcasting station 100 includes a transmission data generating unit 110 that generates the transport stream TS. The transport stream TS includes image data, audio data, data of overlapping information, disparity information, and the like. Here, the image data (hereinafter, referred to appropriately as a "stereoscopic image data") includes left-eye image data and right-eye image data that configures a stereoscopic image. The stereoscopic image data has a predetermined transmission format. The overlapping information generally refers to a subtitle, graphics information, text information, or the like, but refers a subtitle in this embodiment.

"Configuration Example of Transmission Data Generating Unit"

Fig. 2 illustrates a configuration example of the transmission data generating unit 110 in the broadcasting station 100.
The transmission data generating unit 110 transmits disparity information (a disparity vector) through a data structure which is compatible with a digital video broadcasting (DVB) scheme which is one of the existing broadcast standards. The transmission data generating unit 110 includes a data extracting unit 111, a video encoder 112, and an audio encoder 113. The transmission data generating unit 110 further includes a subtitle generating unit 114, a disparity information creating unit 115, a subtitle processing unit 116, a subtitle encoder 118, and a multiplexer 119.

For example, a data recording medium 111a is detachably mounted to the data extracting unit 111. In the data recording medium 111a, audio data and disparity information are recorded in association with stereoscopic image data including left-eye image data and right-eye image data. The data extracting unit 111 extracts stereoscopic image data, audio data, disparity information, and the like from the data recording medium 111a. Examples of the data recording medium 111a include disk-shaped recording medium and a semiconductor memory.

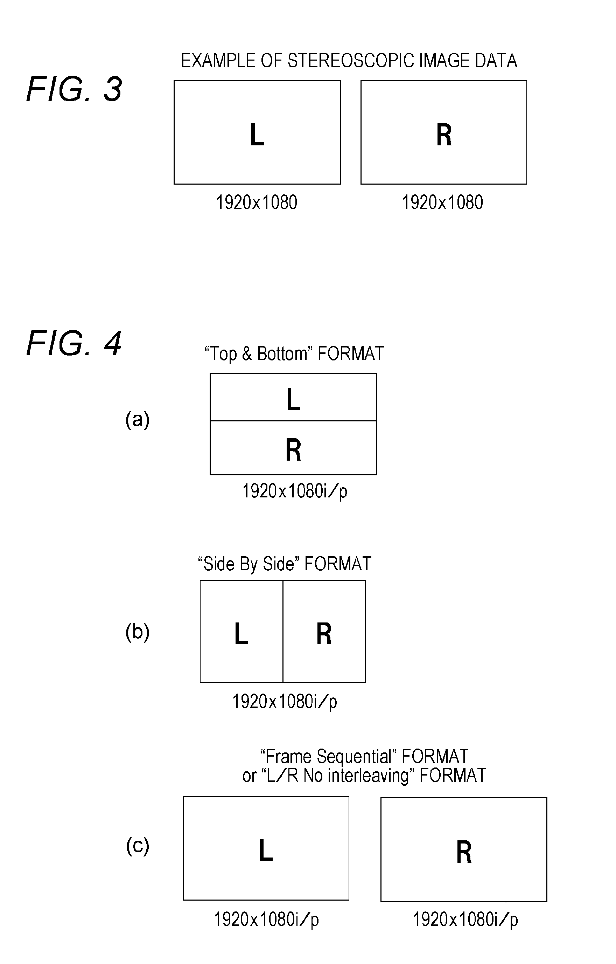

The stereoscopic image data recorded in the data recording medium 111a is stereoscopic image data of a predetermined transmission format. An example of a transmission format of stereoscopic image data (3D image data) will be described. Here, first to third transmission formats will be described, but any other transmission format may be used. Here, a case in which each of left eye (L) image data and right eye (R) image data is image data with a pixel format of a predetermined resolution, for example, 1920x1080 as illustrated in Fig. 3 will be described as an example.

The first transmission format is a top-and-bottom format, and is a format in which data of each line of the left-eye image data is transmitted in the first half in the vertical direction, and data of each line of the left-eye image data is transmitted in the second half in the vertical direction as illustrated in Fig. 4(a). In such a case, since the lines of the left-eye image data and the lines of the right-eye image data are thinned out to 1/2, the vertical resolution becomes half of that of the original signal.

The second transmission format is a side-by-side format, and is a format in which pixel data of the left-eye image data is transmitted in the first half in a horizontal direction, and pixel data of the right-eye image data is transmitted in the second half in the horizontal direction as illustrated in Fig. 4(b). In such a case, pixel data of each one of the left-eye image data and the right-eye image data in the horizontal direction is thinned out to 1/2. The horizontal resolution becomes half of that of the original signal.

The third transmission format is a frame sequential format or a L/R no-interleaving format, and is a format in which left-eye image data and right-eye image data are switched and transmitted sequentially in units of frames as illustrated in Fig. 4(c).

This format includes a full frame format or a service compatible format with a 2D format.

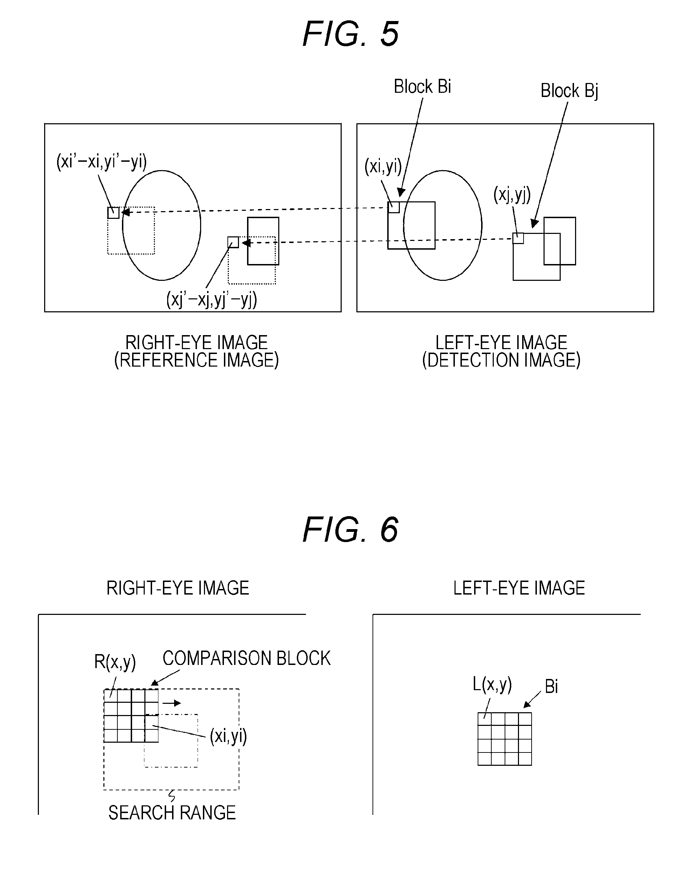

For example, the disparity information recorded in the data recording medium 111a refers to a disparity vector of each pixel configuring an image. An example of detecting a disparity vector will be described. Here, an example will be described in which a disparity vector of a right-eye image with respect to a left-eye image is detected. As illustrated in Fig. 5, the left-eye image is set as a detection image, and the right-eye image is set as a reference image. In this example, disparity vectors at the positions of (xi, yi) and (xj, yj) are detected.

A case will be described as an example in which a disparity vector at the position of (xi, yi) is detected. In this case, in the left-eye image, a pixel located at the position of (xi, yi) is set as the upper left side, and, for example, a pixel block (disparity detection block) Bi of 4x4, 8x8, or 16x16 is set. Then, in the right-eye image, a pixel block that matches the pixel block Bi is searched for.

In such a case, in the right-eye image, a search range having the position of (xi, yi) as its center is set, and respective pixels within the search range are sequentially set as a pixel of interest, and comparison blocks, for example, of 4x4, 8x8, or 16x16, which are the same as the above-described pixel block Bi, are sequentially set.

A sum of absolute values of differences between corresponding respective pixels of the pixel block Bi and the comparison blocks that are sequentially set is calculated. Here, as illustrated in Fig. 6, when a pixel value of the pixel block Bi is $L(x, y)$ and a pixel value of the comparison block is $R(x, y)$, a sum of the absolute values of differences between the pixel block Bi and a specific comparison block is represented as $\Sigma|L(x, y) - R(x, y)|$.

When n pixels are included in the search range set in the right-eye image, n sums S1 to Sn are finally acquired, and a minimum sum Smin is selected from among them. Then, the position (xi', yi') of the pixel located on the upper left side can be acquired from the comparison block from which the sum Smin is acquired. Accordingly, a disparity vector at the position of (xi, yi) is detected as (xi'-xi, yi'-yi). Although detailed description will not be presented, also for a disparity vector at the position of (xj, yj), a pixel located at the position of (xj, yj) is set as the upper left side in the left-eye image, and a pixel block Bj, for example, of 4x4, 8x8, or 16x16 is set, so that the disparity vector can be detected in a similar process.

Returning to Fig. 2, the video encoder 112 encodes the stereoscopic image data extracted from the data extracting unit 111 using MPEG4-AVC, MPEG2, VC-1, or the like, and generates a video data stream (video elementary stream). The audio encoder 113 encodes the audio data extracted from the data extracting unit 111 using AC3, AAC, or the like, and generates an audio data stream (audio elementary stream).

The subtitle generating unit 114 generates subtitle data which is subtitle data of DVB (digital video broadcasting). The subtitle data is 2D image subtitle data. The subtitle generating unit 114 configures an overlapping information data output unit.

The disparity information creating unit 115 executes a downsizing process on a disparity vector (a disparity vector in a horizontal direction) of each pixel or a plurality of pixels extracted from the data extracting unit 111, and generates disparity information of each player as follows. The disparity information needs not be necessarily generated by the disparity information creating unit 115 and may be separately supplied from the outside.

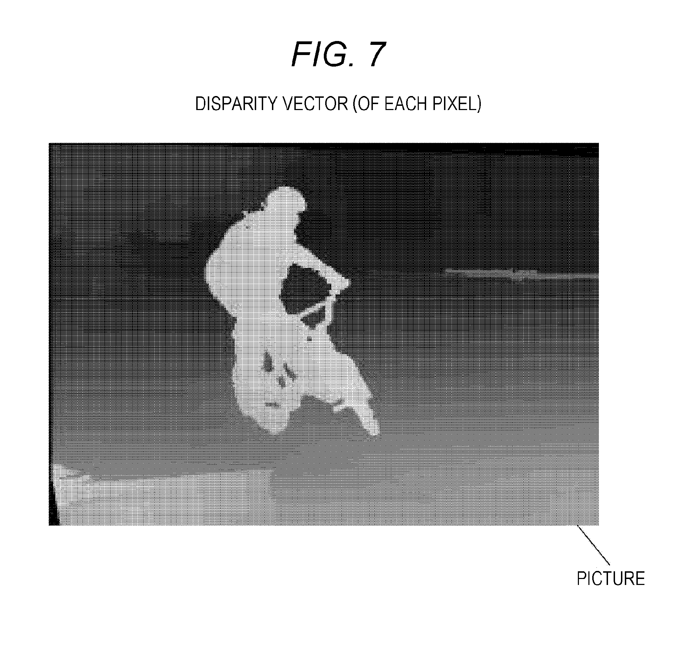

Fig. 7 illustrates an example of data in a relative depth direction given like a brightness value of each pixel. Here, data in the relative depth direction can be dealt with as a disparity vector of each pixel by predetermined conversion. In this example, a person portion has a high brightness value. This means that the person portion has a large disparity vector value, and thus means that in a stereoscopic image display, the person portion is recognized in a standing-out state. Further, in this example, a background portion has a small brightness value. This means that the background portion has a small disparity vector value, and thus means that in a stereoscopic image display, the background portion is recognized in a sunken state.

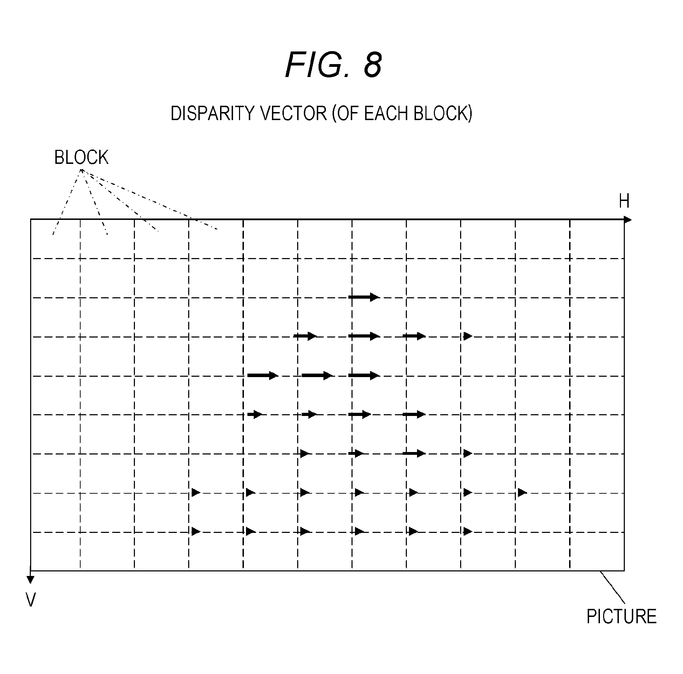

Fig. 8 illustrates an example of a disparity vector of each block. A block corresponds to a layer above a pixel positioned at the lowest layer. The blocks are configured such that an image (picture) region is divided into a predetermined size in a horizontal direction and a vertical direction. For example, a disparity vector having a largest value among disparity vectors of all pixels present in a block is selected as a disparity vector of each block. In this example, a disparity vector of each block is represented by an arrow, and the size of an arrow corresponds to the size of a disparity vector.

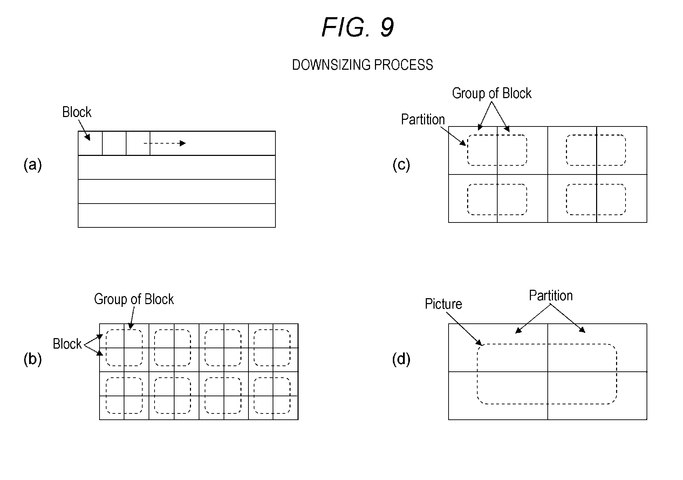

Fig. 9 illustrates an example of the downsizing process executed by the disparity information creating unit 115. First, disparity information creating unit 115 obtains a signed disparity vector of each block using a disparity vector of each pixel as illustrated in Fig. 9(a). As described above, a block corresponds to a layer above a pixel located on the lowermost layer, and is configured by dividing an image (picture) region into a predetermined size in a horizontal direction and a vertical direction. Then, for example, a disparity vector having a smallest value or a disparity vector having a negative value whose absolute value is largest among disparity vectors of all pixels present in a block is selected as the disparity vector of each block.

Next, the disparity information creating unit 115 obtains a disparity vector of each group (group of block) using a disparity vector of each block as illustrated in Fig. 9(b). A group corresponds to an upper layer of a block, and is obtained by grouping a plurality of neighboring blocks together. In the example of Fig. 9(b), each group is configured with 4 blocks bound by a dotted frame. Then, for example, a disparity vector having a smallest value or a disparity vector having a negative value whose absolute value is largest among disparity vectors of all blocks in a corresponding group is selected as of a disparity vector of each group.

Next, the disparity information creating unit 115 obtains a disparity vector of each partition using a disparity vector of each group as illustrated in Fig. 9(c). A partition corresponds to an upper layer of a group, and is obtained by grouping a plurality of neighboring groups together. In the example of Fig. 9(c), each partition is configured with 2 groups bound by a dotted frame. Then, for example, a disparity vector having a smallest value or a disparity vector having a negative value whose absolute value is largest among disparity vectors of all groups in a corresponding partition is selected as of a disparity vector of each partition.

Next the disparity information creating unit 115 obtains a disparity vector of the entire picture (entire image) located in a highest layer using a disparity vector of each partition as illustrated in Fig. 9(d). In the example of Fig. 9(d), four partitions bound by a dotted frame are included in the entire picture. Then, for example, a disparity vector having a smallest value or a disparity vector having a negative value whose absolute value is largest among disparity vectors of all partitions included in the entire picture is selected as of a disparity vector of the entire picture.

In the above-described way, the disparity information creating unit 115 can obtained the disparity vector of each region of each of layers including the block, the group, the partition, and the entire picture by executing the downsizing process on the disparity vector of each pixel located in the lowermost layer. In the example of the downsizing process illustrated in Fig. 9, disparity vectors of four layers of the block, the group, the partition, and the entire picture are finally obtained in addition to the layer of the pixel. However, the number of layers, a region dividing method of each layer, and the number of regions are not limited to the above example.

Referring back to Fig. 2, the subtitle processing unit 116 can define a sub region within a region based on the subtitle data generated by the subtitle generating unit 114. Further, the subtitle processing unit 116 sets disparity information for shift-adjusting the display position of the overlapping information in the left-eye image and the right-eye image data based on the disparity information generated by the disparity information creating unit 115. The disparity information can be set in units of sub regions, in units of regions, or in units of pages.

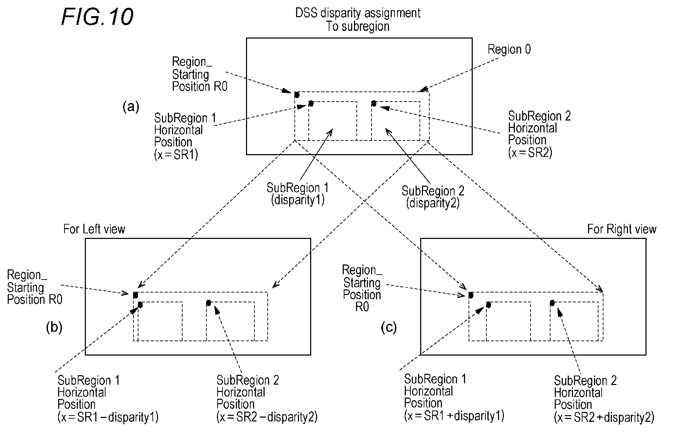

Fig. 10(a) illustrates an example of a region defined on a screen and a sub region defined in the region in subtitle data. In this example, two sub regions of "SubRegion 1" and "SubRegion 2" are defined in a region 0 in which "Region_Starting Position" is R0. The position x (a horizontal position) of "SubRegion 1" in the horizontal direction is SR1, and the position x (a horizontal position) of "SubRegion 2" in the horizontal direction is SR2. In this example, disparity information "disparity 1" is set on the sub region "SubRegion 1", and disparity information "disparity 2" is set on the sub region "SubRegion 2."

Fig. 10(b) illustrates a shift adjustment example in a sub region in an left-eye image based on disparity information. The disparity information "disparity 1" is set on the sub region "SubRegion 1." For this reason, shift adjustment is performed on the sub region "SubRegion 1" such that the position x (horizontal position) in the horizontal direction is SR1-disparity 1. Further, the disparity information "disparity 2" is set on the sub region "SubRegion 2." For this reason, shift adjustment is performed on the sub region "SubRegion 2" such that the position x (horizontal position) in the horizontal direction is SR2-disparity 2.

Fig. 10(c) illustrates a shift adjustment example in a sub region in an right-eye image based on disparity information. The disparity information "disparity 1" is set on the sub region "SubRegion 1." For this reason, shift adjustment is performed on the sub region "SubRegion 1" in a direction opposite to the left-eye image such that the position x (horizontal position) in the horizontal direction is SR1+disparity 1. Further, the disparity information "disparity 2" is set on the sub region "SubRegion 2." For this reason, shift adjustment is performed on the sub region "SubRegion 2" in a direction opposite to the left-eye image such that the position x (horizontal position) in the horizontal direction is SR2+disparity 2.

The subtitle processing unit 116 outputs display control information such as region information of a sub region or disparity information together with the subtitle data generated by the subtitle generating unit 114. The disparity information can be set in units of regions or in units of pages as well as in units of sub regions as described above.

The subtitle data includes segments such as a DDS, PCS, an RCS, a CDS, an ODS, an EDS, and the like. The DDS (display definition segment) designates a display size for a HDTV. The PCS (page composition segment) designates a region position in a page. The RCS (region composition segment) designates the size of a region or an encoding mode of an object or designates a starting position of an object.

The CDS (CLUT definition segment) designates CLUT content. The ODS (object data segment) includes encoded pixel data. The EDS (end of display set segment) represents the end of subtitle data starting from the DDS segment. In this embodiment, a DSS (Disparity Signaling Segment) segment is further defined. The DSS segment includes the display control information.

Referring back to Fig. 2, the subtitle encoder 118 generates first and second private data streams (first and second subtitle data streams). In other words, the subtitle encoder 118 generates the first private data stream (a 2D stream) including segments of the DDS, the PCS, the RCS, the CDS, the ODS, and the EDS. Further, the subtitle encoder 118 generates the second private data stream (a 3D extension stream) including segments of the DDS, the DSS, and the EDS.

The multiplexer 119 obtains a transport stream TS as a multiplexed data stream by multiplexing streams from the video encoder 112, the audio encoder 113, and the subtitle encoder 118. The transport stream TS includes a video data stream, an audio data stream, and the first and second private data streams as the PES (Packetized Elementary Stream) stream.

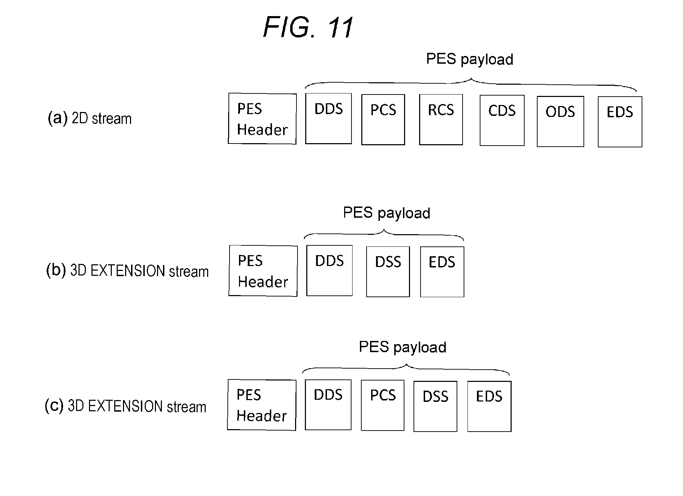

Fig. 11 illustrates configurations of a 2D stream and a 3D extension stream included in the transport stream TS. Fig. 11(a) illustrates a 2D stream in which a PES header is arranged at the head, and a PES payload including segments of the DDS, the PCS, the RCS, the CDS, the ODS, and the EDS is subsequently arranged.

Fig. 11(b) illustrates a 3D extension stream in which a PES header is arranged at the head, and a PES payload including segments of the DDS, the DSS, and the EDS is subsequently arranged. The 3D extension stream may be configured such that the segments of the DDS, the PCS, the DSS, and the EDS are included in the PES payload as illustrated in Fig. 11(c). In this case, a page state of the PCS is a normal case, and overlapping data (bitmap) does not change.

Here, the segments included in the 2D stream and the 3D extension stream have the same page ID (page_id). Thus, in the reception device with the 3D function at the reception side, the segment of the 2D stream and the segment of the 3D extension stream are easily connected with each other based on the page ID.

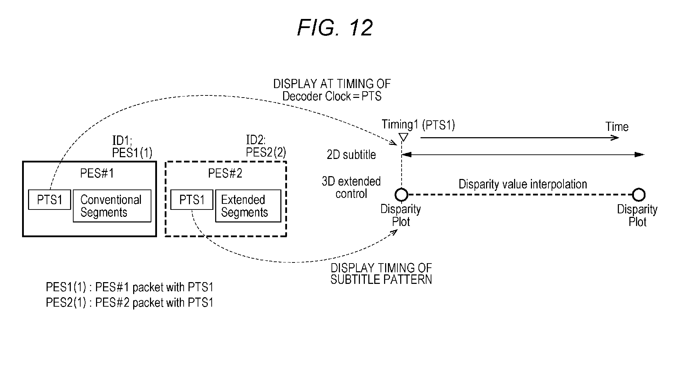

The multiplexer 119 includes synchronous information, which is used to synchronize a display based on data of overlapping information at the reception side with shift control based on disparity information (Disparity), in the 2D stream and the 3D extension stream. Specifically, the multiplexer 119 is configured to associate a value of a time stamp (PTS: presentation time stamp) included in the PES header of the 2D stream (PES1 (1):PES#1) with a value of a presentation time stamp (PTS) included in the PES header of the 3D extension stream (PES2 (2):PES#2) as illustrated in Fig. 12.

Fig. 12 illustrates an example in which the values of the time stamps (PTS) of the 2D stream and the 3D extension stream are set to the same value, that is, a PTS1. In this case, at the reception side (the decoding side), a display of a subtitle pattern based on subtitle data (data of overlapping information) starts from the PTS1, and shift control based on disparity information for displaying a subtitle pattern in a 3D manner also starts from the PTS1.

The example of Fig. 12 illustrates that two pieces of disparity information, that is, disparity information of a PTS1 frame and disparity information of a subsequent predetermined frame are included in the 3D extension stream. The reception side (the decoding side) can obtain disparity information of an arbitrary frame between the two frames by an interpolating process and dynamically perform shift control.

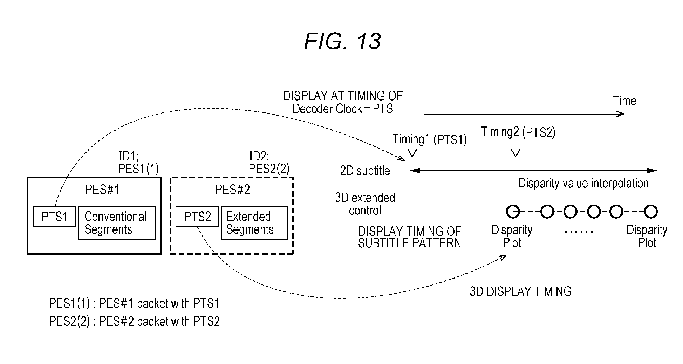

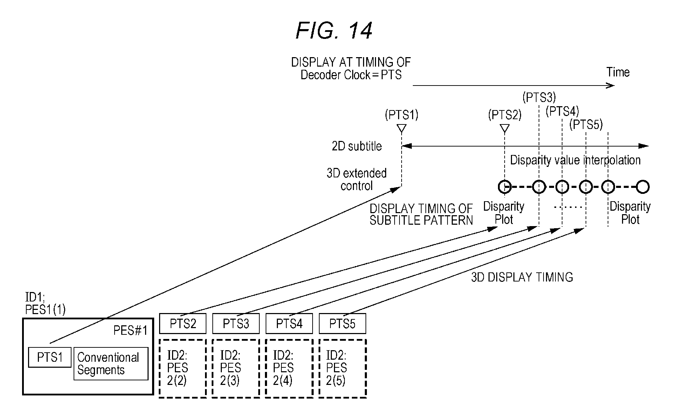

In Fig. 12, "conventional segments" included in the 2D stream mean segments of the DDS, the PCS, the RCS, the CDS, the ODS, and the EDS. Further, "extended segments" included in the 3D extension stream mean segments of the DDS, the DSS, and the EDS or segments of the DDS, the PCS, the DSS, and the EDS. In Fig. 12, "Elementary_PID" of the 2D stream is ID1, and "Elementary_PID" of the 3D extension stream is ID2. This applies similarly in Figs. 13 and 14.

Fig. 13 illustrates an example in which the time stamp (PTS) values of the 2D stream and the 3D extension stream are set to different values from each other. In other words, Fig. 12 illustrates an example in which the time stamp (PTS) value of the 2D stream is set to a PTS1, the time stamp (PTS) value of the 3D extension stream is set to a PTS2 subsequent to the PTS1. In this case, at the reception side (the decoding side), a display of a subtitle pattern based on subtitle data (data of overlapping information) starts from the PTS1, and shift control based on disparity information for displaying a subtitle pattern in a 3D manner also starts from the PTS2.

The example of Fig. 13 illustrates that disparity information of a PTS2 frame and disparity information of a plurality of subsequent frames are included in the 3D extension stream. The reception side (the decoding side) can obtain disparity information of an arbitrary frame between two of the plurality of frames by an interpolating process and dynamically perform shift control.

Fig. 14 illustrates an example in which the time stamp (PTS) values of the 2D stream and the 3D extension stream are set to different values from each other, similarly to Fig. 13, and a plurality of 3D extension streams having different time stamp (PTS) values are present. In other words, in the example of Fig. 14, the time stamp (PTS) value of the 2D stream is set to a PTS1. The time stamp (PTS) values of a plurality of 3D extension frames are set to a PTS2, a PTS3, a PTS4, and the like which are subsequent to the PTS1.

In this case, at the reception side (the decoding side), a display of a subtitle pattern based on subtitle data (data of overlapping information) starts from the PTS1. Further, shift control based on disparity information for displaying a subtitle pattern in a 3D manner also starts from the PTS2, and then an update is sequentially performed. The example of Fig. 14 illustrates that disparity information of a frame represented by each time stamp is included in each of a plurality of 3D extension streams, and the reception side (the decoding side) can obtain disparity information of an arbitrary frame between two of the plurality of frames by an interpolating process and dynamically perform shift control.

An operation of the transmission data generating unit 110 illustrated in Fig. 2 will be briefly described. The stereoscopic image data extracted from the data extracting unit 111 is supplied to the video encoder 112. The video encoder 112 encodes the stereoscopic image data using MPEG4-AVC, MPEG2, VC-1, or the like, and generates a video data stream including encoded video data. The video data stream is supplied to the multiplexer 119.

The audio data extracted from the data extracting unit 111 is supplied to the audio encoder 113. The audio encoder 113 encodes the audio data using MPEG-2 Audio AAC, MPEG-4 AAC, or the like, and generates an audio data stream including encoded audio data. The audio data stream is supplied to the multiplexer 119.

The subtitle generating unit 114 generates subtitle data (for a 2D image) which is subtitle data of DVB. The subtitle data is supplied to the disparity information creating unit 115 and the subtitle processing unit 116.

The disparity vector of each pixel extracted from the data extracting unit 111 is supplied to the disparity information creating unit 115. The disparity information creating unit 115 executes the downsizing process on the disparity vector of each pixel or a plurality of pixels, and generates disparity information (disparity) of each layer. The disparity information is supplied to the subtitle processing unit 116.

For example, the subtitle processing unit 116 defines a sub region in a region based on the subtitle data generated by the subtitle generating unit 114. Further, the subtitle processing unit 116 sets disparity information for shift-adjusting the display position of overlapping information in the left-eye image and the right-eye image data based on the disparity information generated by the disparity information creating unit 115. In this case, the disparity information is set in units of sub regions, in units of regions, or in units of pages.

The subtitle data and the display control information output from the subtitle processing unit 116 are supplied to the subtitle encoder 118. The display control information includes region information of a sub region, disparity information, and the like. The subtitle encoder 118 generates the first and second private data streams (elementary stream).

In other words, the first private data stream (the 2D stream) including the segments of the DDS, the PCS, the RCS, the CDS, the ODS, and the EDS is generated. In addition, the second private data stream (the 3D extension stream) including the segments of the DDS, the DSS, and the EDS is generated. As described above, the segment of the DSS is a segment including the display control information.

The data streams from the video encoder 112, the audio encoder 113, and the subtitle encoder 118 are applied to the multiplexer 119 as described above. The multiplexer 119 obtains a transport stream TS as a multiplexed data stream by converting each data stream into a PES packet and multiplexing the PES packet. The transport stream TS includes the first private data stream (the 2D stream) and the second private data stream (the 3D extension stream) as the PES stream as well as the video data stream and the audio data stream.

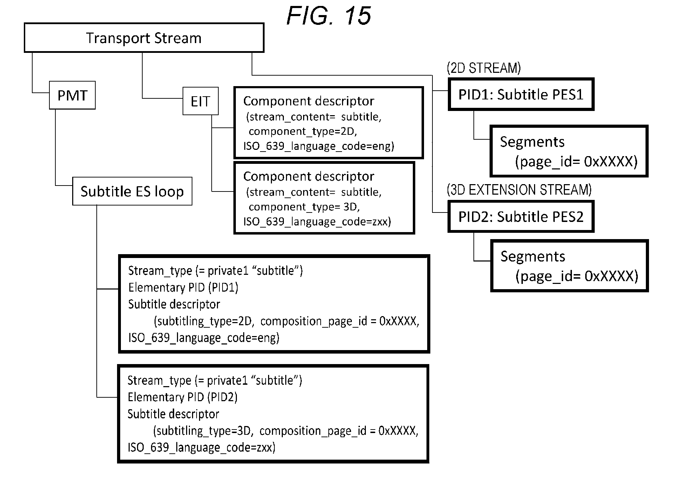

Fig. 15 illustrates a configuration example of the transport stream TS. In Fig. 15, for the sake of simplification of the drawing, video- and audio-related portions are not illustrated. The transport stream TS includes the PES packet obtained by packetizing each elementary stream.

In this configuration example, a PES packet "Subtitle PES1" of the 2D stream (the first private data stream) and a PES packet "Subtitle PES2" of the 3D extension stream (the second private data stream) are included. The 2D stream (PES stream) includes the segments of the DDS, the PCS, the RCS, the CDS, the ODS, and the EDS (see Fig. 11(a)). The 3D extension stream (PES stream) includes the segments of the DDS, the DSS, and the EDS or the segments of the DDS, the PCS, the DSS, and the EDS (Figs. 11 (b) and 11(c)). In this case, "Elementary_PID" of the 2D stream and "Elementary_PID" of the 3D extension stream are set to different IDs such as PID1 and PID2, and the streams are different PES streams.

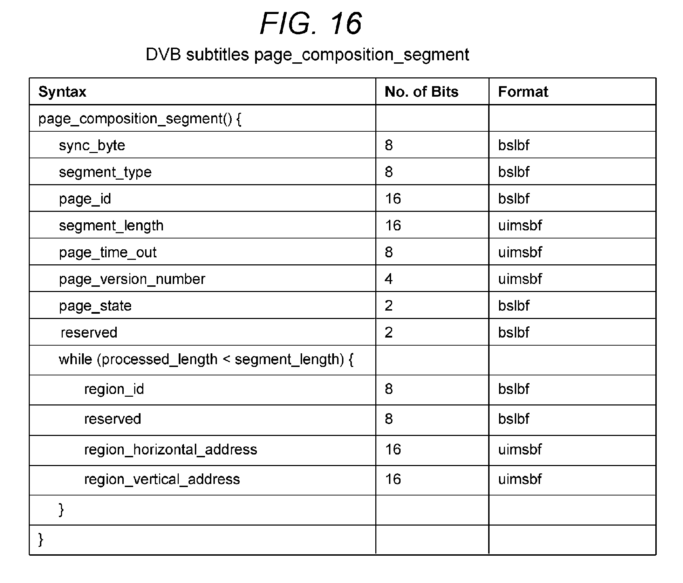

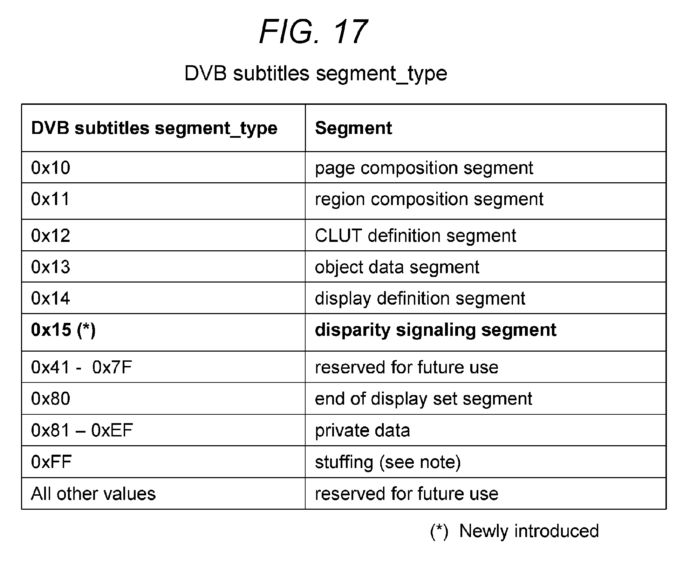

Fig. 16 illustrates the structure of the PCS (page_composition_segment). The segment type of the PCS is "0x10" as illustrated in Fig. 17. "region_horizontal_address" and "region_vertical address" represent the start position of a region. The structures of the other segments such as the DDS, the RCS, and the ODS are not illustrated in the drawing. As illustrated in Fig. 17, the segment type of the DDS is "Ox14," the segment type of the RCS is "0x11," the segment type of the CDS is "0x12," the segment type of the ODS is "0x13," and the segment type of the EDS is "0x80." Further, the segment type of the DSS is "0x15" as illustrated in Fig. 17. The detailed structure of the DSS segment will be described later.

Referring back to Fig. 15, the transport stream TS includes a PMT (program map table) as PSI (program specific information). The PSI is information representing a program to which each elementary stream included in the transport steam belongs. The transport stream further includes an EIT (event information table) as SI (serviced information) to perform management of an event unit. Metadata of a program unit is described in the EIT.

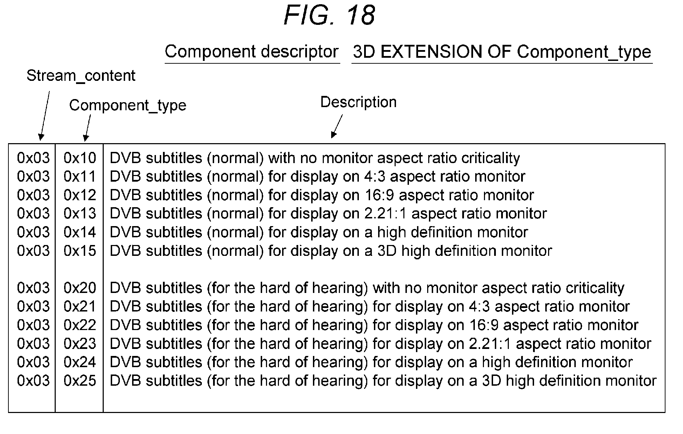

A subtitle descriptor (subtitling_descriptor) representing content of a subtitle is included in the PMT. Further, a component descriptor (component_descriptor) representing delivery content is included in the EIT for each stream. As illustrated in Fig. 18, when "stream_content" of the component descriptor represents a subtitle, "component_type" of "0x15" or "0x25" represents a 3D subtitle, and the other values represent a 2D subtitle. As illustrated in Fig. 15, "subtitling_type" of the subtitle descriptor is set to the same value as "component_type."

A subtitle elementary loop (subtitle ES loop) having information associated with a subtitle elementary stream is present in the PMT. In the subtitle elementary loop, not only information such as a packet identifier (PID) but also a descriptor describing information associated with a corresponding elementary stream are arranged for each stream.

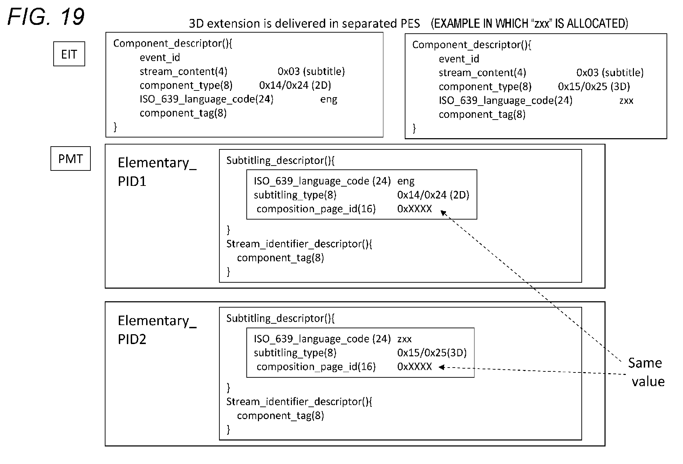

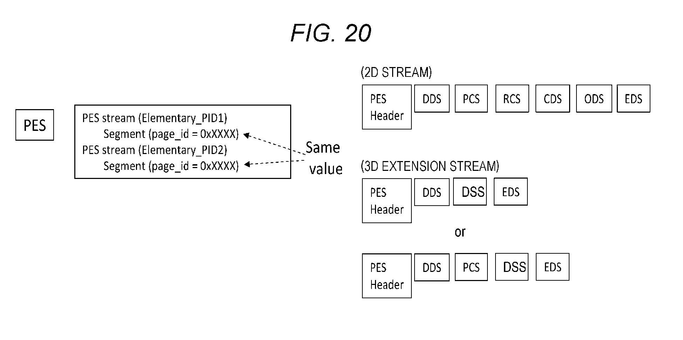

In Fig. 19, a subtitle descriptor (subtitling_descriptor) and a component descriptor (component_descriptor) illustrated in Fig. 15 are extracted and illustrated. In Fig. 20, the PES stream (the 2D stream and the 3D extension stream) illustrated in Fig. 15 is extracted and illustrated.

In order to specify association between the 2D stream and the 3D extension stream, a composition page ID"composition_page_id" of a subtitle descriptor corresponding to each stream is set as follows. In other words, "composition_page_id" of the 2D stream and "composition_page_id" of the 3D extension stream are set to share the same value ("0xXXXX" in Fig. 19). Here, "composition_page_id" configures association information. Further, both PES streams are encoded such that "page_id" of each associated segment has the same value (0xXXXX) so that each segment included in the 3D extension stream is associated with each segment of the 2D stream.

Further, for example, an ISO language code (ISO_639_language_code) is described in the subtitle descriptor and the component descriptor as linguistic information. The ISO language code of a descriptor corresponding to the 2D stream is set to represent a language of a subtitle. In the illustrated example, "eng" representing English is set. The 3D extension stream includes the DSS segment with disparity information, but does not include the ODS segment and thus does not depend on a language. For example, the ISO language code described in the descriptor corresponding to the 3D extension stream is set "zxx" representing a non-language.

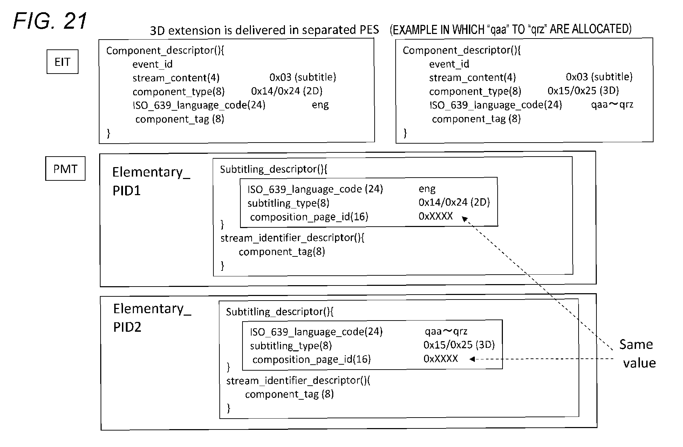

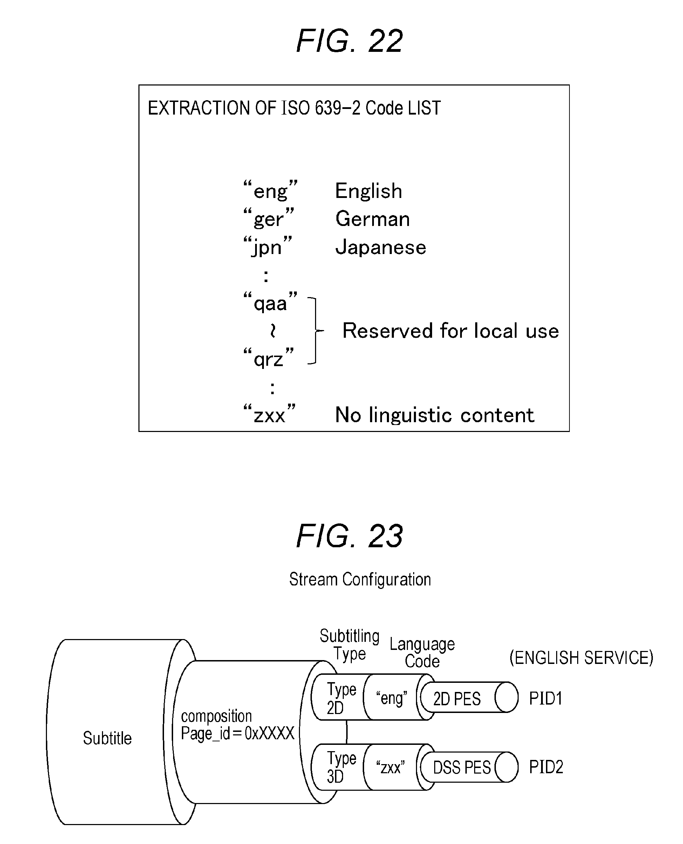

Further, any one of language codes included in a space of "qaa" to "qrz" which are the ISO language codes may be used as an ISO language code representing a non-language. Fig. 21 illustrates a subtitle descriptor (subtitling_descriptor) and a component descriptor (component_descriptor) in this case. Fig. 22 illustrates an excerpt of an ISO language code (ISO 639-2 Code) list for reference.

Fig. 23 illustrates a stream configuration example of a subtitle data stream (a 2D stream and a 3D extension stream). This example is a single language service example of English "eng." The 3D extension stream is extracted in with "composition_page_id = 0xXXXX" which is in common with the 2D stream, and designated by "subtitling_type = 3D" and "ISO_639_language_code = zxx." The 2D stream is designated by "subtitling_type = 2D" and "ISO_639_language_code = eng." Here, "subtitling_type = 3D" means a case in which a value of "subtitling_type" is "0x15" or "0x25." Further, "subtitling_type = 2D" means a case in which a value of "subtitling_type" is neither "0x15" nor "0x25." This applies similarly in the following.

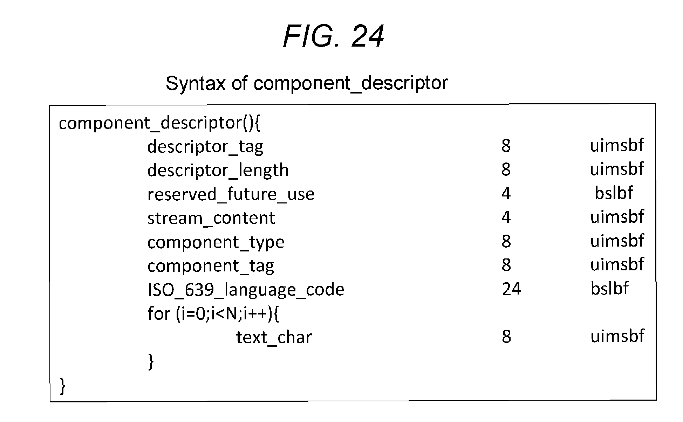

Fig. 24 illustrates an example of syntax of a component descriptor (component_descriptor). An 8-bit field of "descriptor_tag" represents that a descriptor is a component descriptor. An 8-bit field of "descriptor_length" represents an entire byte size subsequent to this field.

A 4-bit field of "stream_content" represents the stream type of a main stream such as a video, an audio, or a subtitle. A 4-bit field of "component_type" represents the component type of a main stream such as a video, an audio, or a subtitle.

When a main stream is a 2D stream, that is, in a component descriptor corresponding to a 2D stream, "stream_content" is "subtitle," and "component_type" is "2D" for two dimension. Further, when a main stream is a 3D extension stream, that is, in a component descriptor corresponding to a 3D extension stream, "stream_content" is "subtitle," and "component_type" is "3D" for three dimension.

An 8-bit field of "component_tag" has the same value as "component_tag" in a stream identifier descriptor (stream_identifier descriptor) corresponding to a main stream. Thus, the stream identifier descriptor is associated with the component descriptor by "component_tag." A 24-bit field of "ISO_639_language_code" represents the ISO language code.

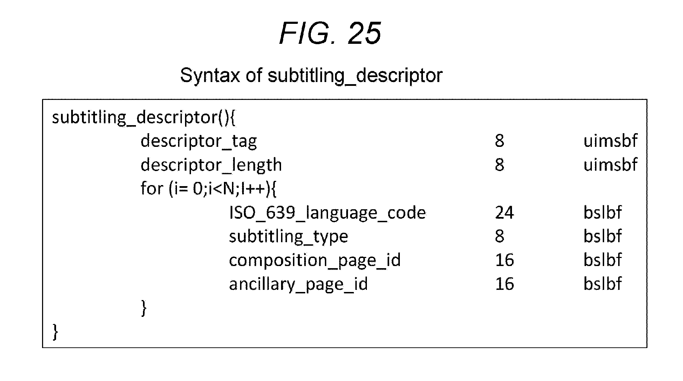

Fig. 25 illustrates an example of syntax of the subtitle descriptor (subtitling_descriptor). An 8-bit field of "descriptor_tag" represents that this descriptor is the subtitle descriptor. An 8-bit field of "descriptor_length" represents the entire byte size subsequent to this field.

A 24-bit field of "ISO_639_language_code" represents the ISO language code. An 8-bit field of "subtitling_type" represents subtitle type information. When a main stream is a 2D stream, that is, in a subtitle descriptor corresponding to a 2D stream, "subtitling_type" is "2D." However, when a main stream is a 3D extension stream, that is, in a subtitle descriptor corresponding to a 3D extension stream, "subtitling_type" is "3D." A 16 bit field of "composition_page_id" represents the composition page ID, and has the same value as a page ID "page_id" of a segment included in a main stream.

[Update of Disparity Information]

As described above, disparity information is transmitted through a 3D extension stream. An update of the disparity information will be described.

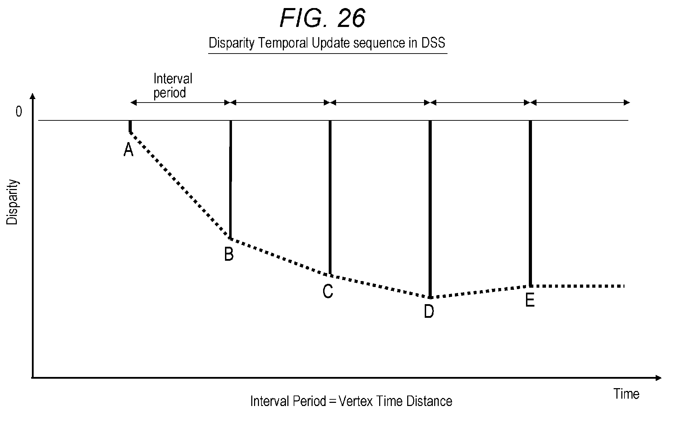

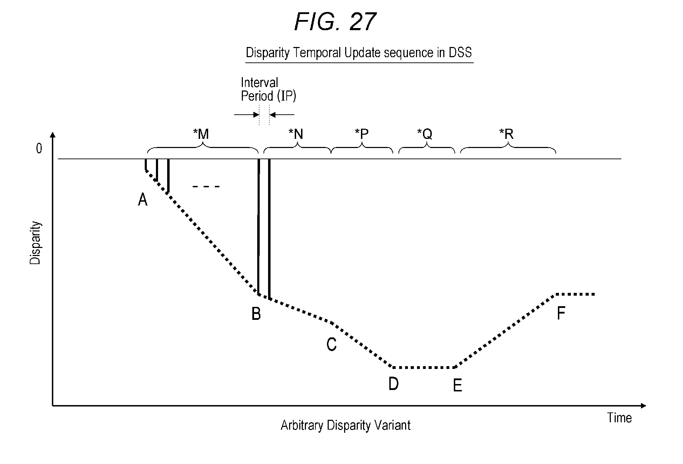

Figs. 26 and 27 illustrate an example of updating the disparity information using an interval period. Fig. 26 illustrates an example in which the interval period is fixed, and the period is equal to an update period. In other words, each of update periods A-B, B-C, and C-D is composed of a one interval period.

Fig. 27 illustrates an example of updating the disparity information when a short period (which may be a frame period, for example) is used as the interval period, which is general). In this case, M, N, P, Q, and R in the update periods are the number of interval periods. Further, in Figs. 26 and 27, "A" represents a starting frame (a starting point of time) of a subtitle display period, and "B" to "F" represent subsequent update frames (update points of time).

When the disparity information sequentially updated within the subtitle display period is transmitted to the reception side (the set-top box 200 or the like), the reception side can generate and use disparity information of an arbitrary frame interval, for example, a one frame interval by executing the interpolating process on the disparity information of an update period interval.

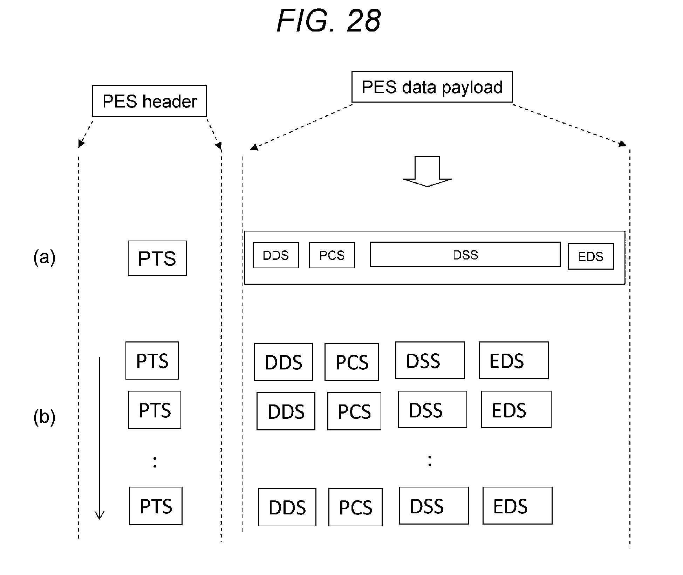

Fig. 28 illustrates a configuration example of the 3D extension stream. This configuration example illustrates a case in which the segments of the DDS, the DSS, and the EDS are included in the PES data payload, but it applies similarly even when the segments of the DDS, the PCS, the DSS, and the EDS are included in the PES data payload.

Fig. 28(a) illustrates an example in which only one DSS segment is included. The PES header includes the time information (PTS). Further, the segments of the DDS, the DSS, and the EDS are included as PES payload data. The segments are collectively transmitted before the subtitle display period starts. A plurality of pieces of disparity information to be sequentially updated in the subtitle display period are included in one DSS segment.

Alternatively, the plurality of pieces of disparity information can be transmitted to the reception side (the set-top box 200 or the like) without including, the plurality of pieces of disparity information to be sequentially updated in the subtitle display period in one DSS. In this case, the DSS segment is included in the 3D extension stream at each timing at which update is performed. Fig. 28(b) illustrates a configuration example of the 3D extension stream in this case.

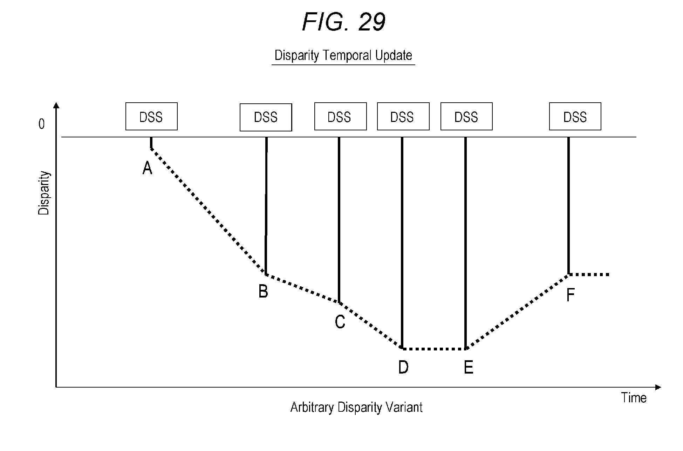

Fig. 29 illustrates an update example of the disparity information when the DSS segment is sequentially transmitted as illustrated in Fig. 28(b). In Fig. 29, "A" represents the starting frame (the starting point of time) of the subtitle display period, and "B" to "F" represent sequent update frames (update points of time).

Even when the DSS segment is sequentially transmitted and the disparity information subsequently updated in the subtitle display period is transmitted to the reception side (the set-top box 200 or the like), the same process as described above can be performed at the reception side. In other words, even in this case, the reception side can generate and use disparity information of an arbitrary frame interval, for example, a one frame intervals by executing the interpolating process on the disparity information of an update period interval.

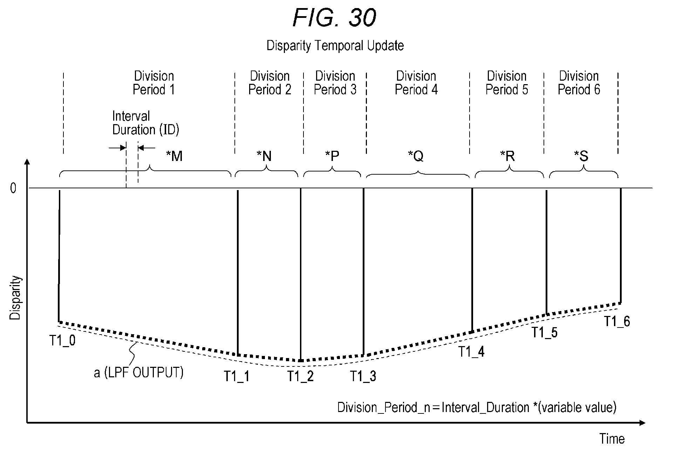

Fig. 30 illustrates an update example of the disparity information (disparity), similarly to Fig. 27. The update frame interval is represented by a multiple of the interval period (ID: interval duration) serving as the unit time. For example, an update frame interval "Division Period 1" is represented by "ID*M," an update frame interval "Division Period 2" is represented by "ID*N," and the following update frame intervals apply similarly. In the update example of the disparity information illustrated in Fig. 30, the update frame interval is not fixed, and the update frame interval is set to corresponding to a disparity information curve.

Further, in the update example of the disparity information (disparity), at the reception side, the starting frame (the starting time) T1_0 0 of the subtitle display period is given by the PTS (presentation time stamp) included in the header of the PES stream including the disparity information. Further, at the reception side, each update time of the disparity information is obtained based on information of the interval period (information of the unit time) which is information each update frame interval and information the number of interval periods.

In this case, each update time is sequentially obtained from the starting frame (the starting time) T1_0 of the subtitle display period by the following Formula (1). In this Formula (1), "interval_count" represents the number of interval periods, and is a value corresponding to M, N, P, Q, R, and S in Fig. 30. In this Formula (1), "interval time" is a value corresponding to the interval period (ID) in Fig. 30.

$$Tm\_n = Tm\_(n-1) + (interval\_time * interval\_count) \text{ --- (1)}$$

For example, in the update example illustrated in Fig. 30, each update time is obtained by Formula (1) as follows. In other words, an update time T1_1 is obtained using the starting time (T1_0), the interval period (ID), and a number (M): "T1_1 = T1_0 0 + (ID * M)." Further, an update time T1_2 is obtained using the update time (T1_1), the interval period (ID), and a number (N): "T1_2 = T1_1 + (ID * N)."
The subsequent update times are obtained in the similar manner.

In the update example illustrated in Fig. 30, the reception side executes the interpolating process on the disparity information to be sequentially updated within the subtitle display period, and generates and uses disparity information of an arbitrary frame interval, for example, a one frame interval within the subtitle display period. For example, the interpolating process including a low pass filter (LPF) filter other than a linear interpolating process is performed in a time direction (a frame direction) as the interpolating process, and thus a change of the disparity information of a predetermined frame interval which has been subjected to the interpolating process in the time direction (the frame direction) becomes gentle. In Fig. 30, a dashed line a represents an LPF output example.

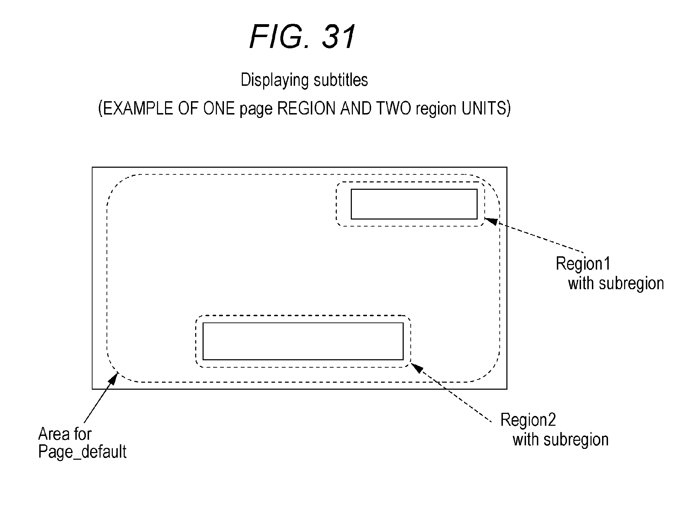

Fig. 31 illustrates a display example of a subtitle serving as a caption. In this display example, two regions (a region 1 and a region 2) serving as a subtitle display region are included in a page region (Area for Page_default). The region includes one or more sub regions. Here, one sub region is included in the region, and thus the region is assumed to be equal to the sub region.

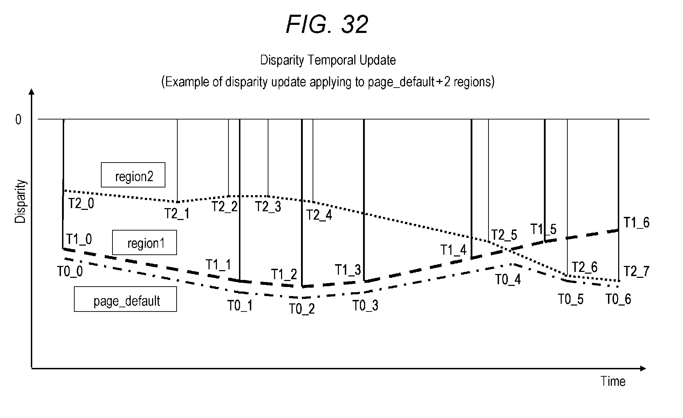

Fig. 32 illustrates an example of a disparity information curve of each region and a page when both disparity information of a region unit and disparity information of a page unit are included in the DSS segment as the disparity information (Disparity) to be sequentially updated in the subtitle display period. Here, disparity information curve of a page is formed such that a minimum value of disparity information curves of two regions is employed.

A starting time T1_0 0 and seven pieces of disparity information, that is, subsequent update times T1_1 to T1_6 are present in connection with a region 1 (region1). A starting time T2_0 and eight pieces of disparity information, that is, subsequent update times T2_1 to T2_7 are present in connection with a region 2 (region2). Further, a starting time T0_0 and seven pieces of disparity information, that is, subsequent update times T0_0 1 to T0_0 6 are present in connection with a page (page_default).

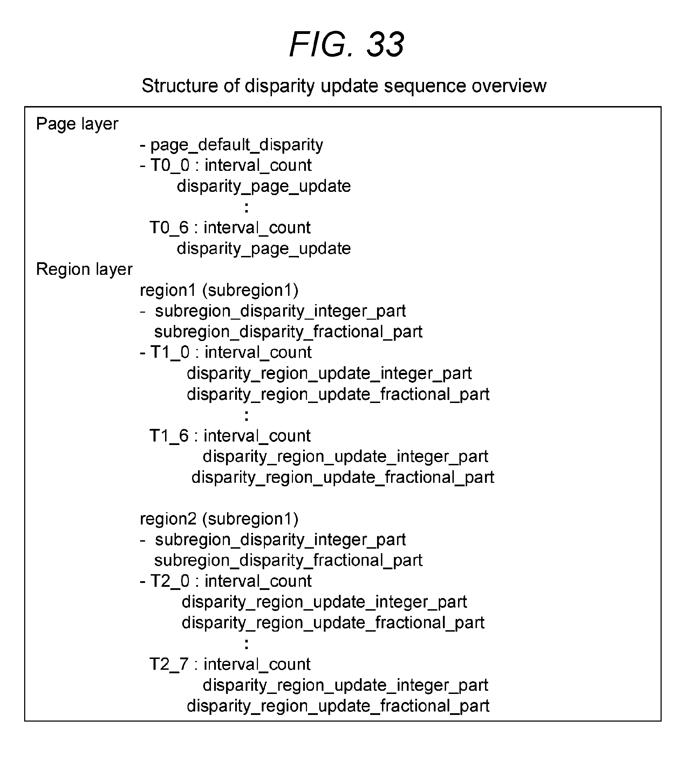

Fig. 33 illustrates a structure in which disparity information of a page and each region illustrated in Fig. 32 is transmitted. First, a page layer will be described. "page_default_disparity" which is a fixed value of disparity information is arranged in the page layer. Further, "interval_count" representing the number of interval periods and "disparity_page_updete" representing disparity information which correspond to the starting time and the subsequent update time are sequentially arranged in connection with the disparity information to be sequentially updated in the subtitle display period. Further, "interval_count" of the starting time is assumed to be zero (0).

Next, a region layer will be described. "subregion_disparity_integer_part" and "subregion_disparity_fractional_part" which are fixed values of disparity information are arranged on a region 1 (sub region1). Here, "subregion_disparity_integer_part" represents an integer part of disparity information, and "subregion_disparity_fractional_part" represents a fractional part of disparity information.

Further, "interval count" representing the number of interval periods, "disparity_region_updete_integer_part" representing disparity information, and "disparity_region_updete_fractional_part", which correspond to the starting time and the subsequent update times, are sequentially arranged in connection with the disparity information to be sequentially updated in the subtitle display period. Here, "disparity_region_updete_integer_part" represents an integer part of disparity information, and "disparity_region_updete_fractional_part" represents a fractional part of disparity information. Further, "interval_count" of the starting time is assumed to be zero (0).

"subregion_disparity_integer_part" and "subregion_disparity_fractional_part" which are fixed values of display information are arranged on a region (a sub region 2), similarly to the region 1. Further, "interval_count" representing the number of interval periods, "disparity_region_updete_integer_part" representing disparity information, and "disparity_region_updete_fractional_part", which correspond to the starting time and the subsequent update times, are sequentially arranged in connection with the disparity information to be sequentially updated in the subtitle display period.

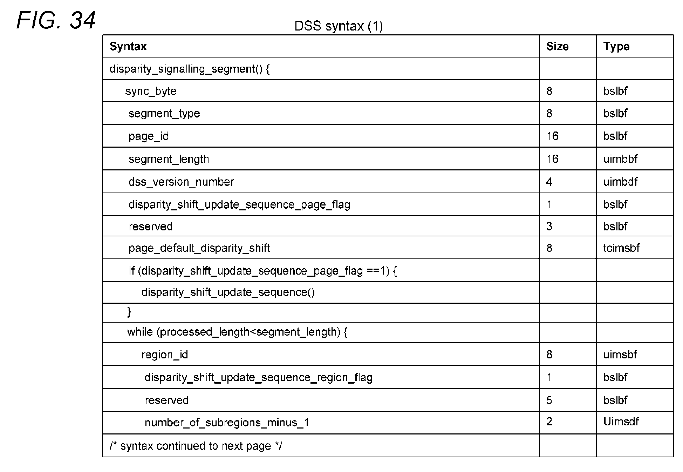

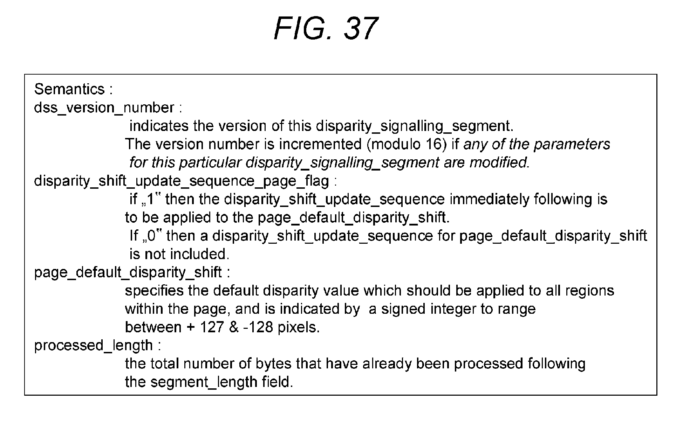

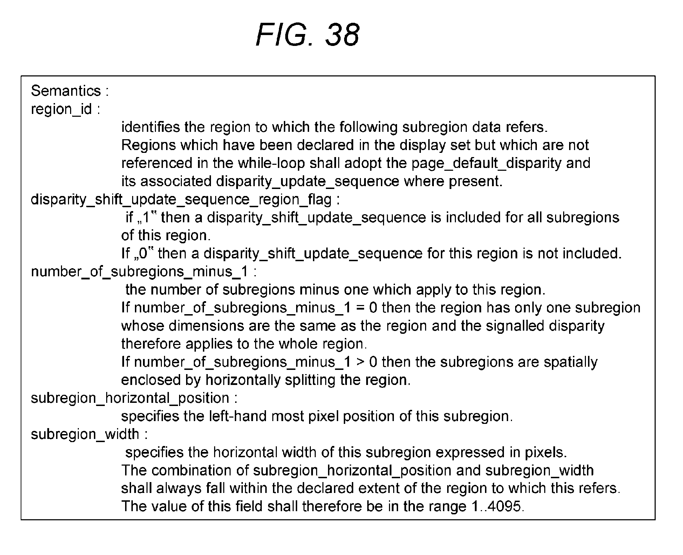

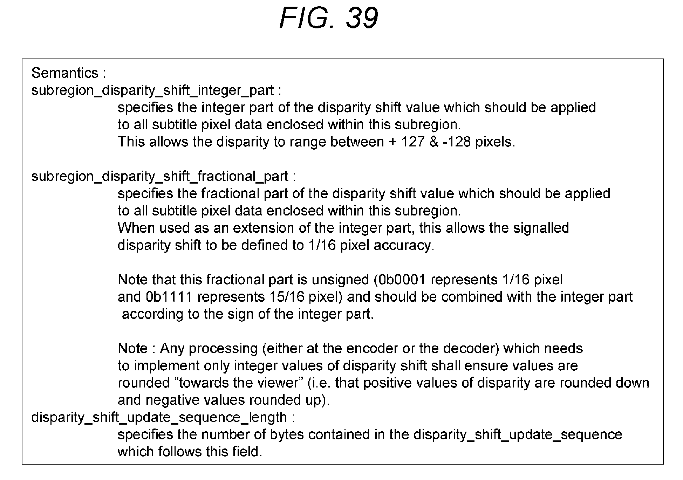

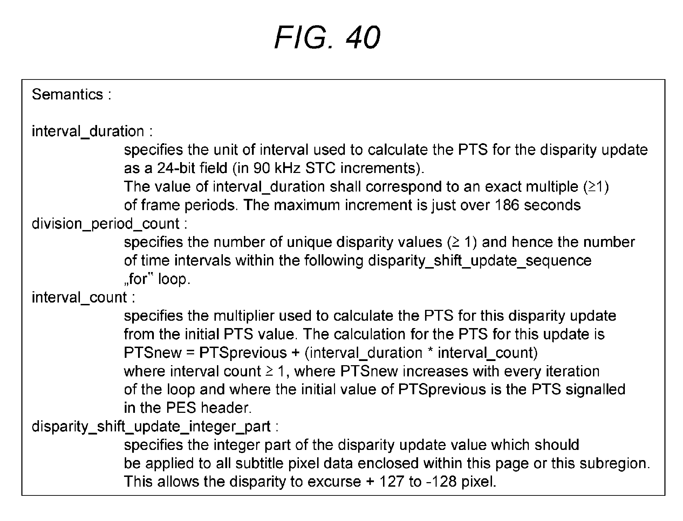

Figs. 34 to 36 illustrate an example of syntax of the DSS (disparity_signaling_segment). Figs. 37 to 40 illustrate main data specifying content (semantics) of the DSS. This syntax includes information of "sync_byte," "segment_type," "page_id," "segment_length," and "dss_version_number." "segment_type" is 8-bit data representing a segment type, and is used as a value representing the DSS. "segment_length" is 8-bit data representing a subsequent byte number.

A 1-bit flag of "disparity_shift_update_sequence_page_flag" represents whether or not there is disparity information to be sequentially updated in the subtitle display period as disparity information of a page unit. "1" represents that there is disparity information to be sequentially updated in the subtitle display period as disparity information of a page unit, whereas "0" represents that there is no disparity information to be sequentially updated in the subtitle display period as disparity information of a page unit. An 8-bit field of "page_default_disparity_shift" represents fixed disparity information of a page unit, that is, disparity information commonly used within the subtitle display period. When the flag of "disparity_page_update_sequence_flag" is "1," "disparity_shift_update_sequence ()" is read out.

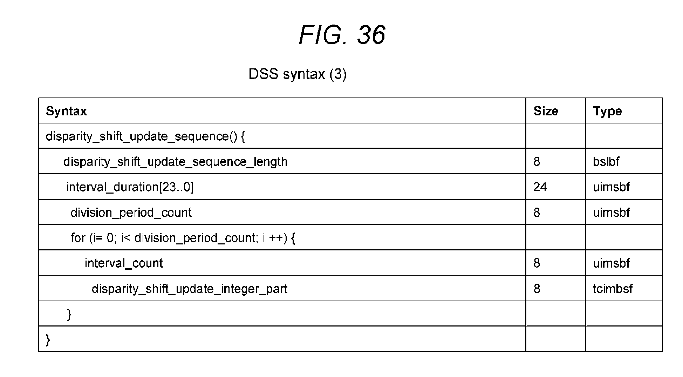

Fig. 36 illustrates an example of syntax of "disparity_shift_update_sequence ()." "disparity_page_update_sequence_length" is 8-bit data representing a subsequent byte number. A 24-bit field of "interval_duration [23..0]" designates an interval period (interval duration) (see Fig. 30) serving as a unit time in units of 90 KHz. In other words, in "interval duration [23..0]," a value, which is obtained by measuring the interval period (interval duration) at a clock of 90KHz, is represented by a 24-bit length.

The reason why the PTS included in the header portion of the PES has the 33-bit length but the interval period has the 24-bit length is as follows. In other words, the 33-bit length can represent a time exceeding 24 hours but is a length unnecessary as the interval period (interval duration) within the subtitle display period. Further, using 24 bits, the data size can be reduced, and compact transmission can be performed. Further, 24 bits are 8x3 bits, and byte alignment is easily performed.

An 8-bit field of "division_period_count" represent the number of periods (division periods) affected by disparity information. For example, in the case of the update example illustrated in Fig. 30, the number is "7," corresponding to the starting time T1_0 0 and the subsequent update times T1_0 to T1_6. The following for loop is repeated as many times as the number represented by an 8-bit field of "division_period_count."

An 8-bit field of "interval_count" represents the number of interval periods. For example, in the case of the update example illustrated in Fig. 30, "interval_count" corresponds to M, N, P, Q, R, and S. An 8-bit field of "disparity_shift_update_integer_part" represents disparity information. "interval count" is assumed to be zero (0), correspond to disparity information of the starting time (an initial value of disparity information). In other words, when "interval_count" is "0," "disparity_page_update" represents the disparity information of the starting time (the initial value of the disparity information).

The while loop of Fig. 34 is repeated when a data length (processed_length) processed until then does not reach a segment data length (segment_length). In the while loop, disparity information of a region unit or a sub region unit in a region is arranged. Here, one or more sub regions are included in the region, and the sub region may be the same as the region.

In the while loop, information of "region_id" is included. A 1-bit flag of "disparity_shift_update_sequence_region_flag" is flag information representing whether or not there is "disparity_shift_update_sequence ()" for all sub regions in the region. A 2-bit field of "number_of_subregions_minus_1" represents a value obtained by subtracting one (1) from the number of sub regions in the region. In the case of "number of subregions minus 1 = 0," a region includes one sub region having the same size as a region.

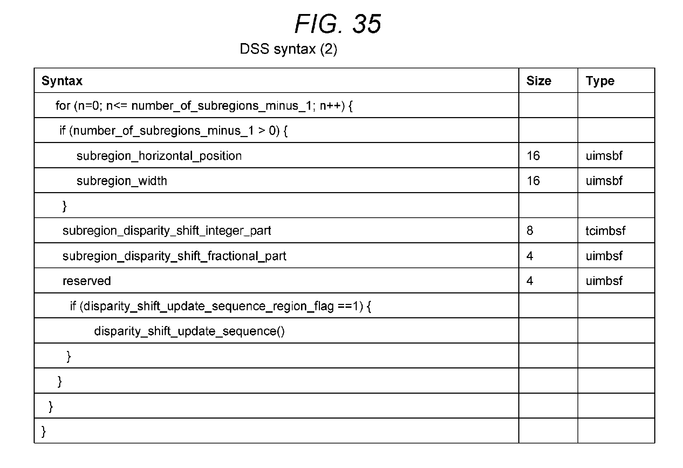

In the case of "number_of_subregions_minus_1>0," a region includes a plurality of sub regions divided in the horizontal direction. In the for loop of Fig. 35, pieces of information of "subregion_horizontal_position" and "subregion_width" which correspond to the number of sub regions are included. A 16 bit field of "subregion_horizontal_position" represents a pixel position of the left end of the sub region. "subregion_width" represents the width of the sub region in the horizontal direction through the number of pixels.

An 8-bit field of "subregion_disparity_shift_integer_part" represents an integer part of fixed disparity information of a region unit (a sub region unit), that is, an integer part of disparity information commonly used in the subtitle display period. A 4-bit field of "subregion_disparity_shift_fractional_part" represents a fractional part of fixed disparity information of a region unit (a sub region unit), that is, a fractional part of disparity information commonly used in the subtitle display period. When the flag of "disparity_shift_update_sequence_region_flag" is "1," "disparity_shift_update_sequence ()" (see Fig. 36) is read out.

[Broadcast Reception Concept]

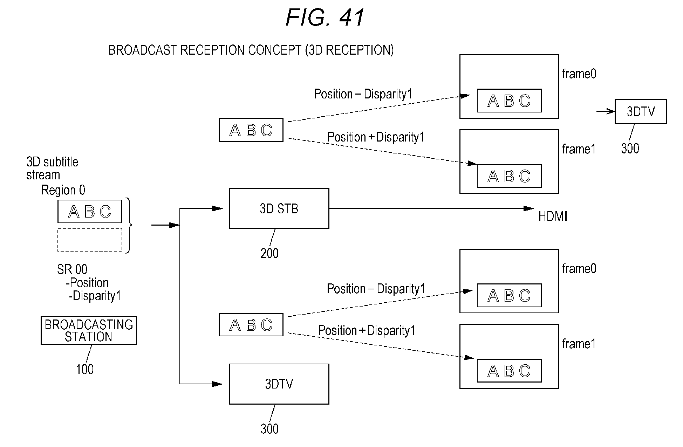

Fig. 41 illustrates a broadcast reception concept when the set-top box 200 and the television receiver 300 are devices with the 3D function. In this case, the broadcasting station 100 defines a sub region "SR 00" in a region "Region 0," and sets disparity information "Disparity 1." Here, the region "Region 0" and the sub region "SR 00" are assumed to be the same region. Subtitle data and display control information (region information "Position" of the sub region and the disparity information "Disparity 1") are transmitted from the broadcasting station 100 together with stereoscopic image data.

First, an example in which reception is performed by the set-top box 200 which is a device with the 3D function will be described. In this case, the set-top box 200 reads data of each segment configuring the subtitle data from the 2D stream, and reads and uses data of the DSS segment including the display control information such as the disparity information from the 3D extension stream.

In this case, the set-top box 200 extracts the 2D stream and the 3D extension stream, which are associated with each other, from the transport stream TS, and decodes the 2D stream and the 3D extension stream. At this time, the set-top box 200 efficiently and appropriately extract two associated streams based on a common composition page ID described in the subtitle descriptor (see Fig. 15) corresponding to each stream.

The set-top box 200 generates display data of a region for displaying a subtitle based on the subtitle data. Further, the set-top box 200 causes the display data of the region to overlap a left-eye image frame (frame0) portion and a right-eye image data frame (frame1) portion which configure the stereoscopic image data, and obtains output stereoscopic image data.

At this time, the set-top box 200 shift-adjusts the position of display data overlapping each portion based on the disparity information. Further, the set-top box 200 appropriately changes the overlapping position, the size, and the like according to a transmission format (a side by side format, a top-and-bottom format, a frame sequential format, and a format in which each view has a full screen size) of the stereoscopic image data.

The set-top box 200 transmits the output stereoscopic image data obtained as described above to the television receiver 300 with the 3D function, for example, through the HDMI digital interface. The television receiver 300 executes 3D signal processing on the stereoscopic image data transmitted from the set-top box 200, and generates data of a left-eye image and a right-eye image which the subtitle overlaps. Further, the television receiver 300 causes a binocular disparity image (the left-eye image and the right-eye image) through which the user recognizes the stereoscopic image to be displayed on a display panel such as a liquid crystal display (LCD).

Next, an example in which reception is performed by the television receiver 300 which is a device with a 3D function will be described. In this case, the television receiver 300 reads data of each segment configuring the subtitle data from the 2D stream, and reads and uses data of the DSS segment including the display control information such as the disparity information from the 3D extension stream. The television receiver 300 efficiently and appropriately extract the 2D stream and the 3D extension stream, which are associated with each other, from the transport stream TS based on a common composition page ID, similarly to the set-top box 200.

The television receiver 300 generates display data of a region for displaying a subtitle based on the subtitle data. Further, the television receiver 300 causes the display data of the region to overlap the left-eye image data and the right-eye image data which are obtained by executing processing corresponding to the transmission format on the stereoscopic image data, and generates data of the left-eye image and the right-eye image which the subtitle overlap. Further, the television receiver 300 causes a binocular disparity image (the left-eye image and the right-eye image) through which the user recognizes the stereoscopic image to be displayed on a display panel such as an LCD.

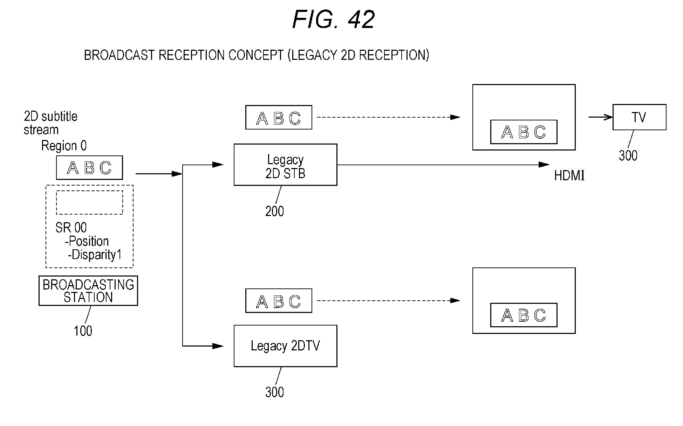

Fig. 42 illustrates a broadcast reception concept when the set-top box 200 and the television receiver 300 are when the set-top box 200 and the television receiver 300 are devices with a legacy 2D function. In this case, similarly to the example of Fig. 41, subtitle data and display control information (region information "Position" of the sub region and the disparity information "Disparity 1") are transmitted from the broadcasting station 100 together with stereoscopic image data.

First, an example in which reception is performed by the set-top box 200 which is a device with the legacy 2D function will be described. In this case, the set-top box 200 reads and uses data of each segment configuring the subtitle data from the 2D stream. In this case, the set-top box 200 extracts the 2D stream from the transport stream TS based on the subtitle type information, the linguistic information, and the like which are described in subtitle descriptor (see Fig. 15) corresponding to each segment, and decodes the 2D stream. Thus, the set-top box 200 does not read the DSS segment including the display control information such as the disparity information, and thus can avoid reading interfering with the reception process.

As described above, the subtitle descriptors which correspond to the 2D stream and the 3D extension stream, respectively, are included in the transport stream TS (see Fig. 15). Further, the subtitle type information "subtitling_type" of the subtitle descriptor corresponding to the 2D stream is set to "2D." Further, the subtitle type information "subtitling_ type" of the subtitle descriptor corresponding to the 3D stream is set to "3D."

In addition, as described above, the component descriptor and the subtitle descriptor corresponding to each of the 2D stream and the 3D extension stream are included in the transport stream TS (see Fig. 15). Further, the linguistic information (the ISO language code) of the descriptor corresponding to the 2D stream is set to represent a language, and the linguistic information (the ISO language code) of the descriptor corresponding to the 3D extension stream is set to represent a non-language.

Since the set-top box 200 is the device with the 2D function, the 2D stream corresponding to the subtitle type"2D (HD,SD)" is decided as a stream to be extracted based on the subtitle type information. Further, the set-top box 200 decides a 2D stream of a language which is selected by the user or automatically selected by the device as a stream to be extracted.

The set-top box 200 generates display data of a region for displaying a subtitle based on the subtitle data. Further, the set-top box 200 causes the display data of the region to overlap the 2D image data obtained by executing processing corresponding to the transmission format on the stereoscopic image data, and obtains output 2D image data.

The set-top box 200 outputs the output 2D image data obtained as described above to the television receiver 300, for example, through the HDMI digital interface. The television receiver 300 displays 2D image based on the 2D image data transmitted from the set-top box 200.

Next, an example in which reception is performed by the television receiver 300 which is the device with the 2D function will be described. In this case, the television receiver 300 reads and uses data of each segment configuring the subtitle data from the 2D stream. In this case, the television receiver 300 extracts a 2D stream of a language selected by the user from the transport stream TS based on the subtitle type information and the linguistic information, and decodes the 2D stream, similarly to the set-top box 200. In other words, the television receiver 300 does not read the DSS segment including the display control information such as the disparity information, and thus can avoid reading interfering with the reception process.

The television receiver 300 generates display data of a region for displaying a subtitle based on the subtitle data. The television receiver 300 causes the display data of the region to overlap the 2D image data obtained by executing processing corresponding to the transmission format on the stereoscopic image data, and obtains output 2D image data. Then, the television receiver 300 displays a 2D image based on the 2D image data.

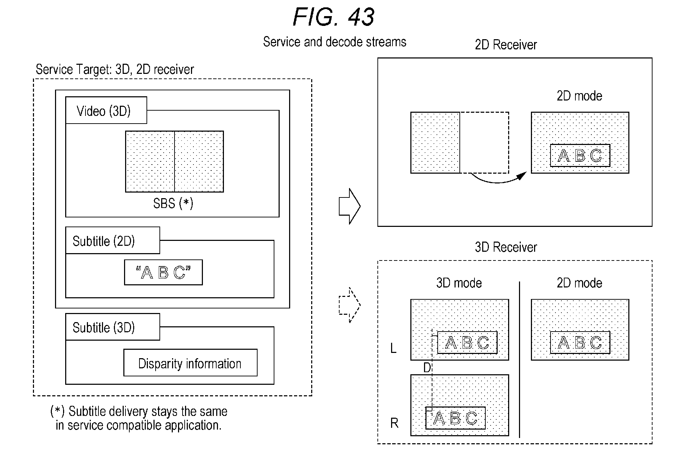

Fig. 43 illustrates a broadcast reception concept when the above-described receivers (the set-top box 200 and the television receiver 300) are the device with the legacy 2D function (2D receiver) and the device with the 3D function (3D receiver). In Fig. 43, the transmission format of the stereoscopic image data (3D image data) is assumed as the side by side format.

Further, in the device with the 3D function (3D Receiver), either a 3D mode or a 2D mode can be selected. When the user selects the 3D mode, the concept described with reference to Fig. 41 applies. When the user selects the 2D mode, the device with the 2D function (2D receiver) described with reference to Fig. 42 similarly applies.

In the transmission data generating unit 110 illustrated in Fig. 2, the common composition page ID is described in the subtitle descriptor included corresponding to each of the 2D stream and the 3D extension stream, and association with the two streams is clarified. Thus, the reception device with the 3D function at the reception side can properly extract and decode the 2D stream and the 3D extension stream, which are associated with each other, based on the association information and obtain the disparity information together with the subtitle data.

Further, in the transmission data generating unit 110 illustrated in Fig. 2, the subtitle type information and the linguistic information are set to the component descriptor and the subtitle descriptor which are included corresponding to each of the 2D stream and the 3D extension stream such that the respective streams are identified. Thus, the reception device with the 2D function can easily extract and decode the 2D image based on the subtitle type information and the linguistic information with a high degree of accuracy. Thus, the reception device with the 2D function can strongly prevent the reading of the DSS segment with the disparity information and avoid the processing interfering with the reception process.

Further, in the transmission data generating unit 110 illustrated in Fig. 2, the page IDs (page_id) of the segments included in the 2D stream and the 3D extension stream included in the transport stream TS are the same. Thus, the reception device with the 3D function at the reception side can easily connect the segment of the 2D stream with the segment of the 3D extension stream based on the page ID.

Further, in the transmission data generating unit 110 illustrated in Fig. 2, since the DSS segment including the disparity information sequentially updated in the subtitle display period can be transmitted, the display positions of the left-eye subtitle and the right-eye subtitle can be dynamically controlled. As a result, the reception side can dynamically change disparity occurring between the left-eye subtitle and the right-eye subtitle in conjunction with a change in image content.

Further, in the transmission data generating unit 110 illustrated in Fig. 2, the disparity information of the frame of each update frame interval included in the DSS segment obtained by the subtitle encoder 118 is not an offset value from previous disparity information but disparity information itself. Thus, the reception side can be recovered from an error within a predetermined delay time even when an error occurs in the interpolation process.

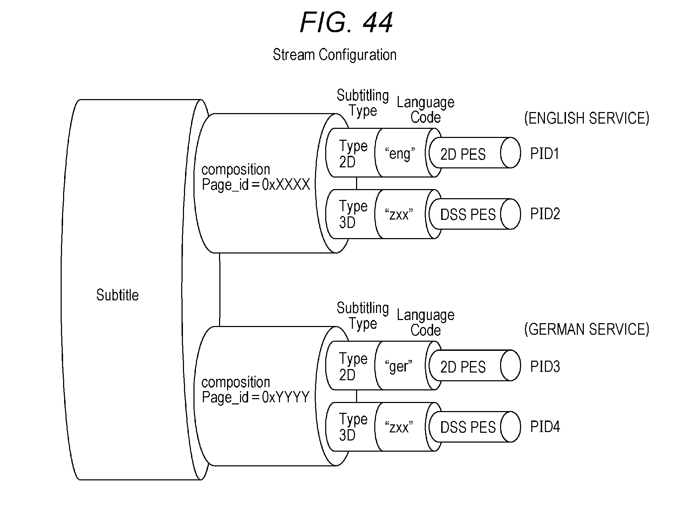

The example in which a one language service of English "eng" is provided has been described above (see Fig. 23). Of course, however, the present technology can be similarly applied to a multilingual service. Fig. 44 illustrates a stream configuration example of a subtitle data stream (a 2D stream and a 3D extension stream) when a bilingual service is provided. For example, Fig. 44 illustrates a bilingual service example of English "eng" and German "ger."

Regarding the English service, the 3D extension stream is extracted in by "composition_page_id = 0xXXXX" which is in common with the 2D stream, designated by "subtitling_type = 3D" and "ISO_639_language_code = zxx," and the 2D stream is designated by "subtitling_type = 2D" and "ISO_639_language_code = eng." Meanwhile, regarding the German service, the 3D extension stream is extracted in by "composition_page_id = 0xYYYY" which is in common with the 2D stream and designated by "subtitling_type = 3D" and "ISO_639_language_code = zxx," and the 2D stream is designated by "subtitling_type = 2D" and "ISO_639_language_code = ger."

As described above, in the case of the multilingual service, the composition page IDs (composition_page_id) corresponding to the respective language services are set to be different from each other. Thus, even in the multilingual service, the 3D reception device at the reception side can efficiently and appropriately extract and decode the 2D stream and the 3D extension stream which are associated with each other for each language service.

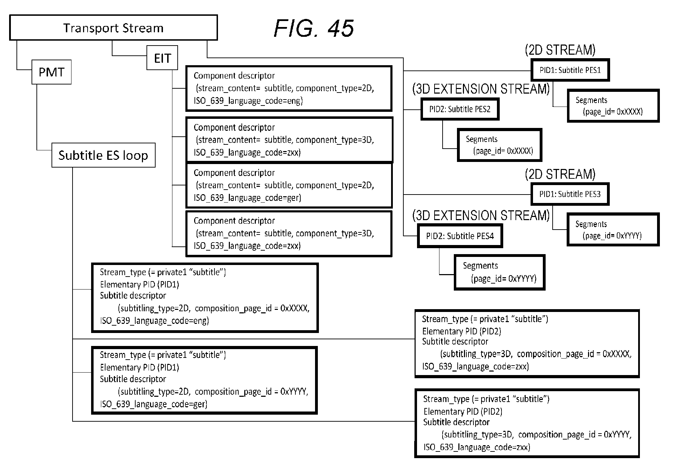

Fig. 45 illustrates a configuration example of the transport stream TS. In Fig. 45, for the sake of simplification of the drawing, video- and audio-related portions not illustrated. The transport stream TS includes a PES packet obtained by packetizing each elementary stream.

In this configuration example, a PES packet "Subtitle PES1" of the 2D stream and a PES packet "Subtitle PES2" of the 3D extension stream are included in connection with the English service. Further, a PES packet "Subtitle PES3" of the 2D stream and a PES packet "Subtitle PES4" of the 3D extension stream are included in connection with the German service. The 2D stream (PES stream) includes the segments of the DDS, the PCS, the RCS, the CDS, the ODS, and the EDS (see Fig. 11(a)). The 3D extension stream (PES stream) includes the segments of the DDS, the DSS, and the EDS or the segments of the DDS, the PCS, the DSS, and the EDS (see Figs. 11(b) and 11(c)). In this case, "Elementary_PID" of the respective streams are set to be different from each other, and the streams are PES streams different from each other.

A subtitle elementary loop (a subtitle ES loop) having information associated with a subtitle elementary stream is present in the PMT. In the subtitle elementary loop, not only information such as a packet identifier (PID) but also a descriptor describing information associated with a corresponding elementary stream are arranged for each stream.

In order to specify association between the 2D stream and the 3D extension stream in connection with the English service, a composition page ID of a subtitle descriptor corresponding to each stream is set as follows. In other words, "composition_page_id" of the 2D stream and "composition_page_id" of the 3D extension stream are set to share the same value ("0xXXXX" in Fig. 44). Further, both PES streams are encoded such that "page_id" of each associated segments has the same value (0xXXXX) so that each segment included in the 3D extension stream is associated with each segment of the 2D stream.

Similarly, in order to specify association between the 2D stream and the 3D extension stream in connection with the German service, a composition page ID of a subtitle descriptor corresponding to each stream is set. In other words, "composition_page_id" of the 2D stream and "composition_page_id" of the 3D extension stream are set to share the same value ("0xYYYY" in Fig. 44). Further, both PES streams are encoded such that "page_id" of each associated segments has the same value (0xYYYY) so that each segment included in the 3D extension stream is associated with each segment of the 2D stream.

When the transport stream TS has the subtitle data stream related to the multiple language as described above, the reception device extracts and decodes the subtitle data stream related to the language service, which is selected by the user or automatically selected. At this time, the reception device with the 3D function efficiently and appropriately extract the 2D stream and the 3D extension stream associated with the selected language service based on the common composition page ID. Meanwhile, the reception device with the legacy 2D function extracts and decodes the 2D stream of the selected language service based on the subtitling type information and the linguistic information.

Further, the stream configuration example illustrated in Fig. 44 illustrates that the 3D extension stream is used as a composition page (composition_page). In this case, as described above, the 2D stream and 3D stream are present on each language service. The 3D extension stream may be used as an ancillary page. In this case, a steam can be configured such that a one 3D extension stream which is common to the respective language services is presented as the 3D extension stream. Thus, a band of the PES stream can be effectively used.

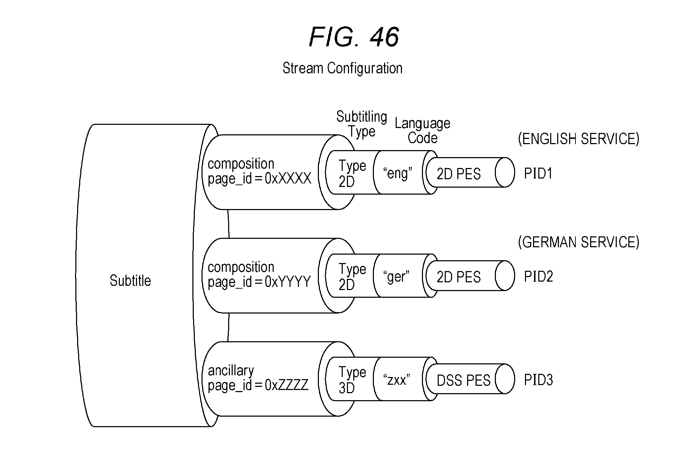

Fig. 46 illustrates a stream configuration example of a subtitle data stream (a 2D stream and a 3D extension stream) when the 3D extension stream is used as the ancillary page. This example is a bilingual service example of English "eng" and German "ger." In this configuration example, the 3D extension stream is not extracted in by "composition_page_id" during each language service. In this configuration example, the 3D extension stream is referred to commonly from the respective language services by an ancillary page ID "ancillary_page_id" which is common to the respective language services.

Regarding the English service, the 2D stream is extracted in by "composition_page_id = 0xXXXX," and designated by "subtitling_type = 2D" and "ISO_639_language_code = eng." Further, the 3D extension stream is extracted in by "ancillary_page_id = 0xZZZZ," and designated by "subtitling_type = 3D" and "ISO_639_language_code = zxx." Similarly, regarding the German service, the 2D stream is extracted in by "composition_page_id = 0xYYYY," and designated by "subtitling_type = 2D" and "ISO_639_language_code = ger." Further, the 3D extension stream is extracted in by "ancillary page id = 0xZZZZ," and designated by "subtitling_type = 3D" and "ISO_639_language_code = zxx."

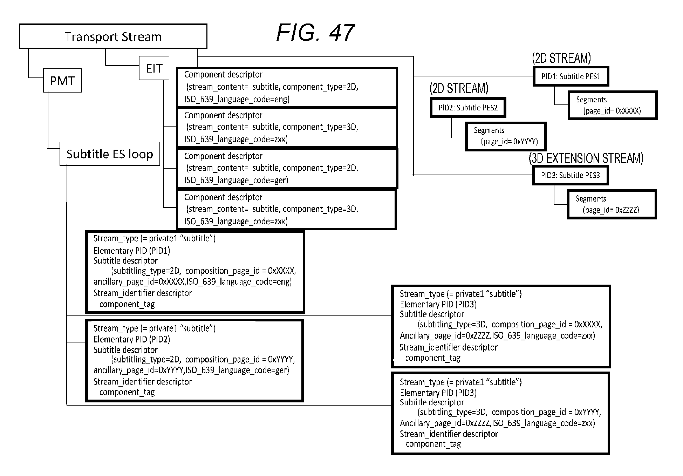

Fig. 47 illustrates a configuration example of the transport stream TS. In Fig. 47, for the sake of simplification of the drawing, video- and audio-related portions are not illustrated. The transport stream TS includes a PES packet obtained by packetizing each elementary stream.

In this configuration example, a PES packet "Subtitle PES1" of the 2D stream is included in connection with the English service. Further, a PES packet "Subtitle PES2" of the 2D stream is included in connection with the German service. In addition, a PES packet "Subtitle PES3" of the 3D extension stream is included in connection with the English service and the German service. The 2D stream (PES stream) includes the segments of the DDS, the PCS, the RCS, the CDS, the ODS, and the EDS (see Fig. 11(a)). The 3D extension stream (PES stream) includes the segments of the DDS, the DSS, and the EDS (see Fig. 11(b)). In this case, "Elementary_PID" of the respective streams are set to be different from each other, and the streams are PES streams different from each other.

A subtitle elementary loop (a subtitle ES loop) having information associated with a subtitle elementary stream is present in the PMT. In the subtitle elementary loop, not only information such as a packet identifier (PID) but also a descriptor describing information associated with a corresponding elementary stream are arranged for each stream.

In order to specify association between the 2D stream related to the English service and the 3D extension stream which is common to the respective language services, a composition page ID of a subtitle descriptor corresponding to each stream is set as follows. In other words, "composition_page_id" of the 2D stream and "composition_page_id" of the 3D extension stream are set to share the same value ("0xXXXX" in Fig. 46). At this time, in the subtitle descriptor corresponding to the 3D extension stream, "ancillary_page_id" is set to a value ("0xZZZZ" in Fig. 46) different from "composition_page_id," and the 3D extension stream is used as the ancillary page.

Similarly, in order to specify association between the 2D stream related to the German service and the 3D extension stream which is common to the respective language services, a composition page ID of a subtitle descriptor corresponding to each stream is set. In other words, "composition_page_id" of the 2D stream and "composition_page_id" of the 3D extension stream are set to share the same value ("0xYYYY" in Fig. 46). At this time, in the subtitle descriptor corresponding to the 3D extension stream, "ancillary_page_id" is set to a value ("0xZZZZ" in Fig. 46) different from "composition_page_id," and the 3D extension stream is used as the ancillary page.

[Description of Set-Top Box]

Referring back to Fig. 1, the set-top box 200 receives the transport stream TS transmitted from the broadcasting station 100 through the broadcast wave. The transport stream TS includes the stereoscopic image data including the left-eye image data and the right-eye image data, and the audio data. The transport stream TS further includes the subtitle data (including the display control information) for the stereoscopic image for displaying the subtitle.

In other words, the transport stream TS includes the video data stream, the audio data stream, the first and second private data streams (subtitle data stream) as the PES stream. As described above, the first and second private data streams are the 2D stream and the 3D extension stream, respectively, (see Fig. 11).

The set-top box 200 includes a bit stream processing unit 201. When the set-top box 200 is the device with the 3D function (3D STB), the bit stream processing unit 201 acquires stereoscopic image data, audio data, and subtitle data (including the display control information) from the transport stream TS. Further, the bit stream processing unit 201 acquires data of each segment configuring the subtitle data from the 2D stream, and acquires data of the DSS segment including the display control information such as the disparity information from the 3D extension stream.

Then, the bit stream processing unit 201 generates output stereoscopic image data in which a subtitle overlaps each of a left-eye image frame (frame0) portion and a right-eye image data frame (frame1) portion using the stereoscopic image data and the subtitle data (including the display control information) (see Fig. 41). In this case, disparity can be brought to occur between the subtitle (the left-eye subtitle) overlapping the left-eye image and the subtitle (the right-eye subtitle) overlapping the right-eye image.

For example, as described above, the disparity information is included in the display control information added to the subtitle data for the stereoscopic image transmitted from the broadcasting station 100, and disparity can be brought to occur between the left-eye subtitle and the right-eye subtitle based on the disparity information. As described above, by brining disparity to occur between the left-eye subtitle and the right-eye subtitle, the user can recognize the subtitle (subtitle) short of an image.

When it is determined that the service is the 3D service, the set-top box 200 extracts and decodes the 2D stream and the 3D extension stream which are associated with each other from the transport stream TS based on the common composition page ID. Further, the set-top box 200 performs a process (overlapping process) of pasting a subtitle in a background image as described above using the subtitle data and the disparity information. Further, when it is difficult to extract the 3D extension stream, the bit stream processing unit 201 performs a process (overlapping process) of pasting a subtitle in a background image according to a logic of the receiver.

For example, the set-top box 200 determines that the service is the 3D service in case of the following (1) to (3).

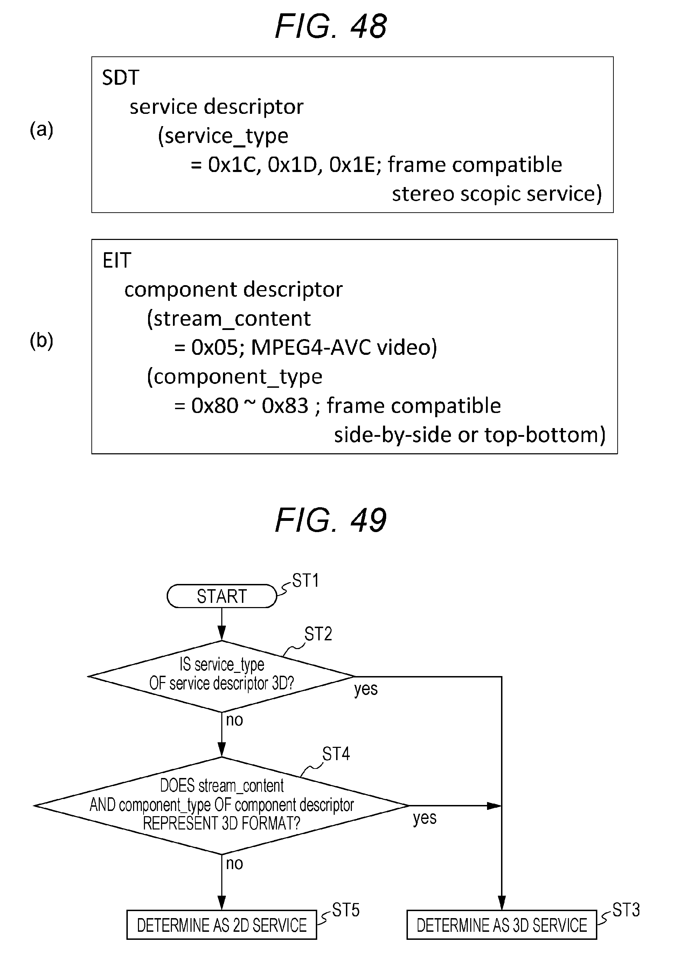

(1) A case where, in an SDT, "service_type" of a service descriptor (service descriptor) is a 3D (0x1C, 0x1D, 0x1E = frame compatible) (see Fig. 48(a)).

(2) A case where, in an SDT or an EIT, "stream_content" of a component descriptor is an MPEG4-AVC video (0x05), and "component_type" is a 3D format of (0x80 to 0x83) (see Fig. 48(b)).

(3) A case where both (1) and (2) are satisfied.

A flowchart of Fig. 49 illustrates an example of a 3D service determining process in the set-top box 200. The set-top box 200 starts a determining process in step ST1, and then proceeds to step ST2. In step ST2, the set-top box 200 determines whether or not "service_type" of the service descriptor is 3D. When it is determined that "service_type" of the service descriptor is 3D, in step ST3, the set-top box 200 determines that the service is the 3D service.

When it is determined in step ST2 that "service_type" is not a 3D, the set-top box 200 causes the proceed to step ST4. In step ST4, the set-top box 200 determines whether or not "stream_content" of the component descriptor is an MPEG4-AVC video (0x05) and "component_type" represents a 3D format. When the 3D format is represented, in step ST3, the set-top box 200 determines that the service is the 3D service. However, when the 3D format is not represented, in step ST5, the set-top box 200 determines that the 2D service is provided.

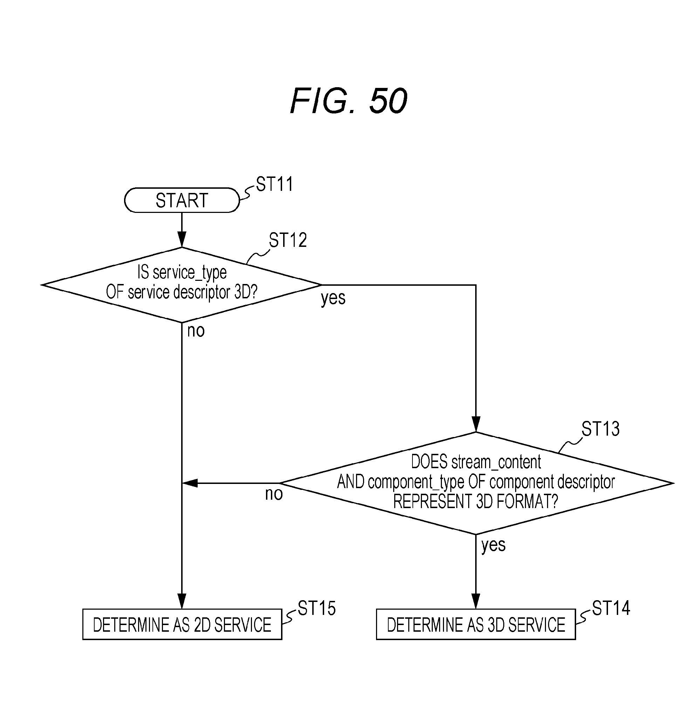

A flowchart of Fig. 50 illustrates another example of a 3D service determining process in the set-top box 200. In step ST11, the set-top box 200 starts a determining process, and then proceeds to step ST12. In step ST12, the set-top box 200 determines whether or not "service_type" of the service descriptor is a 3D. When "service_type" of the service descriptor is a 3D, the set-top box 200 causes the process to proceed to step ST13.

In step ST13, the set-top box 200 determines whether or not "stream_content" of the component descriptor is an MPEG4-AVC video (0x05) and "component_type" represents a 3D format. When the 3D format is represented, in step ST14, the set-top box 200 determines that the service is the 3D service. However, when it is determined in step ST12 that the 3D format is not represented or when it is determined in step ST13 that the 3D format is not represented, in step ST15, the set-top box 200 determines that the 2D service is provided.

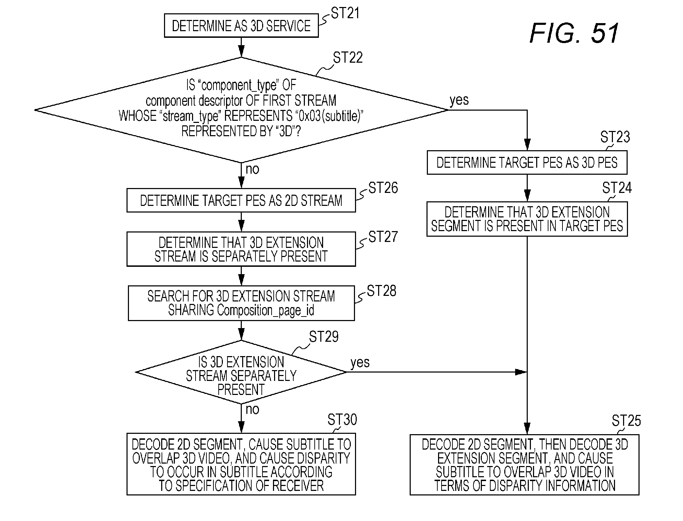

A flowchart of Fig. 51 schematically illustrates the flow of a process of the set-top box 200 when it is determined that the service is the 3D service. In step ST21, the set-top box 200 determines that the service is the 3D service, and then causes the process to proceed to step ST22. In step ST22, the set-top box 200 determines whether or not "component_type" of a component descriptor of a first stream whose "stream_type" represents "0x03 (subtitle)" is 3D.

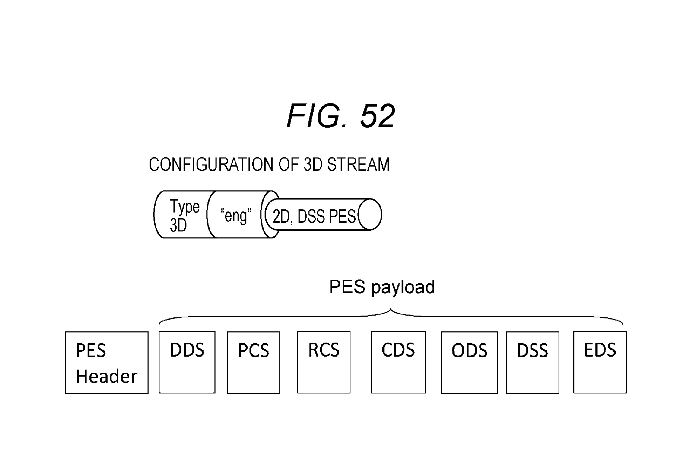

When "component_type" is "3D," in step ST23, the set-top box 200 determines that a target PES stream is a 3D PES stream. Here, the 3D PES stream (3D stream) is a PES stream including the DSS segment having the disparity information and the like as well as the segments configuring data of the overlapping information (subtitle data) such as the DDS, the PCS, the RCS, the CDS, the ODS, and the EDS as illustrated in Fig. 52.

Next, in step ST24, the set-top box 200 determines that the 3D extension segment (the DSS segment) is present in the target PES stream. Thereafter, in step ST25, the set-top box 200 decodes the 2D segment, then decodes the 3D extension segment, and causes the subtitle to overlap the background image (3D video) in terms of the disparity information.

When it is determined in step ST22 that "component_type" is not "3D," in step ST26, the set-top box 200 determines that the target PES stream is the 2D stream. Further, in step ST27, the set-top box 200 determines that the 3D extension stream is separately present. Thereafter, in step ST28, the set-top box 200 searches for another PES stream sharing the composition page ID, that is, the 3D extension stream. Thereafter, the set-top box 200 causes the process to proceed to step ST29.

In step ST29, the set-top box 200 determines whether or not the 3D extension stream is separately present. When it is determined that the 3D extension stream is present, in step ST25, the set-top box 200 decodes the 2D segment, then decodes the 3D extension segment, and causes the subtitle to overlap the background image (3D video) in terms of the disparity information.

However, when it is determined that the 3D extension stream is not present, in step ST30, the set-top box 200 decodes the 2D segment, causes disparity to occur in the subtitle according to the specification of the set-top box 200 (receiver), and causes the subtitle to overlap the background image (3D video). For example, the subtitle is positioned at a monitor position without causing disparity to occur in the subtitle. Further, for example, fixed disparity is brought to occur in the subtitle, and the subtitle is positioned at the position ahead of the monitor position.

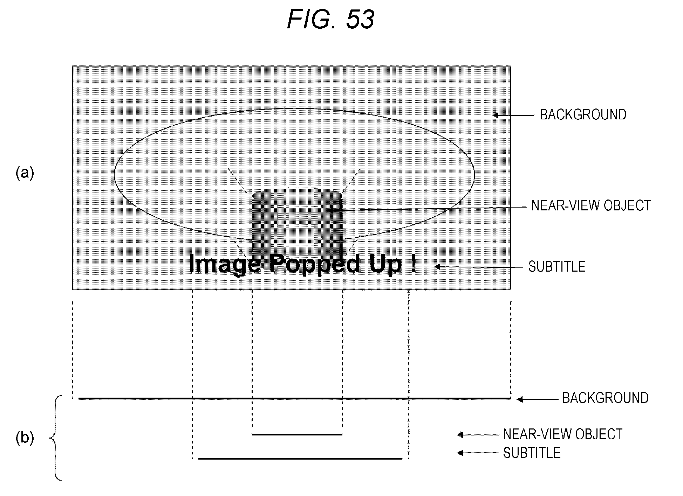

Fig. 53(a) illustrates a display example of a subtitle on an image. In this display example, a subtitle overlaps an image including a background and a near-view object on an image. Fig. 53(b) illustrates a sense of perspective of a background, a near-view object, and a subtitle, and the subtitle is recognized at the very front.

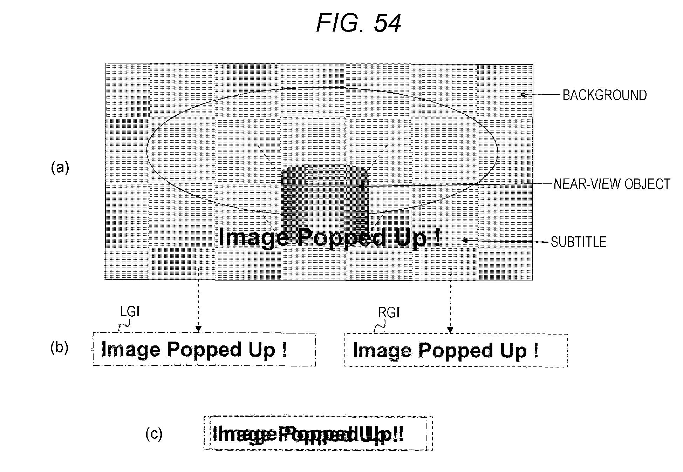

Fig. 54(a) illustrates a display example of a subtitle (caption) on an image which is the same to Fig. 53(a). Fig. 54(b) illustrates a left-eye subtitle LGI to overlap a left-eye image and a right-eye subtitle RGI to overlap a right-eye image. Fig. 54(c) illustrates that disparity is brought to occur between the left-eye subtitle LGI and the right-eye subtitle RGI so that the subtitle can be recognized at the very front.

Further, when the set-top box 200 is the device with the legacy 2D function (the 2D STB), the bit stream processing unit 201 acquires stereoscopic image data, audio data, and subtitle data (bitmap pattern data including no display control information) from the transport stream TS. Then, the bit stream processing unit 201 generates the 2D image data which the subtitle overlaps using the stereoscopic image data and the subtitle data (see Fig. 42).

In this case, the bit stream processing unit 201 acquires data of each segment configuring the subtitle data from the 2D stream. In other words, in this case, since the DSS segment is not read from the 3D extension stream, it is possible to avoid reading interfering with the reception process. In this case, the bit stream processing unit 201 easily extracts and decodes the 2D stream from the transport stream TS based on the subtitle type information and the linguistic information with a high degree of accuracy.

[Configuration Example of Set-Top Box]

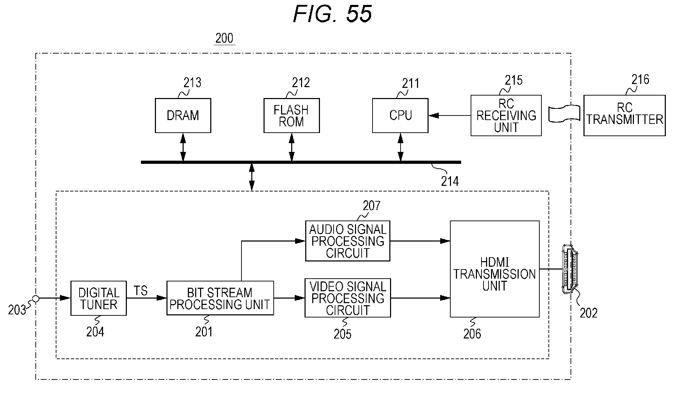

A configuration example of the set-top box 200 will be described. Fig. 55 illustrates a configuration example of the set-top box 200. The set-top box 200 includes the bit stream processing unit 201, the HDMI terminal 202, an antenna terminal 203, a digital tuner 204, a video signal processing circuit 205, an HDMI transmission unit 206, and an audio signal processing circuit 207. The set-top box 200 further includes a CPU 211, a flash ROM 212, a DRAM 213, an internal bus 214, a remote control receiving unit (RC receiving unit) 215, and a remote control transmitter (RC transmitter) 216.

The antenna terminal 203 is a terminal to which a digital broadcast signal received by a receiving antenna (not illustrated) is input. The digital tuner 204 processes the television broadcast signal input to the antenna terminal 203, and then outputs a transport stream TS (bit stream data) corresponding to a channel selected by the user.

The bit stream processing unit 201 outputs the output stereoscopic image data which the subtitle overlaps and the audio data based on the transport stream TS. When the set-top box 200 is the device with the 3D function (the 3D STB), the bit stream processing unit 201 acquires stereoscopic image data, audio data, subtitle data (including display control information) from the transport stream TS.

The bit stream processing unit 201 generates output stereoscopic image data in which a subtitle overlaps each of a left-eye image frame (frame0) portion and a right-eye image data frame (frame1) portion which configure the stereoscopic image data (see Fig. 41). At this time, disparity can be brought to occur between the subtitle (the left-eye subtitle) overlapping the left-eye image and the subtitle (the right-eye subtitle) overlapping the right-eye image based on the disparity information.

In other words, the bit stream processing unit 201 generates display data of a region for displaying a subtitle based on the subtitle data. Further, the bit stream processing unit 201 causes the display data of the region to overlap the left-eye image frame (frame0) portion and the right-eye image data frame (frame1) portion which configure the stereoscopic image data, and obtains output stereoscopic image data. At this time, the bit stream processing unit 201 shift-adjusts the position of display data overlapping each portion based on the disparity information.

Further, when the set-top box 200 is the device with the 2D function (the 2D STB), the bit stream processing unit 201 acquires stereoscopic image data, audio data, and subtitle data (including no display control information). The bit stream processing unit 201 generates the 2D image data which the subtitle overlaps using the stereoscopic image data and the subtitle data (see Fig. 42).

In other words, the bit stream processing unit 201 generates display data of a region for displaying a subtitle based on the subtitle data. Further, the bit stream processing unit 201 causes the display data of the region to overlap the 2D image data obtained by executing processing corresponding to the transmission format on the stereoscopic image data, and obtains output 2D image data.

The video signal processing circuit 205 performs, for example, an image quality adjustment process on image data acquired by the bit stream processing unit 201 as necessary, and then supplies the processed image data to the HDMI transmission unit 206. The audio signal processing circuit 207 performs, for example, an acoustic quality adjustment process on the audio data output from the bit stream processing unit 201 as necessary, and then supplies the processed audio data to the HDMI transmission unit 206.

The HDMI transmission unit 206 transmits, for example, image data and audio data which are not compressed through the HDMI terminal 202 by communication that conforms to the HDMI. In this case, since the image data and the audio data are transmitted through a TMDS channel of the HDMI, the image data and the audio data are packed and then output from the HDMI transmission unit 206 to the HDMI terminal 202.

The CPU 211 controls an operation of each component of the set-top box 200. The flash ROM 212 stores control software and data. The DRAM 213 provides a work area of the CPU 211. The CPU 211 develops software or data read from the flash ROM 212 to the DRAM 213, activates the software, and controls each component of the set-top box 200.

The RC receiving unit 215 receives a remote control signal (remote control code) transmitted from the RC transmitter 216, and supplies the remote control signal to the CPU 211. The CPU 211 controls each component of the set-top box 200 based on the remote control code. The CPU 211, the flash ROM 212, and the DRAM 213 are connected to the internal bus 214.

An operation of the set-top box 200 will be briefly described. The digital broadcast signal input to the antenna terminal 203 is supplied to the digital tuner 204. The digital tuner 204 processes the digital broadcast signal, and outputs a transport stream (bit stream data) TS corresponding to a channel selected by the user.

The transport steam (bit stream data) TS output from the digital tuner 204 is supplied to the bit stream processing unit 201. The bit stream processing unit 201 generates output image data to be output to the television receiver 300 as follows.

When the set-top box 200 is the device with the 3D function (the 3D STB), stereoscopic image data, audio data, and subtitle data (including display control information) are acquired from the transport stream TS. Then, the bit stream processing unit 201 generates output stereoscopic image data in which a subtitle overlaps each of a left-eye image frame (frame0) portion and a right-eye image data frame (frame1) portion which configure the stereoscopic image data. At this time, disparity is brought to occur between the left-eye subtitle overlapping the left-eye image and the right-eye subtitle overlapping the right-eye image based on the disparity information.

Further, when the set-top box 200 is the device with the 2D function (the 2D STB), stereoscopic image data, audio data, and subtitle data (including no display control information) are acquired. Then, the bit stream processing unit 201 generates 2D image data which the subtitle overlaps using the stereoscopic image data and the subtitle data.

The output image data acquired by the bit stream processing unit 201 is supplied to the video signal processing circuit 205. The video signal processing circuit 205 performs the image quality adjustment process or the like on the output image data as necessary. The processed image data output from the video signal processing circuit 205 is supplied to the HDMI transmission unit 206.

The audio data acquired by the bit stream processing unit 201 is supplied to the audio signal processing circuit 207. The audio signal processing circuit 207 performs the acoustic quality adjustment process on the audio data. The processed audio data output from the audio signal processing circuit 207 is supplied to the HDMI transmission unit 206. Then, the image data and the audio data which are supplied to the HDMI transmission unit 206 are transmitted from the HDMI terminal 202 to the HDMI cable 400 through the TMDS channel of the HDMI.

[Configuration Example of Bit Stream Processing Unit]

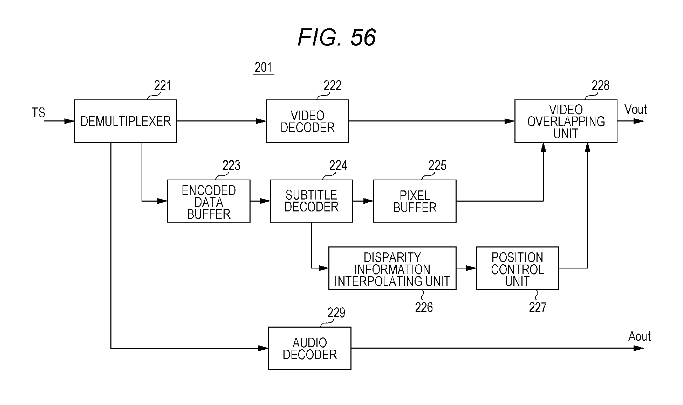

Fig. 56 illustrates a configuration example of the bit stream processing unit 201 when the set-top box 200 is the device with the 3D function (the 3D STB). The bit stream processing unit 201 has a configuration corresponding to the transmission data generating unit 110 illustrated in Fig. 2. The bit stream processing unit 201 includes a demultiplexer 221, a video decoder 222, and an audio decoder 229.

The bit stream processing unit 201 further includes an encoded data buffer 223, a subtitle decoder 224, a pixel buffer 225, a disparity information interpolating unit 226, a position control unit 227, and a video overlapping unit 228. Here, the encoded data buffer 223 configures a decoding buffer.

The demultiplexer 221 extracts packets of the video data stream and the audio data stream from the transport stream TS, and transfers the packets to respective decoders for decoding. Further, the demultiplexer 221 extracts the following stream, and causes the extracted stream to be temporarily accumulated in the encoded data buffer 223. In this case, when it is determined that the service is the 3D service as described above, the demultiplexer 221 extracts a 2D stream and a 3D extension stream of a language selected by the user or automatically selected based on the common composition page ID. In this case, there is a 3D extension stream which is hardly extracted.

The video decoder 222 performs processing reverse to the video encoder 112 of the transmission data generating unit 110. In other words, the video decoder 222 reconstructs a video data stream from the video packet extracted by the demultiplexer 221, performs a decoding process, and acquires stereoscopic image data including left-eye image data and right-eye image data. Examples of the transmission format of stereoscopic image data includes a side-by-side format, a top-and-bottom format, a frame sequential format, and a video transmission format in which each view occupies a full screen size.

The subtitle decoder 224 performs processing reverse to the subtitle encoder 125 of the transmission data generating unit 110. In other words, the subtitle decoder 224 reconstructs each stream from a packet of each stream accumulated in the encoded data buffer 223, performs a decoding process, and acquires the following segment data.

In other words, the subtitle decoder 224 decodes the 2D stream, and acquires data of each segment configuring the subtitle data. Further, the subtitle decoder 224 decodes the 3D extension stream, and acquires data of the DSS segment. As described above, the page IDs (page_id) of the segments of the 2D stream and the 3D extension stream are the same as each other. Thus, the subtitle decoder 224 can easily connect the segment of the 2D stream with the segment of the 3D extension stream based on the page ID.

The subtitle decoder 224 generates display data (bitmap data) of a region for displaying a subtitle based on data of each segment configuring subtitle data and region information of a sub region. Here, transparent color is allocated to a region which is within a region but not surrounded by a sub region. The pixel buffer 225 temporarily accumulates the display data.

The video overlapping unit 228 obtains output stereoscopic image data Vout. In this case, the video overlapping unit 228 causes the display data accumulated in the pixel buffer 225 to overlap each of the left-eye image frame (frame0) portion and the right-eye image data frame (frame1) portion of the stereoscopic image data obtained by the video decoder 222. In this case, the video overlapping unit 228 appropriately changes the overlapping position, the size, and the like according to a transmission format (a side by side format, a top-and-bottom format, a frame sequential format, an MVC format, or the like) of the stereoscopic image data. The video overlapping unit 228 outputs the output stereoscopic image data Vout to the outside of the bit stream processing unit 201.

The disparity information interpolating unit 226 transfers the disparity information obtained by the subtitle decoder 224 to the position control unit 227. The disparity information interpolating unit 226 executes the interpolating process on the disparity information as necessary, and transfers the processing result to the position control unit 227. The position control unit 227 shift-adjusts the position of the display data overlapping each frame based on the disparity information (see Fig. 41). In this case, the position control unit 227 causes disparity to occur by shift-adjusting display data (subtitle pattern data) overlapping the left-eye image frame (frame0) portion and display data (subtitle pattern data) overlapping the right-eye image data frame (frame1) portion in opposite directions based on the disparity information. As described above, when the 3D extension stream is not extracted, for example, appropriate disparity is brought to occur based on the fixed disparity information.

In addition, the display control information includes disparity information commonly used within the subtitle display period. Further, the display control information may further include disparity information sequentially updated within the subtitle display period. The disparity information sequentially updated within the subtitle display period includes disparity information of a first frame and disparity information of a frame of each subsequent update frame interval as described above.

The position control unit 227 uses the disparity information commonly used within the subtitle display period as is. Meanwhile, with regard to the disparity information sequentially updated within the subtitle display period, the position control unit 227 uses disparity information which has been subjected to the interpolating process as necessary by the disparity information interpolating unit 226. For example, the disparity information interpolating unit 226 generates disparity information of an arbitrary frame interval, for example, a one frame interval within the subtitle display period.

For example, as the interpolating process, the disparity information interpolating unit 226 performs the interpolating process including the low pass filter (LPF) process in the time direction rather than the linear interpolating process. Thus, a change in disparity information of a predetermined frame interval in the time direction (the frame direction) after the interpolating process becomes gentle.

The audio decoder 229 performs processing reverse to the audio encoder 113 of the transmission data generating unit 110. In other words, the audio decoder 229 reconstructs an audio elementary stream from the audio packet extracted by the demultiplexer 221, performs a decoding process, and obtains output audio data Aout. Then, the audio decoder 229 outputs the output audio data Aout to the outside of the bit stream processing unit 201.

An operation of the bit stream processing unit 201 illustrated in Fig. 56 will be briefly described. The transport stream TS output from the digital tuner 204 (see Fig. 55) is supplied to the demultiplexer 221. The demultiplexer 221 extracts packets of the video data stream and the audio data stream from the transport stream TS, and transfers the packets to the corresponding decoders. Further, the demultiplexer 221 further extracts packets of a 2D stream and a 3D extension stream of a language selected by the user, and temporarily accumulates the packets in the encoded data buffer 223.

The video decoder 222 reconstructs a video data stream from the video data packet extracted by the demultiplexer 221, performs a decoding process, and acquires stereoscopic image data including left-eye image data and right-eye image data. The stereoscopic image data is supplied to the video overlapping unit 228.

The subtitle decoder 224 reads the packets of the 2D stream and the 3D extension stream from the encoded data buffer 223, and decodes the packets. Then, the subtitle decoder 224 generates display data (bitmap data) of a region for displaying a subtitle based on data of each segment configuring subtitle data and region information of a sub region. The display data is temporarily accumulated in the pixel buffer 225.

The video overlapping unit 228 causes the display data accumulated in the pixel buffer 225 to overlap each of the left-eye image frame (frame0) portion and the right-eye image data frame (frame1) portion of the stereoscopic image data obtained by the video decoder 222. In this case, the overlapping position, the size, and the like are appropriately changed according to a transmission format (a side by side format, a top-and-bottom format, a frame sequential format, an MVC format, or the like) of the stereoscopic image data. The output stereoscopic image data Vout obtained by the video overlapping unit 228 is output to the outside of the bit stream processing unit 201.

Further, the disparity information obtained by the subtitle decoder 224 is transferred to the position control unit 227 through the disparity information interpolating unit 226. The disparity information interpolating unit 226 performs the interpolating process as necessary. For example, the disparity information interpolating unit 226 executes the interpolating process on the disparity information of several frame intervals sequentially updated within the subtitle display period as necessary, and generates disparity information of an arbitrary frame interval, for example, a one frame interval.

The position control unit 227 shift-adjusts display data (subtitle pattern data) overlapping the left-eye image frame (frame0) portion and display data (subtitle pattern data) overlapping the right-eye image data frame (frame1) portion in opposite directions based on the disparity information through the video overlapping unit 228. As a result, disparity is brought to occur between the left-eye subtitle on the displayed on the left-eye image and the right-eye subtitle displayed on the right-eye image data. Thus, a 3D display of a subtitle according to content of the stereoscopic image is implemented.

The audio decoder 229 reconstructs an audio elementary stream from the audio packet extracted by the demultiplexer 221, performs a decoding process, and obtains audio data Aout corresponding to the display stereoscopic image data Vout. The audio data Aout is output to the outside of the bit stream processing unit 201.

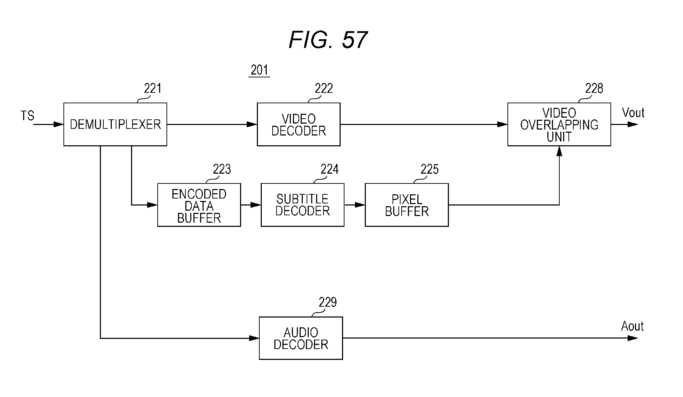

Fig. 57 illustrates a configuration example of the bit stream processing unit 201 when the set-top box 200 is the device with the 2D function (the 2D STB). In Fig. 57, components corresponding to those of Fig. 56 are denoted by the same reference numerals, and a detailed description thereof will not be made. In the following, for the sake of convenience of description, the bit stream processing unit 201 illustrated in Fig. 56 is referred to as a 3D bit stream processing unit 201, and the bit stream processing unit 201 illustrated in Fig. 57 is referred to as a 2D bit stream processing unit 201.

In the 3D bit stream processing unit 201 illustrated in Fig. 56, the video decoder 222 reconstructs a video data stream from the video packet extracted by the demultiplexer 221, performs a decoding process, and acquires stereoscopic image data including left-eye image data and right-eye image data. On the other hand, in the 2D bit stream processing unit 201 illustrated in Fig. 57, after acquiring the stereoscopic image data, the video decoder 222 clips left-eye image data or right-eye image data, performs a scaling process or the like as necessary, and obtains 2D image data.

Further, in the 3D bit stream processing unit 201 illustrated in Fig. 56, the demultiplexer 221 extracts packets of a 2D stream and a 3D extension stream of a language selected by the user or automatically selected, and transfers the packets to the subtitle decoder 224 as described above. On the other hand, in the 2D bit stream processing unit 201 illustrated in Fig. 57, the demultiplexer 221 extracts a packet of a 2D stream of a language selected by the user or automatically selected, and transfers the packet to the subtitle decoder 224 as described with reference to Fig. 42.

In this case, the demultiplexer 221 easily extracts and decodes the 2D stream from the transport stream TS based on the subtitle type information and the linguistic information with a high degree of accuracy. In other words, the component descriptor and the subtitle descriptor included corresponding to the 2D stream and the 3D extension stream are included in the transport stream TS (see Fig. 15).

The subtitle type information "subtitling_type" and the linguistic information "ISO_639_language_code" are set to the descriptors so that the 2D stream and the 3D extension stream are identified (see Figs. 15 and 19). Thus, the demultiplexer 221 can easily extract the 2D stream from the transport stream TS based on the subtitle type information and the linguistic information with a high degree of accuracy.

Further, in the 3D bit stream processing unit 201 illustrated in Fig. 56, the subtitle decoder 224 acquires data of each segment configuring subtitle data, for example, the 2D stream, and further acquires data of the DSS segment from the 3D extension stream as described above.

On the other hand, in the 2D bit stream processing unit 201 illustrated in Fig. 57, the subtitle decoder 224 acquires only data of each segment configuring subtitle data from the 2D stream. Further, the subtitle decoder 224 generates display data (bitmap data) of a region for displaying a subtitle based on data of each segment and region information of a sub region, and temporarily accumulate the display data in the pixel buffer 225. In this case, the subtitle decoder 224 does not read data of the DSS segment. Thus, it is possible to avoid reading interfering with the reception process.

Further, in the 3D bit stream processing unit 201 illustrated in Fig. 56, the video overlapping unit 228 acquires the output stereoscopic image data Vout, and outputs the output stereoscopic image data Vout to the outside of the bit stream processing unit 201. In this case, the output stereoscopic image data Vout is obtained by causing the display data accumulated in the pixel buffer 225 to overlap each of the left-eye image frame (frame0) portion and the right-eye image data frame (frame1) portion of the stereoscopic image data obtained by the video decoder 222. Then, the position control unit 227 shift-adjusts the display data in opposite directions based on the disparity information, and thus causes disparity to occur between the left-eye subtitle displayed on the left-eye image and the right-eye subtitle displayed on the right-eye image data.

On the other hand, in the 2D bit stream processing unit 201 illustrated in Fig. 57, the video overlapping unit 228 obtains the output 2D image data Vout by causing the display data accumulated in the pixel buffer 225 to overlap the 2D image data obtained by the video decoder 222. Then, the video overlapping unit 228 outputs the output 2D image data Vout to the outside of the bit stream processing unit 201.

An operation the 2D bit stream processing unit 201 illustrated in Fig. 57 will be briefly described. An operation of an audio system is similarly to that of the 3D bit stream processing unit 201 illustrated in Fig. 56, and thus a description thereof will not be made.

The transport stream TS output from the digital tuner 204 (see Fig. 55) is supplied to the demultiplexer 221. The demultiplexer 221 extracts packets of the video data stream and the audio data stream from the transport stream TS, and supplies the extracted packets to the corresponding decoders. Further, the demultiplexer 221 further extracts a packet of the 2D stream, and temporarily accumulates the packet in the encoded data buffer 223.

The video decoder 222 reconstructs a video data stream from the video data packet extracted by the demultiplexer 221, performs a decoding process, and acquires stereoscopic image data including left-eye image data and right-eye image data.

Further, the video decoder 222 further clips left-eye image data or right-eye image data from the stereoscopic image data, performs a scaling process or the like as necessary, and obtains 2D image data. The 2D image data is supplied to the video overlapping unit 228.

Further, the subtitle decoder 224 reads the 2D stream from the encoded data buffer 223, and decodes the 2D stream. Then, the subtitle decoder 224 generates display data (bitmap data) of a region for displaying a subtitle based on data of each segment configuring subtitle data. The display data is temporarily accumulated in the pixel buffer 225.

The video overlapping unit 228 obtains output 2D image data Vout by causing the display data (bitmap data) of the subtitle accumulated in the pixel buffer 225 to overlap the 2D image data obtained by the video decoder 222. The output 2D image data Vout is output to the outside of the bit stream processing unit 201.

In the set-top box 200 illustrated in Fig. 55, the subtitle descriptor included corresponding to the 2D stream and the 3D extension stream describes a common composition page ID is described, and specifies association between the two streams. Thus, the set-top box 200 can efficiently and appropriately extract and decodes the 2D stream and the 3D extension stream, which are associated with each other, based on the association information, and obtain disparity information together with subtitle data.

Further, in the set-top box 200 illustrated in Fig. 55, the demultiplexer 221 of the 2D bit stream processing unit 201 (see Fig. 57) easily extracts only the 2D stream from the transport stream TS based on the subtitle type information and the linguistic information with a high degree of accuracy. As a result, the subtitle decoder 224 can strongly prevent the decoding process from being performed on the 3D extension stream including the DSS segment with the disparity information and thus avoid the process interfering with the reception process.

Further, in the set-top box 200 illustrated in Fig. 55, the transport stream TS output from the digital tuner 204 includes the display control information as well as the stereoscopic image data and the subtitle data. The display control information includes the display control information (region information of a sub region, disparity information, and the like). Thus, disparity can be brought to occur at the display positions of the left-eye subtitle and the right-eye subtitle, and the consistency of a sense of perspective with each object in an image when a subtitle is displayed can be maintained to an optimal state.

Further, in the set-top box 200 illustrated in Fig. 55, when the disparity information sequentially updated within the subtitle display period is included in the display control information acquired by the subtitle decoder 224 of the 3D bit stream processing unit 201 (see Fig. 46), the display positions of the left-eye subtitle and the right-eye subtitle can be dynamically controlled. Thus, disparity brought to occur between the left-eye subtitle and the right-eye subtitle can be dynamically changed in conjunction with a change in image content.

Further, in the set-top box 200 illustrated in Fig. 55, the disparity information interpolating unit 226 of the 3D bit stream processing unit 201 (see Fig. 49) executes the interpolating process on disparity information of a plurality of frames configuring disparity information sequentially updated within the subtitle display period (a period of a predetermined number of frames). In this case, even when disparity information is transmitted from a transmission side at update frame intervals, disparity brought to occur between the left-eye subtitle and the right-eye subtitle can be controlled at minute intervals, for example, in units of frames.

Further, in the set-top box 200 illustrated in Fig. 55, the interpolating process in the disparity information interpolating unit 226 of the 3D bit stream processing unit 201 (see Fig. 56) may be performed to be accompanied by, for example, the low pass filter process in the time direction (the frame direction). Thus, even when disparity information is transmitted from the transmission side at update frame intervals, a change of disparity information in the time direction after the interpolating process can become gentle, and thus it is possible to suppress an uncomfortable feeling caused when transition of disparity brought to occur between the left-eye subtitle and the right-eye subtitle becomes discontinuous at update frame intervals.

Further, although not described above, a configuration in which the set-top box 200 is the device with the 3D function, and either of the 2D display mode and the 3D display mode can be selected by the user may be provided. In this case, when the 3D display mode is selected, the bit stream processing unit 201 has the same configuration as the 3D bit stream processing unit 201 (see Fig. 56) and the performs the same operation as the 3D bit stream processing unit 201. Meanwhile, when the 2D display mode is selected, the bit stream processing unit 201 has substantially the same configuration as the 2D bit stream processing unit 201 (see Fig. 57) and performs the same operation as the 2D bit stream processing unit 201.

[Description of Television Receiver]

Referring back to Fig. 1, when the television receiver 300 is the device with the 3D function, the television receiver 300 receives the stereoscopic image data transmitted from the set-top box 200 through the HDMI cable 400. The television receiver 300 includes a 3D signal processing unit 301. The 3D signal processing unit 301 performs a process (a decoding process) corresponding to a transmission format on the stereoscopic image data, and so generates the left-eye image data and the right-eye image data.

[Configuration Example of Television Receiver]

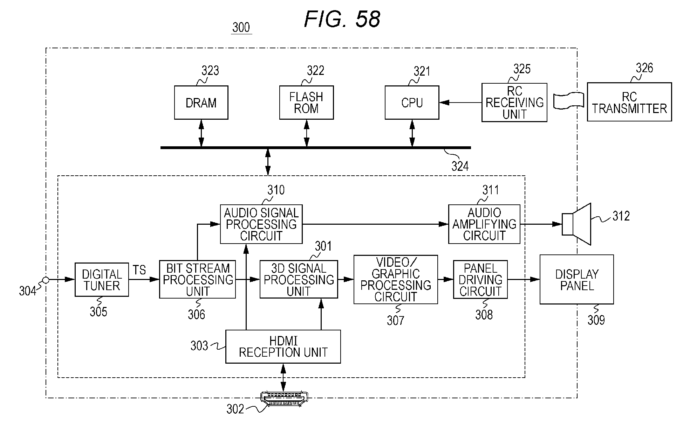

A configuration example of the television receiver 300 with the 3D function will be described. Fig. 58 illustrates a configuration example of the television receiver 300. The television receiver 300 includes the 3D signal processing unit 301, the HDMI terminal 302, an HDMI reception unit 303, an antenna terminal 304, a digital tuner 305, and a bit stream processing unit 306.

The television receiver 300 further includes a video/graphics processing circuit 307, a panel driving circuit 308, a display panel 309, an audio signal processing circuit 310, an audio amplifying circuit 311, and a speaker 312. The television receiver 300 further includes a CPU 321, a flash ROM 322, a DRAM 323, an internal bus 324, a remote control receiving unit (RC receiving unit) 325, and a remote control transmitter (RC transmitter) 326.

The antenna terminal 304 is a terminal to which a television broadcast signal received by a receiving antenna (not illustrated) is input. The digital tuner 305 processes the television broadcast signal input to the antenna terminal 304, and then outputs a transport stream (bit stream data) TS corresponding to a channel selected by the user.

The bit stream processing unit 306 outputs the output stereoscopic image data which the subtitle overlaps and the audio data based on the transport stream TS. Although a detailed description will not be made, for example, the bit stream processing unit 201 has the same configuration as the 3D bit stream processing unit 201 (see Fig. 56) of the set-top box 200. The bit stream processing unit 306 synthesizes display data of the left-eye subtitle and the right-eye subtitle with the stereoscopic image data, and generates and outputs output stereoscopic image data which the subtitle overlaps.

Further, for example, when the transmission format of the stereoscopic image data is the side by side format, the top-and-bottom format, or the like, the bit stream processing unit 306 executes the scaling process and outputs left-eye image data and right-eye image data of the full resolution. Further, the bit stream processing unit 306 outputs audio data corresponding to image data.

The HDMI reception unit 303 receives image data and audio data, which are not compressed, supplied to the HDMI terminal 302 through the HDMI cable 400 by communication that conforms to the HDMI. The HDMI reception unit 303 supports, for example, an HDMI1.4a version and can deal with the stereoscopic image data.

The 3D signal processing unit 301 performs a decoding process on the stereoscopic image data which is received by the HDMI reception unit 303, and generates left-eye image data and right-eye image data of the full resolution. The 3D signal processing unit 301 performs the decoding process corresponding to a TMDS transmission data format. Further, the 3D signal processing unit 301 does not perform any process on the left-eye image data and the right-eye image data of the full resolution obtained by the bit stream processing unit 306.

The video/graphics processing circuit 307 generates image data for displaying a stereoscopic image based on the left-eye image data and the right-eye image data generated by the 3D signal processing unit 301. Further, the video/graphics processing circuit 307 performs an image quality adjustment process on the image data as necessary.

Further, the video/graphics processing circuit 307 synthesizes the image data with data of overlapping information such as a menu or a program table as necessary. The panel driving circuit 308 drives the display panel 309 based on the image data output from the video/graphics processing circuit 307. For example, the display panel 309 is configured with an LCD (Liquid Crystal Display), a PDP (Plasma Display Panel), or the like.

The audio signal processing circuit 310 performs a necessary process such as digital to analog (D/A) conversion on the audio data which is received by the HDMI reception unit 303 or obtained by the bit stream processing unit 306. The audio amplifying circuit 311 amplifies an audio signal output from the audio signal processing circuit 310 and supplies the amplified audio signal to the speaker 312.

The CPU 321 controls an operation of each component of television receiver 300. The flash ROM 322 stores control software and data. The DRAM 323 provides a work area of the CPU 321. The CPU 321 develops software and data read from the flash ROM 322 to the DRAM 323, activates the software, and controls each component of the television receiver 300.

The RC receiving unit 325 receives a remote control signal (remote control code) transmitted from the RC transmitter 326, and supplies the remote control signal to the CPU 321. The CPU 321 controls each component of the television receiver 300 based on the remote control code. The CPU 321, the flash ROM 322, and the DRAM 323 are connected to the internal bus 324.

An operation of the television receiver 300 illustrated in Fig. 58 will be briefly described. The HDMI reception unit 303 receives the stereoscopic image data and the audio data which are transmitted from the set-top box 200 connected to the HDMI terminal 302 through the HDMI cable 400. The stereoscopic image data received by the HDMI reception unit 303 is supplied to the 3D signal processing unit 301. The audio data received by the HDMI reception unit 303 is supplied to the audio signal processing circuit 310.

The television broadcast signal input to the antenna terminal 304 is supplied to the digital tuner 305. The digital tuner 305 processes the television broadcast signal, and outputs a transport stream (bit stream data) TS corresponding to a channel selected by the user. The transport stream TS is supplied to the bit stream processing unit 306.

The bit stream processing unit 306 obtains the output stereoscopic image data which the subtitle overlaps and the audio data based on the video data stream, the audio data stream, the 2D stream, and the 3D extension stream. In this case, the display data of the left-eye subtitle and the right-eye subtitle is synthesized with the stereoscopic image data, and thus the output stereoscopic image data (the left-eye image data and the right-eye image data of the full resolution) which the subtitle overlaps is generated. The output stereoscopic image data is supplied to the video/graphics processing circuit 307 through the 3D signal processing unit 301.

The 3D signal processing unit 301 performs a decoding process on the stereoscopic image data which is received by the HDMI reception unit 303, and generates left-eye image data and right-eye image data of the full resolution. The left-eye image data and the right-eye image data are supplied to the video/graphics processing circuit 307. The video/graphics processing circuit 307 generates image data for displaying a stereoscopic image based on the left-eye image data and the right-eye image data, and performs an image quality adjustment process and a synthesis process of the overlapping information data such as OSD (object screen display) as necessary.

The image data obtained by the video/graphics processing circuit 307 is supplied to the panel driving circuit 308. Thus, the stereoscopic image is displayed through the display panel 309. For example, the left-eye image based on left-eye image data and the right-eye image based on the right-eye image data are alternately displayed on the display panel 309 in a time division manner. For example, a viewer can perceive a stereoscopic image by wearing shutter glasses in which a left-eye shutter and a right-eye shutter are alternately opened in synchronization with a display of the display panel 309 and then viewing only the left-eye image with the left eye and only the right-eye image with the right eye.

Further, the audio data obtained by the bit stream processing unit 306 is supplied to the audio signal processing circuit 310. The audio signal processing circuit 310 performs a necessary process such as D/A conversion on the audio data which is received by the HDMI reception unit 303 or obtained by the bit stream processing unit 306. The audio data is amplified by the audio amplifying circuit 311 and then supplied to the speaker 312. Thus, a sound corresponding to a display image of the display panel 309 is output from the speaker 312.

Fig. 58 illustrates the television receiver 300 with the 3D function as described above. Although a detailed description will not be made, the television receiver 300 with the 3D function has almost the same configuration as the television receiver with the legacy 2D function. However, in case of the television receiver with the legacy 2D function, the bit stream processing unit 306 has the same configuration as the 2D bit stream processing unit 201 illustrated in Fig. 57 and performs the same operation as the 2D bit stream processing unit 201. Further, the television receiver with the legacy 2D function does not need the 3D signal processing unit 301.

Further, a configuration in which the television receiver 300 has the 3D function and either of the 2D display mode and the 3D display mode can be selected by the user may be provided. In this case, when the 3D display mode is selected, the bit stream processing unit 306 has the same configuration and performs the same operation as described above. Meanwhile, when the 2D display mode is selected, the bit stream processing unit 306 has the same configuration as the 2D bit stream processing unit 201 illustrated in Fig. 57 and performs the same operation as the 2D bit stream processing unit 201.

<2. Modified Example>

"First Modified Example"

In the above embodiment, "subtitling_type" described in the subtitle descriptor corresponding to the 2D stream is set to 2D. However" "subtitling_type" may be set to 3D. In this case, the reception device with the 3D function at the reception side can recognize the presence of another PES stream including the DSS segment when the PES stream has 3D as its type but does not include the DSS segment.

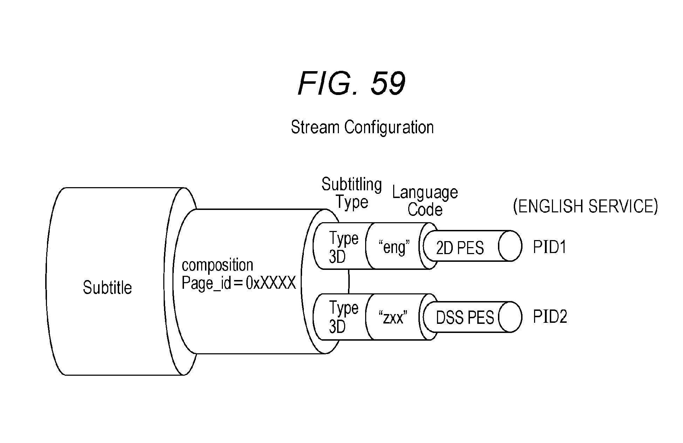

Fig. 59 illustrates a stream configuration example of a subtitle data stream (a 2D stream and a 3D extension stream) in this case. This example is a single language service example of English "eng." The 3D extension stream is extracted in by "composition_page_id = 0xXXXX" which is in common with the 2D stream, and designated by "subtitling_type = 3D" and "ISO_639_language_code = zxx." Here, the 2D stream is designated by "subtitling_type = 3D" and "ISO_639_language_code = eng."

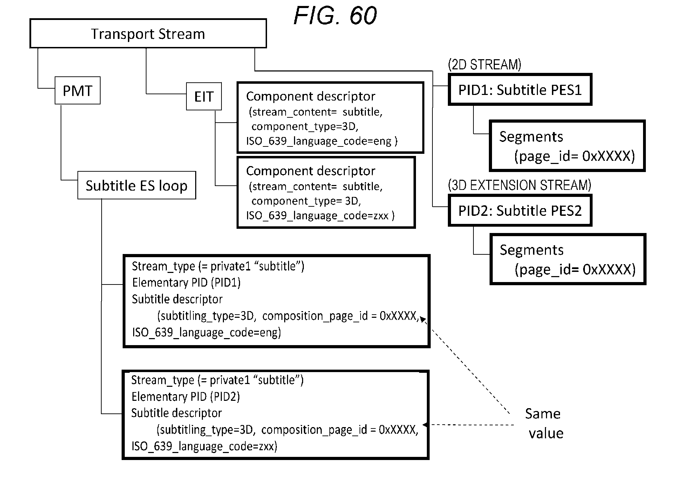

Fig. 60 illustrates a configuration example of the transport stream TS. In Fig. 60, for the sake of simplification of the drawing, video- and audio-related portions are not illustrated. The transport stream TS includes the PES packet obtained by packetizing each elementary stream.

In this configuration example, the PES packet "Subtitle PES1" of the 2D stream (the first private data stream) and the PES packet "Subtitle PES2" of the 3D extension stream (the second private data stream) are included. The 2D stream (PES stream) includes the segments of the DDS, the PCS, the RCS, the CDS, the ODS, and the EDS (see Fig. 11(a)). The 3D extension stream (PES stream) includes the segments of the DDS, the DSS, and the EDS or the segments of the DDS, the PCS, the DSS, and the EDS (Figs. 11 (b) and 11(c)). In this case, "Elementary_PID" of the 2D stream and "Elementary_PID" of the 3D extension stream are set to different IDs such as PID1 and PID2, and the streams are different PES streams.

A subtitle descriptor (subtitling_descriptor) representing content corresponding to the 2D stream and the 3D extension stream is included in the PMT. Further, a component descriptor (component_descriptor) representing delivery content is included in the EIT for each stream. When "stream_content" of the component descriptor represents a subtitle, "component_type" of "0x15" or "0x25" represents a 3D subtitle, and the other values represent a 2D subtitle. "subtitling_type" of the subtitle descriptor is set to the same value as "component_type."

Here, "component_type" of the component descriptor and "subtitling_type" of the subtitle descriptor corresponding to the 3D extension stream are set to 3D. Further, "component_type" of the component descriptor and "subtitling_type" of the subtitle descriptor corresponding to the 2D stream are also set to 3D.

In order to specify association between the 2D stream and the 3D extension stream, the composition page ID "composition_page_id" of the subtitle descriptor corresponding to each stream is set. In other words, "composition_page_id" of the 2D stream and "composition_page_id" of the 3D extension stream are set to share the same value ("0xXXXX" in Fig. 60). Here, "composition_page_id" configures association information. Further, both PES streams are encoded such that "page_id" of each associated segments has the same value (0xXXXX) so that each segment included in the 3D extension stream is associated with each segment of the 2D stream.

Further, for example, the ISO language code (ISO_639_language_code) is described in the subtitle descriptor and the component descriptor as linguistic information. The ISO language code of the descriptor corresponding to the 2D stream is set to represent a language of a subtitle. In this example, the ISO language code is set to "eng" representing English. The 3D extension stream includes the DSS segment with disparity information, but does not include the ODS segment and thus does not rely on a language. The ISO language code described in the descriptor corresponding to the 3D extension stream is set to, for example, "zxx" representing a non-language.

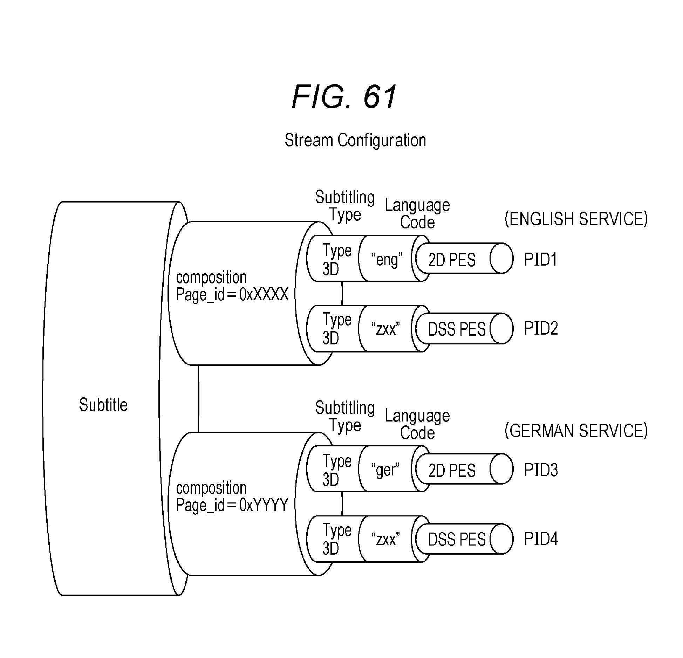

The stream configuration example illustrated in Fig. 59 illustrates an example in which a single language service of English "eng" is present (see Fig. 23). Of course, however, the present technology can be similarly applied to a multilingual service. Fig. 61 illustrates a stream configuration example of a subtitle data stream (a 2D stream and a 3D extension stream) when a bilingual service is provided. This example is a bilingual service of English "eng" and German "ger."

Regarding the English service, the 3D extension stream is extracted in by "composition_page_id = 0xXXXX" which is in common with the 2D stream, designated by "subtitling_type = 3D" and "ISO_639_language_code = zxx," and the 2D stream is designated by "subtitling_type = 3D" and "ISO_639_language_code = eng." Meanwhile, regarding the German service, the 3D extension stream is extracted in by "composition_page_id = 0xYYYY" which is in common with the 2D stream and designated by "subtitling_type = 3D" and "ISO_639_language_code = zxx," and the 2D stream is designated by "subtitling_type = 3D" and "ISO_639_language_code = ger."

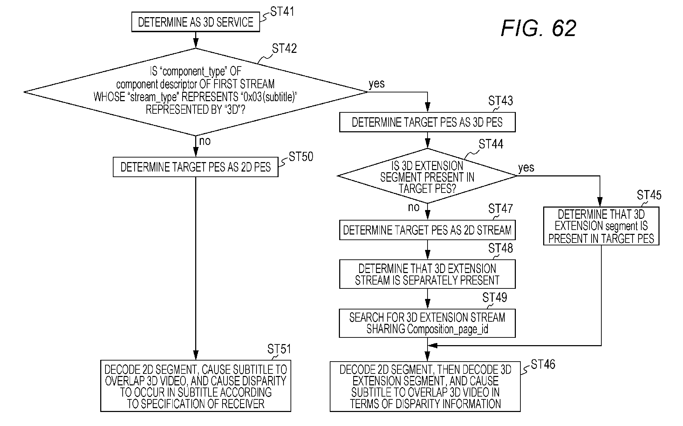

Next, the flow of a process when "subtitling_type" described in the subtitle descriptor corresponding to the 2D stream is set to 3D and the receiver with the 3D function determines that the service is the 3D service will be described with reference to a flowchart of Fig. 62. Here, the description will proceed with an example in which the receiver is the set-top box 200.

In step ST41, the set-top box 200 determines that the service is the 3D service, and then causes the process to proceed to step ST42. In step ST42, the set-top box 200 determines whether or not "component_type" of the component descriptor of the first stream whose "stream_type" represents "0x03 (subtitle)" is "3D."

When "component_type" is "3D," in step ST43, the set-top box 200 determines that the target PES stream is a 3D PES stream. Then, the set-top box 200 causes the process to proceed to step ST44. In step ST44, the set-top box 200 determines whether or not a 3D expended segment, that is, the DSS segment is present in the target PES stream.

When the DSS segment is present in the target PES stream, in step ST45, the set-top box 200 determines that the 3D extension segment (the DSS segment) is present in the target PES stream (see Fig. 52). Thereafter, in step ST46, the set-top box 200 decodes the 2D stream, then decodes the 3D extension segment, and causes the subtitle to overlap the background image (3D video) in terms of the disparity information.

When it is determined in step ST44 that the DSS segment is not present in the target PES stream, in step ST47, the set-top box 200 determines that the target PES stream is the 2D stream. Then, in step ST48, the set-top box 200 determines that the 3D extension stream is separately present.

Thereafter, in step ST49, the set-top box 200 searches for another PES stream sharing the composition page ID, that is, the 3D extension stream. Then, in step ST46, the set-top box 200 decodes the 2D stream, then decodes the 3D extension segment, and causes the subtitle to overlap the background image (3D video) in terms of the disparity information.

Further, when it is determined in step ST42 that "component_type" is not "3D,"in step ST50, the set-top box 200 determines that the target PES stream is the 2D stream. Then, in step ST51, the set-top box 200 decodes the 2D stream, then decodes the 3D extension segment, and causes the subtitle to overlap the background image (3D video) in terms of the disparity information.

"Second Modified Example"

The above embodiment has been described in connection with the example in which the composition page ID (composition_page_id) described in the subtitle descriptor is shared by the 2D stream and the 3D extension stream. Further, the composition page ID may be defined by a special value (special_valueA) representing that the 2D stream and the 3D extension stream which are associated with each other are present.

In this case, the reception device with the 3D function at the reception side can recognize that the 3D extension stream is present in addition to the 2D stream when the composition page ID is the special value (special_valueA). In other words, the reception device can recognize that the DSS segment is divided into another PES stream, and avoid, for example, a useless process of searching for the 3D extension stream when the 3D extension stream is not present.

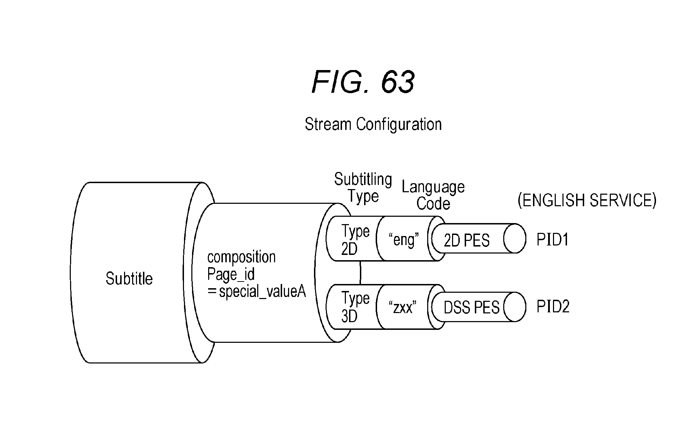

Fig. 63 illustrates a stream configuration example of a subtitle data stream (a 2D stream and a 3D extension stream) in this case. This example is a single language service example of English "eng." The 3D extension stream is extracted in "composition_page_id = special_valueA" which is in common with the 2D stream, and designated by "subtitling_type = 3D" and "ISO_639_language_code = zxx." Further, the 2D stream is designated by "subtitling_type = 2D" and "ISO_639_language_code = eng."

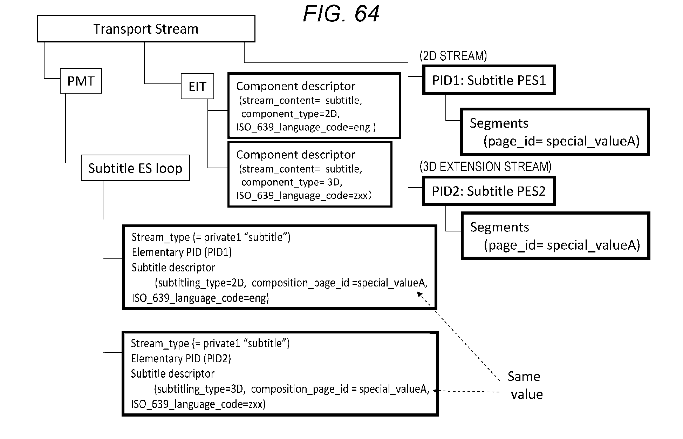

Fig. 64 is a configuration example of the transport stream TS. In Fig. 64, for the sake of simplification of the drawing, video- and audio-related portions are not illustrated. The transport stream TS includes the PES packet obtained by packetizing each elementary stream.

In this configuration example, the PES packet "Subtitle PES1" of the 2D stream and the PES packet "Subtitle PES2" of the 3D extension stream are included. The 2D stream (PES stream) includes the segments of the DDS, the PCS, the RCS, the CDS, the ODS, and the EDS (see Fig. 11(a)). The 3D extension stream (PES stream) includes the segments of the DDS, the DSS, and the EDS or the segments of the DDS, the PCS, the DSS, and the EDS (Figs. 11 (b) and 11(c)). In this case, "Elementary_PID" of the respective streams are set to be different from each other, and the streams are PES streams different from each other.

A subtitle elementary loop (subtitle ES loop) having information associated with a subtitle elementary stream is present in the PMT. In the subtitle elementary loop, not only information such as a packet identifier (PID) but also a descriptor describing information associated with a corresponding elementary stream are arranged for each stream.

In order to specify association between the 2D stream and the 3D extension stream, the composition page ID of the subtitle descriptor corresponding to each stream is set. In other words, "composition_page_id" of the 2D stream and "composition_page_id" of the 3D extension stream are set to share the same value. This value is the special value (special_valueA) representing that the 2D stream and the 3D extension stream which are associated with each other are present. Further, both PES streams are encoded such that "page_id" of each associated segment has the same value (special_valueA) so that each segment included in the 3D extension stream is associated with each segment of the 2D stream.

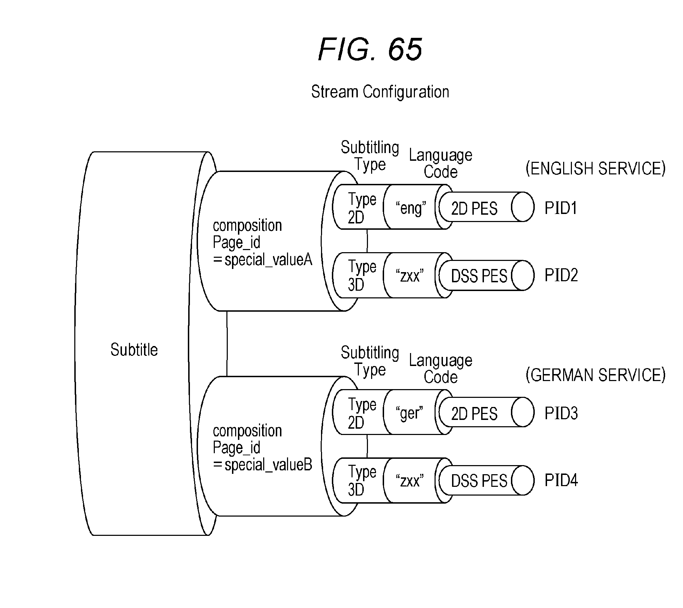

The stream configuration example illustrated in Fig. 63 illustrates an example in which a single language service of English "eng" is present. Of course, however, the present technology can be similarly applied to a multilingual service. Fig. 65 illustrates a stream configuration example of a subtitle data stream (a 2D stream and a 3D extension stream) when a bilingual service is provided. This example is a bilingual service of English "eng" and German "ger."

Regarding the English service, the 3D extension stream is extracted in by "composition_page_id = special_valueA" which is in common with the 2D stream, and designated by "subtitling_type = 3D" and "ISO_ 639_language_code = zxx," and the 2D stream is designated by "subtitling_type = 2D" and "ISO_639_language_code = eng." Meanwhile, regarding the German service, the 3D extension stream is extracted in by "composition_page_id = special_valueB" which is in common with the 2D stream and designated by "subtitling_type = 3D" and "ISO_ 639_language_code = zxx," and the 2D stream is designated by "subtitling_type = 2D" and "ISO_639_language_code = ger."

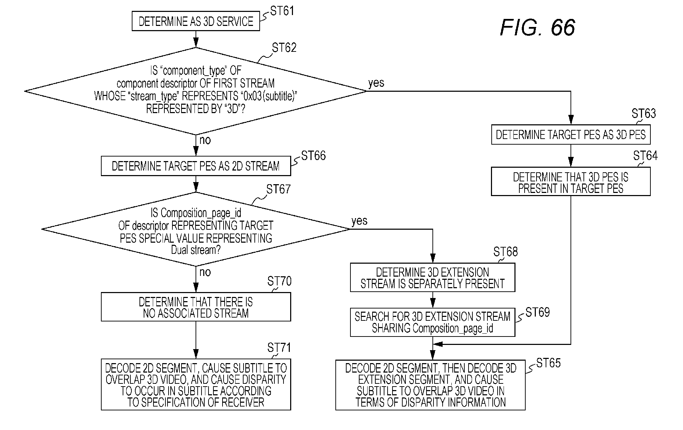

Next, the flow of a process when the common composition page ID (composition_page_id) is set to the special value, and the receiver with the 3D function determines that the service is the 3D service will be described with reference to a flowchart of Fig. 66. Here, the description will proceed with an example in which the receiver is the set-top box 200.

In step ST61, the set-top box 200 determines that the service is the 3D service, and then causes the process to proceed to step ST62.

In step ST62, the set-top box 200 determines whether or not "component_type" of the component descriptor of the first stream whose "stream_type" represents "0x03 (subtitle)" is "3D."

When "component_type" is "3D," in step ST63, the set-top box 200 determines that the target PES stream is a 3D PES stream. Here, the 3D PES stream (3D stream) is a PES stream including the DSS segment with the disparity information in addition to the segments configuring data of the overlapping information (subtitle data) such as the DDS, the PCS, the RCS, the CDS, the ODS, and the EDS as illustrated in Fig. 52.

Next, in step ST64, the set-top box 200 determines that the 3D extension segment (the DSS segment) is present in the target PES stream. Thereafter, in step ST65, the set-top box 200 decodes the 2D stream, then decodes the 3D extension segment, and causes the subtitle to overlap the background image (3D video) in terms of the disparity information.

Further, when it is determined in step ST62 that "component_type" is "3D," in step ST66, the set-top box 200 determines that the target PES stream is the 2D stream. Then, in step ST67, the set-top box 200 determines whether or not "composition_page_id" of the subtitle descriptor representing the target PES stream is the special value representing the dual stream (Dual stream).

When "composition_page_id" is the special value, in step ST68, the set-top box 200 determines that the 3D extension stream is separately present. Thereafter, in step ST69, the set-top box 200 searches for another PES stream sharing the composition page ID, that is, the 3D extension stream. Then, step ST65, the set-top box 200 decodes the 2D stream, then decodes the 3D extension segment, and causes the subtitle to overlap the background image (3D video) in terms of the disparity information.

When it is determined in step ST67 that "composition_page_id" is not the special value, in step ST70, the set-top box 200 determines that there is no PES stream related to the 2D stream. Then, in step ST71, the set-top box 200 decodes the 2D segment, causes disparity to occur in the subtitle according to the specification of the set-top box 200 (receiver), and causes the subtitle to overlap the background image (3D video). For example, the subtitle is positioned at a monitor position without causing disparity to occur in the subtitle. Further, for example, fixed disparity is brought to occur in the subtitle, and the subtitle is positioned at the position ahead of the monitor position.

"Third Modified Example"

The above embodiment has been described in connection with the example in which the 2D stream and the 3D extension stream are associated with each other using the composition page ID (composition_page_id) described in the subtitle descriptor. Dedicated information (linking information) for linking the 2D stream with the 3D extension stream may be described in the descriptor. Thus, the 2D stream, the 3D extension stream which are associated with each other can be more strongly linked.

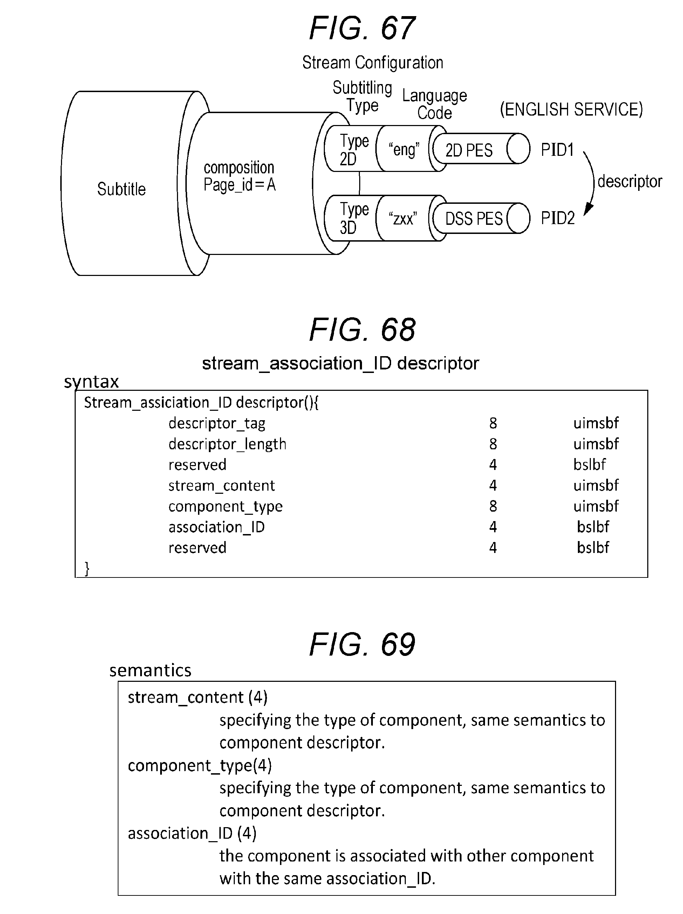

Fig. 67 illustrates a stream configuration example of a subtitle data stream (a 2D stream and a 3D extension stream) in this case. This example is a single language service example of English "eng." The 3D extension stream is extracted in by "composition_page_id = 0xXXXX" which is in common with the 2D stream, and designated by "subtitling_type = 3D" and "ISO_639_language_code = zxx." Further, the 2D stream is designated by "subtitling_type = 2D" and "ISO_639_language_code = eng."

Further, by sharing the composition page ID (composition_page_id) of the subtitle descriptor between the 2D stream and the 3D extension stream, association between the two streams is explicitly represented. Further, by describing dedicated linking information in the descriptor, linking of the two streams is specified. (1) A newly defined descriptor or (2) an existing descriptor may be used as the descriptor in this case.

First, an example in which a new descriptor is defined will be described. Here, a stream association ID descriptor (stream association ID descriptor) in which dedicated linking information (association_ID) is described is newly defined.

Fig. 68 illustrates an example of syntax of the stream association ID descriptor. Fig. 69 illustrates content (semantics) of main information in this syntax example. An 8-bit field of "descriptor_tag" represents that the descriptor is the stream association ID descriptor. An 8-bit field of "descriptor_length" represents the entire byte size subsequent to the field.

A 4-bit field of "stream_content" represents the stream type of the main stream such as a video, an audio, or a subtitle. A 4-bit field of "component_type" represents the component type of the main stream such as a video, an audio, or a subtitle. "stream_content" and "component_type" are regarded as the same information as "stream_content" and "component_type" within the component descriptor corresponding to the main stream.

A 4-bit field of "association_ID" represents linking information. "association_ID" of the stream association ID descriptor corresponding to each component (PES stream) to be linked has the same value.

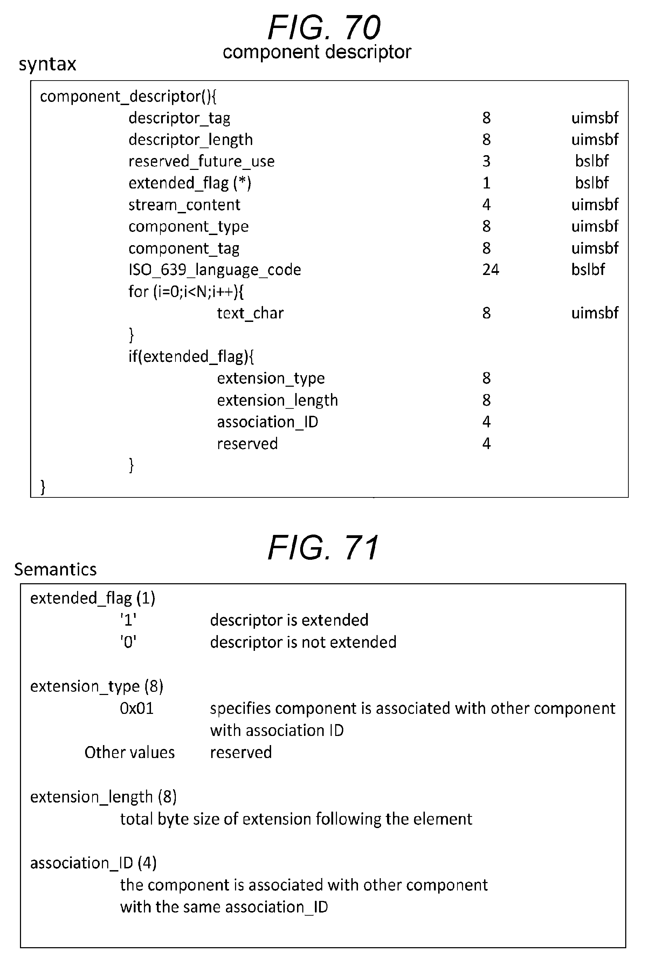

Next, an example in which the existing descriptor is used will be described. Here, an example in which an extended component descriptor is defined and used will be described. Fig. 70 illustrates an example of syntax of an extended component descriptor. Fig. 71 illustrates content (semantics) of main information in this syntax example.

A 1-bit field of "extended_flag" represents whether or not the descriptor is an extended descriptor. In this case, "1" represents the extended descriptor, and "0" represents a non-extended descriptor. When the component descriptor is the extended descriptor, the descriptor has "association_ID" serving as linking information.

An 8-bit field of "extension_type" represents an extension type. Here, for example, when "extension_type" is set "0x01," it means that the component (PES stream) corresponding to the component descriptor is linked by "association_ID." "extension_length" represents the extended byte size subsequent to the field. Further, a 4-bit field of "association_ID" represents linking information. As described above, "association_ID" of the stream association ID descriptor corresponding to each component (PES stream) to be linked has the same value.

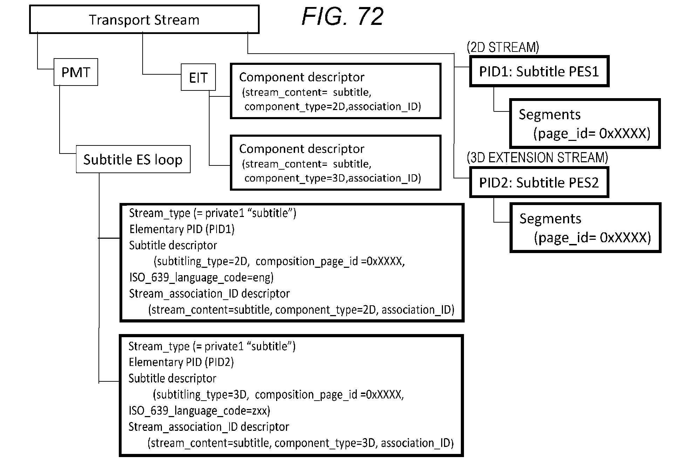

Fig. 72 illustrates a configuration example of the transport stream TS. In Fig. 72, for the sake of simplification of the drawing, video- and audio-related portions are not illustrated. The transport stream TS includes the PES packet obtained by packetizing each elementary stream.

In this configuration example, the PES packet "Subtitle PES1" of the 2D stream and the PES packet "Subtitle PES2" of the 3D extension stream are included. The 2D stream (PES stream) includes the segments of the DDS, the PCS, the RCS, the CDS, the ODS, and the EDS (see Fig. 11(a)). The 3D extension stream (PES stream) includes the segments of the DDS, the DSS, and the EDS or the segments of the DDS, the PCS, the DSS, and the EDS (Figs. 11 (b) and 11(c)). In this case, "Elementary_PID" of the respective streams are set to be different from each other, and the streams are PES streams different from each other.

In order to specify association between the 2D stream and the 3D extension stream, the composition page ID of the subtitle descriptor corresponding to each stream is set. In other words, "composition_page_id" of the 2D stream and "composition_page_id" of the 3D extension stream are set to share the same value ("0xXXXX" in Fig. 72). Further, both PES streams are encoded such that "page_id" of each associated segment has the same value (0xXXXX) so that each segment included in the 3D extension stream is associated with each segment of the 2D stream.

Further, the component descriptor corresponding to each of the 2D stream and the 3D extension stream is extended, and "association_ID" serving as the linking information described in each component descriptor is set to the same value. Thus, the 2D stream and the 3D extension stream which are associated with each other are linked by "association_ID."

Further, the stream association ID descriptor (stream_association_ID descriptor) corresponding to each of the 2D stream and the 3D extension stream is included in the transport stream TS. Further, "association_ID" serving as linking information described in each descriptor has the same value. Thus, the 2D stream and the 3D extension stream which are associated with each other are linked by "association_ID."

In addition, in the configuration example of the transport stream TS illustrated in Fig. 72, both extension of the component descriptor and insertion of the stream association ID descriptor are performed. However, any one of extension of the component descriptor and insertion of the stream association ID descriptor may be performed. Further, of course, although not illustrated, association of "component descriptor" and "PID" is performed as necessary through "component_tag" of "stream_identifier descriptor."

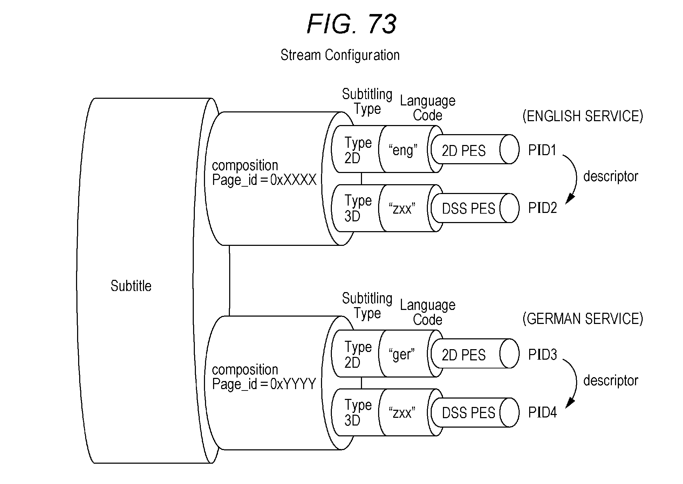

Further, the stream configuration example illustrated in Fig. 67 illustrates an example in which a single language service of English "eng" is present. Of course, however, the present technology can be similarly applied to a multilingual service. Fig. 73 illustrates a stream configuration example of a subtitle data stream (a 2D stream and a 3D extension stream) when a bilingual service is provided. This example is a bilingual service of English "eng" and German "ger."

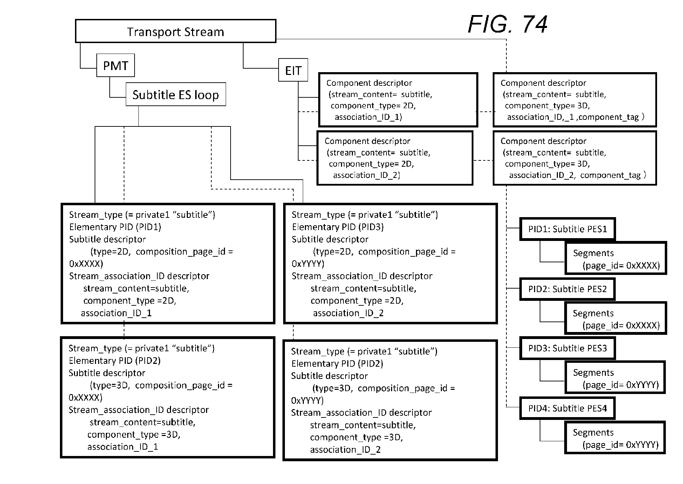

In this case, in each language service, the 2D stream, is linked with the 3D extension stream such that the dedicated linking information "association_ID" is described in the corresponding descriptor. At this time, the different language service is different in the value of "association_ID." Fig. 74 illustrates a configuration example of the transport stream TS in this case. "association_ID" related to the language service of English is "association_ID_1," and "association_ID" related to the language service of German is "association_ID_2."

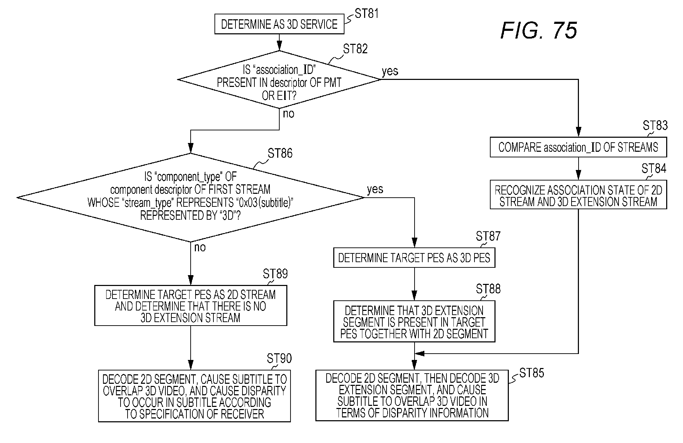

Next, the flow of a process when the dedicated linking information is described in the descriptor and the receiver with the 3D function determines that the service is the 3D service will be described with reference to a flowchart of Fig. 75. Here, the description will proceed with an example in which the receiver is the set-top box 200.

In step ST81, the set-top box 200 determines that the service is the 3D service, and then causes the process to proceed to step ST82. In step ST82, the set-top box 200 determines whether or not "association_ID" serving as the linking information is present in the descriptor of the PMT or the EIT.

When it is determined that "association_ID" is present, in step ST83, the set-top box 200 compares "association_ID" of the respective PES streams with each other. Then, in step ST84, the set-top box 200 recognizes an association state of the 2D stream and the 3D extension stream, that is, linking of the 2D stream and the 3D extension stream. Then, in step ST85, after decoding the 2D stream in step ST65, the set-top box 200 decodes the 3D extension segment, and causes the subtitle to overlap the background image (3D video) in terms of the disparity information.

When it is determined in step ST82 that "association_ID" is not present, the set-top box 200 causes the process to proceed to step ST86. In step ST86, the set-top box 200 determines whether or not "component_type" of the component descriptor of the first stream whose "stream_type" represents "0x03 (subtitle)" is "3D."

When "component_type" is "3D", in step ST87, the set-top box 200 determines that the target PES stream is a 3D PES stream. Here, the 3D PES stream (3D stream) is a PES stream including the DSS segment with the disparity information in addition to the segments configuring data of the overlapping information (subtitle data) such as the DDS, the PCS, the RCS, the CDS, the ODS, and the EDS as illustrated in Fig. 52.

Next, in step ST88, the set-top box 200 determines that the 3D extension segment (the DSS segment) is present in the target PES stream. Thereafter, in step ST85, the set-top box 200 decodes the 2D stream, then decodes the 3D extension segment, and causes the subtitle to overlap the background image (3D video) in terms of the disparity information.

Further, when it is determined in step ST86 that "component_type" is not "3D," in step ST89, the set-top box 200 determines that the target PES stream is the 2D stream. Then, in step ST90, the set-top box 200 decodes the 2D segment, causes disparity to occur in the subtitle according to the specification of the set-top box 200 (receiver), and causes the subtitle to overlap the background image (3D video). For example, the subtitle is positioned at a monitor position without causing disparity to occur in the subtitle. Further, for example, fixed disparity is brought to occur in the subtitle, and the subtitle is positioned at the position ahead of the monitor position.

"Others"

In the set-top box 200 illustrated in Fig. 55, the antenna input terminal 203 connected to the digital tuner 204 is disposed. However, a set-top box that receives an RF signal transmitted through a cable can be also similarly configured. In this case, a cable terminal is disposed instead of the antenna terminal 203.

Further, a set-top box connected to the Internet or the home network directly or via a router can be also similarly configured. In other words, in this case, the transport stream TS is transmitted to the set-top box from the Internet or the home network directly or via the router.

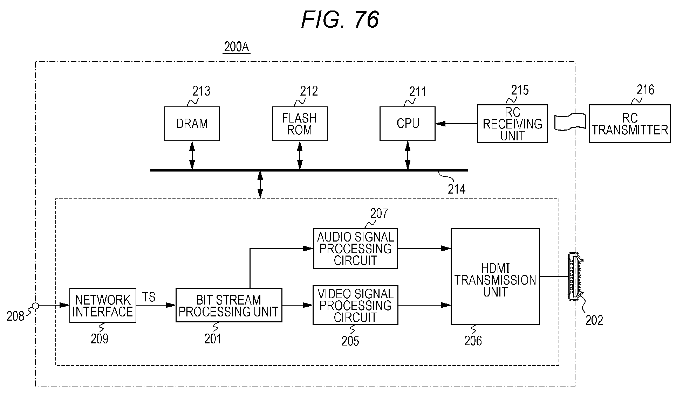

Fig. 76 illustrates a configuration example of the set-top box 200A in this case. In Fig. 76, components corresponding to those of Fig. 55 are denoted by the same reference numerals. The set-top box 200A includes a network terminal 208 connected to a network interface 209. Further, the transport stream TS from the network interface 209 is output and supplied to the bit stream processing unit 201. Although a detailed description will not be made, the remaining components of the set-top box 200A are similar in configuration and operation to the set-top box 200 illustrated in Fig. 55.

Further, in the television receiver 300 illustrated in Fig. 58, the antenna input terminal 304 connected to the digital tuner 204 is disposed. However, a television receiver that receives an RF signal transmitted through a cable can be also similarly configured. In this case, a cable terminal is disposed instead of the antenna terminal 304.

Further, a television receiver connected to the Internet or the home network directly or via a router can be also similarly configured. In other words, in this case, the transport stream TS is transmitted to the television receiver from the Internet or the home network directly or via the router.

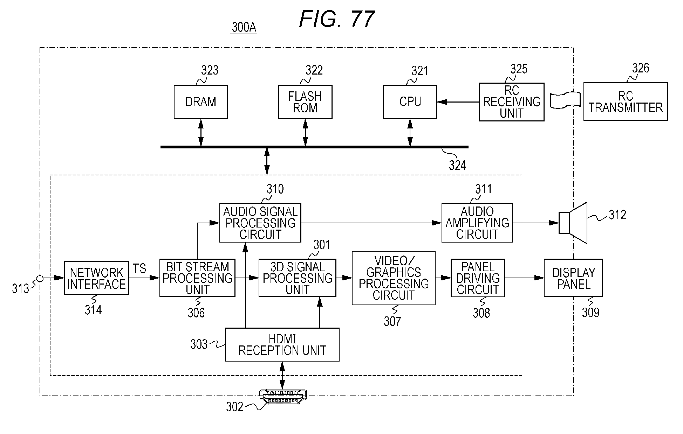

Fig. 77 illustrates a configuration example of the television receiver 300A in this case. In Fig. 77, components corresponding to those of Fig. 58 are denoted by the same reference numerals. The television receiver 300A includes a network terminal 313 connected to a network interface 314. Further, the transport stream TS from the network interface 314 is output and supplied to the bit stream processing unit 306. Although a detailed description will not be made, the remaining components of the television receiver 300A are similar in configuration and operation to the television receiver 300 illustrated in Fig. 58.

In the above embodiment, the image transceiving system 10 is configured to include the broadcasting station 100, the set-top box 200, and the television receiver 300. However, the television receiver 300 includes the bit stream processing unit 306 that performs the same function as the bit stream processing unit 201 of the set-top box 200 as illustrated in Fig. 58. Thus, an image transceiving system 10A may be configured with the broadcasting station 100 and the television receiver 300 as illustrated in Fig. 78. Although a detailed description will not be made, the television receiver 300 performs the 3D service determining process (Figs. 49 and 50) and the reception process (Figs. 51, 62, 66, and 75) when it is determined the service is the 3D service, similarly to the set-top box 200.

Further, the above embodiment has been described in connection with the example in which the component descriptor is present (see Fig. 15). However, when the EPG is not used, the EIT is not present, and the component descriptor is not present. The present technology is implemented even when the component descriptor is not present. In other words, present technology can be implemented by the subtitle descriptor (Subtitle_descriptor), the stream association ID descriptor (stream_association_ID descriptor), and the like which are arranged in the PMT.

Further, the above embodiment has been described in connection with the example in which the segments of the DDS, the DSS, and the EDS or the segments of the DDS, the PCS, the DSS, and the EDS are included in the 3D extension stream (see Figs. 11(b) and 11(c)). However, the segment configuration of the 3D extension stream is not limited to this example and may include any other segment. In this case, the segments of the DDS, the PCS, the RCS, the CDS, the ODS, the DSS, and the EDS at a maximum are included in the 3D extension stream.

Further, the above embodiment has been described in connection with the example in which the set-top box 200 is connected with the television receiver 300 through the digital interface of the HDMI. However, the invention can be similarly applied even when the set-top box 200 is connected with the television receiver 300 via a digital interface (including a wireless interface as well as a wired interface) that performs the same function as the digital interface of the HDMI.

Furthermore, the above embodiment has been described in connection with the example in which the subtitle is dealt as the overlapping information. However, the invention can be similarly applied even when starting from overlapping information such as graphics information or text information, information encoded such that streams divided into a basic stream and an additional stream are output in association with each other is dealt with in connection with an audio stream.

Further, the present technology may have the following configurations.

    (1) A transmission device, including:

        an image data output unit that outputs left-eye image data and right-eye image data configuring a stereoscopic image;

        an overlapping information data output unit that outputs data of overlapping information overlapping an image based on the left-eye image data and the right-eye image data;

        a disparity information output unit that outputs disparity information for shifting the overlapping information overlapping the image based on the left-eye image data and the right-eye image data and causing disparity to occur; and

        a data transmitting unit that transmits multiplexed data stream including a video data stream including the image data, a first private data stream including the data of the overlapping information, and a second private data stream including the disparity information,
wherein association information associating the first private data stream with the second private data stream is included in the multiplexed data stream.

(2) The transmission device according to (1),
wherein identification information, which is common to a first descriptor describing information related to the first private data stream and a second descriptor describing information related to the second private data stream, is described as the association information.

(3) The transmission device according to (2),
wherein the common identification information is defined by a special value representing that the first private data stream and the second private data stream are present.

(4) The transmission device according to (1) or (2),
wherein the multiplexed data stream includes the first private data stream and the second private data stream corresponding to each of a plurality of language services, and
the pieces of common identification information corresponding to the respective language services are set to be different from each other.

(5) The transmission device according to any one of (2) to (4),
wherein the data of the overlapping information is subtitle data of a DVB format, and
a common composition page ID is described in a first subtitle descriptor corresponding to the first private data stream and a subtitle descriptor corresponding to the second private data stream.

(6) The transmission device according to any one of (2) to (5),
wherein linguistic information is described in the first descriptor and the second descriptor, and
the linguistic information described in the second descriptor is set to represent a non-language.

(7) The transmission device according to (6),
wherein the linguistic information representing the non-language is any one of language codes included in a space of "zxx" or "qaa" to "qrz" representing an ISO language code.

(8) The transmission device according to (1),
wherein identification information, which is common to a first descriptor describing information related to the first private data stream and a second descriptor describing information related to the second private data stream, is described as the association information, and
type information representing information for a stereoscopic image display is described in the first descriptor and the second descriptor.

(9) The transmission device according to (8),
wherein the data of the overlapping information is subtitle data of a DVB format, and
the type information is subtitle type information.

(10) The transmission device according to (8) or (9),
wherein linguistic information is described in the first descriptor and the second descriptor, and
the linguistic information described in the second descriptor is set to represent a non-language.

(11) The transmission device according to (10),
wherein the linguistic information representing the non-language is any one of language codes included in a space of "zxx" or "qaa" to "qrz" representing an ISO language code.

(12) The transmission device according to (1),
wherein a descriptor describing dedicated linking information for linking the first private data stream with the second private data stream is included in the multiplexed data stream.

(13) The transmission device according to (12), wherein the descriptor is a dedicated descriptor describing the dedicated linking information.

(14) A transmission method, including the steps of:

outputting left-eye image data and right-eye image data configuring a stereoscopic image;
outputting data of overlapping information overlapping an image based on the left-eye image data and the right-eye image data;
outputting disparity information for shifting the overlapping information overlapping the image based on the left-eye image data and the right-eye image data and causing disparity to occur; and
transmitting multiplexed data stream including a video data stream including the image data, a first private data stream including the data of the overlapping information, and a second private data stream including the disparity information,
wherein association information associating the first private data stream with the second private data stream is included in the multiplexed data stream.

(15) A reception device, including:

a data receiving unit that receives multiplexed data stream including a video data stream including left-eye image data and right-eye image data configuring a stereoscopic image, a first private data stream including data of overlapping information overlapping an image based on the left-eye image data and the right-eye image data, and a second private data stream including disparity information for shifting the overlapping information overlapping the image based on the left-eye image data and the right-eye image data and causing disparity to occur;
a first decoding unit that extracts the video data stream from the multiplexed data stream and decodes the video data stream; and
a second decoding unit that extracts the first private data stream and the second private data stream from the multiplexed data stream and decodes the first private data stream and the second private data stream,
wherein association information associating the first private data stream with the second private data stream is included in the multiplexed data stream, and
the second decoding unit extracts the first private data stream and the second private data stream from the multiplexed data stream based on the association information.

The main feature of the present technology is that when the 2D stream including the 2D segments (the segments of the DDS, the PCS, the RCS, the CDS, the ODS, and the EDS) and the 3D extension stream including the 3D extension segment (the DSS segment) separately from the 2D stream are transmitted (see Fig. 11), the association information (common composition_page_id or the like) for associating the two streams with each other is included in the transport stream TS (see Fig. 15), and thus the reception device with the 3D function can efficiently and appropriately extract and decode the two streams.

REFERENCE SIGNS LIST

| 10, 10A | Image transceiving system |
| 100 | Broadcasting station |
| 111 | Data extracting unit |
| 111a | Data recording medium |
| 112 | Video encoder |
| 113 | Audio encoder |
| 114 | Subtitle generating unit |
| 115 | Disparity information creating unit |
| 116 | Subtitle processing unit |
| 118 | Subtitle encoder |
| 119 | Multiplexer |
| 200, 200A | Set-top box (STB) |
| 201 | Bit stream processing unit |
| 202 | HDMI terminal |
| 203 | Antenna terminal |
| 204 | Digital tuner |
| 205 | Video signal processing circuit |
| 206 | HDMI transmission unit |
| 207 | Audio signal processing circuit |
| 208 | Network terminal |
| 209 | Network interface |
| 211 | CPU |
| 215 | Remote control receiving unit |
| 216 | Remote control transmitter |
| 221 | Demultiplexer |
| 222 | Video decoder |
| 223 | Encoded data buffer |

(continued)

| 224 | Subtitle decoder |
|---|---|
| 225 | Pixel buffer |
| 226 | Disparity information interpolating unit |
| 227 | Position control unit |
| 228 | Video overlapping unit |
| 229 | Audio decoder |
| 300, 300A | Television receiver (TV) |
| 301 | 3D Signal processing unit |
| 302 | HDMI terminal |
| 303 | HDMI reception unit |
| 304 | Antenna terminal |
| 305 | Digital tuner |
| 306 | Bit stream processing unit |
| 307 | Video/graphics processing circuit |
| 308 | Panel driving circuit |
| 309 | Display panel |
| 310 | Audio signal processing circuit |
| 311 | Audio amplifying circuit |
| 312 | Speaker |

**Claims**

1. A transmission device, comprising:

   an image data output unit that outputs left-eye image data and right-eye image data configuring a stereoscopic image;
   an overlapping information data output unit that outputs data of overlapping information overlapping an image based on the left-eye image data and the right-eye image data;
   a disparity information output unit that outputs disparity information for shifting the overlapping information overlapping the image based on the left-eye image data and the right-eye image data and causing disparity to occur; and
   a data transmitting unit that transmits multiplexed data stream including a video data stream including the image data, a first private data stream including the data of the overlapping information, and a second private data stream including the disparity information,
   wherein association information associating the first private data stream with the second private data stream is included in the multiplexed data stream.

2. The transmission device according to claim 1,
   wherein identification information, which is common to a first descriptor describing information related to the first private data stream and a second descriptor describing information related to the second private data stream, is described as the association information.

3. The transmission device according to claim 2,
   wherein the common identification information is defined by a special value representing that the first private data stream and the second private data stream are present.

4. The transmission device according to claim 2,
   wherein the multiplexed data stream includes the first private data stream and the second private data stream corresponding to each of a plurality of language services, and
   the pieces of common identification information corresponding to the respective language services are set to be different from each other.

5. The transmission device according to claim 2,

wherein the data of the overlapping information is subtitle data of a DVB format, and
a common composition page ID is described in a first subtitle descriptor corresponding to the first private data stream and a subtitle descriptor corresponding to the second private data stream.

6. The transmission device according to claim 2,
wherein linguistic information is described in the first descriptor and the second descriptor, and
the linguistic information described in the second descriptor is set to represent a non-language.

7. The transmission device according to claim 6,
wherein the linguistic information representing the non-language is any one of language codes included in a space of "zxx" or "qaa" to "qrz" representing an ISO language code.

8. The transmission device according to claim 1,
wherein identification information, which is common to a first descriptor describing information related to the first private data stream and a second descriptor describing information related to the second private data stream, is described as the association information, and
type information representing information for a stereoscopic image display is described in the first descriptor and the second descriptor.

9. The transmission device according to claim 8,
wherein the data of the overlapping information is subtitle data of a DVB format, and
the type information is subtitle type information.

10. The transmission device according to claim 8,
wherein linguistic information is described in the first descriptor and the second descriptor, and
the linguistic information described in the second descriptor is set to represent a non-language.

11. The transmission device according to claim 10,
wherein the linguistic information representing the non-language is any one of language codes included in a space of "zxx" or "qaa" to "qrz" representing an ISO language code.

12. The transmission device according to claim 1,
wherein a descriptor describing dedicated linking information for linking the first private data stream with the second private data stream is included in the multiplexed data stream.

13. The transmission device according to claim 12,
wherein the descriptor is a dedicated descriptor describing the dedicated linking information.

14. A transmission method, comprising the steps of:

outputting left-eye image data and right-eye image data configuring a stereoscopic image;
outputting data of overlapping information overlapping an image based on the left-eye image data and the right-eye image data;
outputting disparity information for shifting the overlapping information overlapping the image based on the left-eye image data and the right-eye image data and causing disparity to occur; and
transmitting multiplexed data stream including a video data stream including the image data, a first private data stream including the data of the overlapping information, and a second private data stream including the disparity information,
wherein association information associating the first private data stream with the second private data stream is included in the multiplexed data stream.

15. A reception device, comprising:

a data receiving unit that receives multiplexed data stream including a video data stream including left-eye image data and right-eye image data configuring a stereoscopic image, a first private data stream including data of overlapping information overlapping an image based on the left-eye image data and the right-eye image data, and a second private data stream including disparity information for shifting the overlapping information overlapping the image based on the left-eye image data and the right-eye image data and causing disparity to occur;

a first decoding unit that extracts the video data stream from the multiplexed data stream and decodes the video data stream; and

a second decoding unit that extracts the first private data stream and the second private data stream from the multiplexed data stream and decodes the first private data stream and the second private data stream,

wherein association information associating the first private data stream with the second private data stream is included in the multiplexed data stream, and

the second decoding unit extracts the first private data stream and the second private data stream from the multiplexed data stream based on the association information.

## FIG. 1

10

BROADCASTING STATION

110 TRANSMISSION DATA GENERATING UNIT

TS

STB

201 BIT STREAM PROCESSING UNIT

202

400

302

TV

301 3D SIGNAL PROCESSING UNIT

100

200

300

## FIG. 2

110

TS

119 MULTIPLEXER

112 VIDEO ENCODER

113 AUDIO ENCODER

118 SUBTITLE ENCODER

116 SUBTITLE PROCESSING UNIT

115 DISPARITY INFORMATION CREATING UNIT (VIEWER)

111 DATA EXTRACTING UNIT

111a DATA RECORDING MEDIUM

114 SUBTITLE GENERATING UNIT

*FIG. 3*

EXAMPLE OF STEREOSCOPIC IMAGE DATA

**L**

1920x1080

**R**

1920x1080

*FIG. 4*

(a)

"Top & Bottom" FORMAT

**L**

**R**

1920x1080i/p

(b)

"Side By Side" FORMAT

**L**   **R**

1920x1080i/p

(c)

"Frame Sequential" FORMAT
or "L/R No interleaving" FORMAT

**L**

1920x1080i/p

**R**

1920x1080i/p

## FIG. 5

Block Bi    Block Bj

(xi'−xi,yi'−yi)    (xi,yi)    (xj,yj)

(xj'−xj,yj'−yj)

RIGHT-EYE IMAGE
(REFERENCE IMAGE)

LEFT-EYE IMAGE
(DETECTION IMAGE)

## FIG. 6

RIGHT-EYE IMAGE    LEFT-EYE IMAGE

$R(x,y)$    COMPARISON BLOCK

$(xi,yi)$

SEARCH RANGE

$L(x,y)$    Bi

# FIG. 7

DISPARITY VECTOR (OF EACH PIXEL)

PICTURE

# FIG. 8

DISPARITY VECTOR (OF EACH BLOCK)

# FIG. 9

DOWNSIZING PROCESS

(a) Block

(b) Group of Block
Block

(c) Group of Block
Partition

(d) Picture
Partition

FIG.10

DSS disparity assignment
To subregion

(a)

Region_
Starting
Position R0

SubRegion 1
Horizontal
Position
(x = SR1)

Region 0

SubRegion 2
Horizontal
Position
(x = SR2)

SubRegion 1
(disparity1)

SubRegion 2
(disparity2)

For Left view

(b)

Region_
Starting
Position R0

SubRegion 1
Horizontal
Position
(x = SR1 − disparity1)

SubRegion 2
Horizontal
Position
(x = SR2 − disparity2)

For Right view

(c)

Region_
Starting
Position
R0

SubRegion 1
Horizontal
Position
(x = SR1 + disparity1)

SubRegion 2
Horizontal
Position
(x = SR2 + disparity2)

# FIG. 11

PES payload

(a) 2D stream | PES Header | DDS | PCS | RCS | CDS | ODS | EDS

PES payload

(b) 3D EXTENSION stream | PES Header | DDS | DSS | EDS

PES payload

(c) 3D EXTENSION stream | PES Header | DDS | PCS | DSS | EDS

# FIG. 12

DISPLAY AT TIMING OF
Decoder Clock＝PTS

ID1;
PES1(1)

ID2:
PES2(2)

Timing1 (PTS1)

Time

PES#1

PES#2

2D subtitle

| PTS1 | Conventional Segments |

| PTS1 | Extended Segments |

3D extended
control

Disparity value interpolation

Disparity
Plot

Disparity
Plot

DISPLAY TIMING OF
SUBTITLE PATTERN

PES1(1) : PES#1 packet with PTS1
PES2(1) : PES#2 packet with PTS1

## FIG. 13

PES1(1) : PES#1 packet with PTS1
PES2(2) : PES#2 packet with PTS2

## FIG. 14

DISPLAY AT TIMING OF
Decoder Clock＝PTS

Time

(PTS3)

(PTS1)    (PTS2)    (PTS4)

(PTS5)

2D subtitle

Disparity value interpolation

3D extended
control

DISPLAY TIMING OF    Disparity                Disparity
SUBTITLE PATTERN    Plot                        Plot

3D DISPLAY TIMING

ID1;
PES1(1)

| PES#1 | | PTS2 | PTS3 | PTS4 | PTS5 |

| PTS1 | Conventional Segments |

ID2:
PES
2(2)

ID2:
PES
2(3)

ID2:
PES
2(4)

ID2:
PES
2(5)

*FIG. 15*

Transport Stream

PMT

EIT

Component descriptor
(stream_content= subtitle,
 component_type=2D,
 ISO_639_language_code=eng)

Component descriptor
(stream_content= subtitle,
 component_type= 3D,
 ISO_639_language_code=zxx)

Subtitle ES loop

Stream_type (= private1 "subtitle")
Elementary PID (PID1)
Subtitle descriptor
     (subtitling_type=2D, composition_page_id = 0xXXXX,
ISO_639_language_code=eng)

Stream_type (= private1 "subtitle")
Elementary PID (PID2)
Subtitle descriptor
     (subtitling_type=3D, composition_page_id = 0xXXXX,
ISO_639_language_code=zxx)

(2D STREAM)

PID1: Subtitle PES1

Segments
    (page_id= 0xXXXX)

(3D EXTENSION STREAM)

PID2: Subtitle PES2

Segments
    (page_id= 0xXXXX)

# FIG. 16

DVB subtitles page_composition_segment

| Syntax | No. of Bits | Format |
|---|---|---|
| page_composition_segment() { | | |
|     sync_byte | 8 | bslbf |
|     segment_type | 8 | bslbf |
|     page_id | 16 | bslbf |
|     segment_length | 16 | uimsbf |
|     page_time_out | 8 | uimsbf |
|     page_version_number | 4 | uimsbf |
|     page_state | 2 | bslbf |
|     reserved | 2 | bslbf |
|     while (processed_length < segment_length) { | | |
|         region_id | 8 | bslbf |
|         reserved | 8 | bslbf |
|         region_horizontal_address | 16 | uimsbf |
|         region_vertical_address | 16 | uimsbf |
|     } | | |
| } | | |

# FIG. 17

## DVB subtitles segment_type

| DVB subtitles segment_type | Segment |
|---|---|
| 0x10 | page composition segment |
| 0x11 | region composition segment |
| 0x12 | CLUT definition segment |
| 0x13 | object data segment |
| 0x14 | display definition segment |
| **0x15 (*)** | **disparity signaling segment** |
| 0x41 - 0x7F | reserved for future use |
| 0x80 | end of display set segment |
| 0x81 – 0xEF | private data |
| 0xFF | stuffing (see note) |
| All other values | reserved for future use |

(*) Newly introduced

## FIG. 18

Component descriptor   3D EXTENSION OF Component_type

Stream_content

Component_type

Description

| 0x03 | 0x10 | DVB subtitles (normal) with no monitor aspect ratio criticality |
| 0x03 | 0x11 | DVB subtitles (normal) for display on 4:3 aspect ratio monitor |
| 0x03 | 0x12 | DVB subtitles (normal) for display on 16:9 aspect ratio monitor |
| 0x03 | 0x13 | DVB subtitles (normal) for display on 2.21:1 aspect ratio monitor |
| 0x03 | 0x14 | DVB subtitles (normal) for display on a high definition monitor |
| 0x03 | 0x15 | DVB subtitles (normal) for display on a 3D high definition monitor |
| | | |
| 0x03 | 0x20 | DVB subtitles (for the hard of hearing) with no monitor aspect ratio criticality |
| 0x03 | 0x21 | DVB subtitles (for the hard of hearing) for display on 4:3 aspect ratio monitor |
| 0x03 | 0x22 | DVB subtitles (for the hard of hearing) for display on 16:9 aspect ratio monitor |
| 0x03 | 0x23 | DVB subtitles (for the hard of hearing) for display on 2.21:1 aspect ratio monitor |
| 0x03 | 0x24 | DVB subtitles (for the hard of hearing) for display on a high definition monitor |
| 0x03 | 0x25 | DVB subtitles (for the hard of hearing) for display on a 3D high definition monitor |

*FIG. 19*

3D extension is delivered in separated PES   (EXAMPLE IN WHICH "zxx" IS ALLOCATED)

EIT

```
Component_descriptor(){
      event_id
      stream_content(4)              0x03 (subtitle)
      component_type(8)        0x14/0x24 (2D)
      ISO_639_language_code(24)              eng
      component_tag(8)
}
```

```
Component_descriptor(){
      event_id
      stream_content(4)              0x03 (subtitle)
      component_type(8)        0x15/0x25 (3D)
      ISO_639_language_code(24)              zxx
      component_tag(8)
}
```

PMT

Elementary_
PID1

```
Subtitling_descriptor(){

      ISO_639_language_code (24)  eng
      subtitling_type(8)                0x14/0x24 (2D)
      composition_page_id(16)      0xXXXX

}
Stream_identifier_descriptor(){
      component_tag(8)
}
```

Elementary_
PID2

```
Subtitling_descriptor(){

      ISO_639_language_code (24)  zxx
      subtitling_type(8)                0x15/0x25(3D)
      composition_page_id(16)      0xXXXX

}
Stream_identifier_descriptor(){
      component_tag(8)
}
```

Same
value

## FIG. 20

PES

PES stream (Elementary_PID1)
    Segment (page_id = 0xXXXX)
PES stream (Elementary_PID2)
    Segment (page_id = 0xXXXX)

Same value

(2D STREAM)

| PES Header | DDS | PCS | RCS | CDS | ODS | EDS |

(3D EXTENSION STREAM)

| PES Header | DDS | DSS | EDS |

or

| PES Header | DDS | PCS | DSS | EDS |

## FIG. 21

3D extension is delivered in separated PES    (EXAMPLE IN WHICH "qaa" TO "qrz" ARE ALLOCATED)

EIT

```
Component_descriptor(){
     event_id
     stream_content(4)            0x03 (subtitle)
     component_type(8)        0x14/0x24 (2D)
     ISO_639_language_code(24)            eng
      component_tag (8)
}
```

```
Component_descriptor(){
     event_id
     stream_content(4)            0x03 (subtitle)
     component_type(8)        0x15/0x25 (3D)
     ISO_639_language_code(24)        qaa~qrz
      component_tag (8)
}
```

PMT

Elementary_ PID1

```
Subtitling_descriptor(){
     ISO_639_language_code (24)        eng
     subtitling_type(8)                0x14/0x24 (2D)
     composition_page_id(16)           0xXXXX
}
stream_identifier_descriptor(){
     component_tag(8)
}
```

Elementary_ PID2

```
Subtitling_descriptor(){
     ISO_639_language_code(24)        qaa~qrz
     subtitling_type(8)                0x15/0x25 (3D)
     composition_page_id(16)           0xXXXX
}
stream_identifier_descriptor(){
     component_tag (8)
}
```

Same value

# FIG. 22

EXTRACTION OF ISO 639–2 Code LIST

"eng"     English
"ger"     German
"jpn"     Japanese
   :
"qaa"  ⎤
  ≀    ⎬  Reserved for local use
"qrz"  ⎦
   :
"zxx"     No linguistic content

# FIG. 23

Stream Configuration

## FIG. 24

Syntax of component_descriptor

```
component_descriptor(){
        descriptor_tag                  8       uimsbf
        descriptor_length               8       uimsbf
        reserved_future_use             4        bslbf
        stream_content                  4       uimsbf
        component_type                  8       uimsbf
        component_tag                   8       uimsbf
        ISO_639_language_code          24        bslbf
        for (i=0;i<N;i++){
                text_char               8       uimsbf
        }
}
```

# FIG. 25

Syntax of subtitling_descriptor

```
subtitling_descriptor(){
        descriptor_tag                          8        uimsbf
        descriptor_length                       8        uimsbf
        for (i= 0;i<N;I++){
                ISO_639_language_code          24        bslbf
                subtitling_type                 8        bslbf
                composition_page_id            16        bslbf
                ancillary_page_id              16        bslbf
        }
}
```

# FIG. 26

Disparity Temporal Update sequence in DSS

Interval Period = Vertex Time Distance

# FIG. 27

## Disparity Temporal Update sequence in DSS

Interval
Period (IP)

*M          *N        *P        *Q          *R

0

Disparity

A

B

C

D        E

F

Arbitrary Disparity Variant

Time

FIG. 28

PES header

PES data payload

(a)

PTS

| DDS | PCS | DSS | EDS |

(b)

PTS

PTS

:

PTS

| DDS | PCS | DSS | EDS |
| DDS | PCS | DSS | EDS |

:

| DDS | PCS | DSS | EDS |

## FIG. 29

Disparity Temporal Update

Arbitrary Disparity Variant

# FIG. 30

Disparity Temporal Update

| Division Period 1 | Division Period 2 | Division Period 3 | Division Period 4 | Division Period 5 | Division Period 6 |

Interval Duration (ID)

*M    *N    *P    *Q    *R    *S

0

Disparity

T1_0

a (LPF OUTPUT)

T1_1    T1_2    T1_3

T1_4    T1_5    T1_6

Division_Period_n = Interval_Duration *(variable value)

Time

# FIG. 31

Displaying subtitles

(EXAMPLE OF ONE page REGION AND TWO region UNITS)

Region1
with subregion

Region2
with subregion

Area for
Page_default

## FIG. 32

Disparity Temporal Update

(Example of disparity update applying to page_default + 2 regions)

# FIG. 33

## Structure of disparity update sequence overview

```
Page layer
            - page_default_disparity
            - T0_0 : interval_count
                disparity_page_update
                           :
              T0_6 : interval_count
                disparity_page_update
Region layer
            region1 (subregion1)
            -  subregion_disparity_integer_part
               subregion_disparity_fractional_part
            - T1_0 : interval_count
                    disparity_region_update_integer_part
                    disparity_region_update_fractional_part
                               :
              T1_6 : interval_count
                    disparity_region_update_integer_part
                    disparity_region_update_fractional_part

            region2 (subregion1)
            -  subregion_disparity_integer_part
               subregion_disparity_fractional_part
            - T2_0 : interval_count
                    disparity_region_update_integer_part
                    disparity_region_update_fractional_part
                               :
              T2_7 : interval_count
                    disparity_region_update_integer_part
                    disparity_region_update_fractional_part
```

# EP 2 600 621 A1

**FIG. 34**

DSS syntax (1)

| Syntax | Size | Type |
|---|---|---|
| disparity_signalling_segment() { | | |
|   sync_byte | 8 | bslbf |
|   segment_type | 8 | bslbf |
|   page_id | 16 | bslbf |
|   segment_length | 16 | uimbbf |
|   dss_version_number | 4 | uimbdf |
|   disparity_shift_update_sequence_page_flag | 1 | bslbf |
|   reserved | 3 | bslbf |
|   page_default_disparity_shift | 8 | tcimsbf |
|   if (disparity_shift_update_sequence_page_flag ==1) { | | |
|     disparity_shift_update_sequence() | | |
|   } | | |
|   while (processed_length<segment_length) { | | |
|     region_id | 8 | uimsbf |
|     disparity_shift_update_sequence_region_flag | 1 | bslbf |
|     reserved | 5 | bslbf |
|     number_of_subregions_minus_1 | 2 | Uimsdf |
| /* syntax continued to next page */ | | |

# FIG. 35

DSS syntax (2)

| Syntax | Size | Type |
|---|---|---|
| for (n=0; n<= number_of_subregions_minus_1; n++) { | | |
|   if (number_of_subregions_minus_1 > 0) { | | |
|     subregion_horizontal_position | 16 | uimsbf |
|     subregion_width | 16 | uimsbf |
|   } | | |
|   subregion_disparity_shift_integer_part | 8 | tcimbsf |
|   subregion_disparity_shift_fractional_part | 4 | uimbsf |
|   reserved | 4 | uimbsf |
|   if (disparity_shift_update_sequence_region_flag ==1) { | | |
|     disparity_shift_update_sequence() | | |
|   } | | |
|  } | | |
|  } | | |
| } | | |

# FIG. 36

DSS syntax (3)

| Syntax | Size | Type |
|---|---|---|
| disparity_shift_update_sequence() { | | |
|     disparity_shift_update_sequence_length | 8 | bslbf |
|     interval_duration[23..0] | 24 | uimsbf |
|     division_period_count | 8 | uimsbf |
|     for (i= 0; i< division_period_count; i ++) { | | |
|        interval_count | 8 | uimsbf |
|        disparity_shift_update_integer_part | 8 | tcimbsf |
|     } | | |
| } | | |

# FIG. 37

Semantics :
dss_version_number :

indicates the version of this disparity_signalling_segment.
The version number is incremented (modulo 16) if *any of the parameters for this particular disparity_signalling_segment are modified.*

disparity_shift_update_sequence_page_flag :

if „1" then the disparity_shift_update_sequence immediately following is to be applied to the page_default_disparity_shift.
If „0" then a disparity_shift_update_sequence for page_default_disparity_shift is not included.

page_default_disparity_shift :

specifies the default disparity value which should be applied to all regions within the page, and is indicated by  a signed integer to range between + 127 & -128 pixels.

processed_length :

the total number of bytes that have already been processed following the segment_length field.

# FIG. 38

Semantics :
region_id :

    identifies the region to which the following subregion data refers.
    Regions which have been declared in the display set but which are not
    referenced in the while-loop shall adopt the page_default_disparity and
    its associated disparity_update_sequence where present.

disparity_shift_update_sequence_region_flag :

    if „1" then a disparity_shift_update_sequence is included for all subregions
    of this region.
    If „0" then a disparity_shift_update_sequence for this region is not included.

number_of_subregions_minus_1 :

    the number of subregions minus one which apply to this region.
    If number_of_subregions_minus_1 = 0 then the region has only one subregion
    whose dimensions are the same as the region and the signalled disparity
    therefore applies to the whole region.
    If number_of_subregions_minus_1 > 0 then the subregions are spatially
    enclosed by horizontally splitting the region.

subregion_horizontal_position :

    specifies the left-hand most pixel position of this subregion.

subregion_width :

    specifies the horizontal width of this subregion expressed in pixels.
    The combination of subregion_horizontal_position and subregion_width
    shall always fall within the declared extent of the region to which this refers.
    The value of this field shall therefore be in the range 1..4095.

# FIG. 39

Semantics :
subregion_disparity_shift_integer_part :

    specifies the integer part of the disparity shift value which should be applied
    to all subtitle pixel data enclosed within this subregion.
    This allows the disparity to range between + 127 & -128 pixels.

subregion_disparity_shift_fractional_part :

    specifies the fractional part of the disparity shift value which should be applied
    to all subtitle pixel data enclosed within this subregion.
    When used as an extension of the integer part, this allows the signalled
    disparity shift to be defined to 1/16 pixel accuracy.

    Note that this fractional part is unsigned (0b0001 represents 1/16 pixel
    and 0b1111 represents 15/16 pixel) and should be combined with the integer part
    according to the sign of the integer part.

    Note : Any processing (either at the encoder or the decoder) which needs
    to implement only integer values of disparity shift shall ensure values are
    rounded "towards the viewer" (i.e. that positive values of disparity are rounded down
    and negative values rounded up).
disparity_shift_update_sequence_length :
    specifies the number of bytes contained in the disparity_shift_update_sequence
    which follows this field.

# FIG. 40

Semantics :

interval_duration :
        specifies the unit of interval used to calculate the PTS for the disparity update
        as a 24-bit field (in 90 kHz STC increments).
        The value of interval_duration shall correspond to an exact multiple ($\geq$1)
        of frame periods. The maximum increment is just over 186 seconds
division_period_count :
        specifies the number of unique disparity values ($\geq$ 1) and hence the number
        of time intervals within the following disparity_shift_update_sequence
        „for" loop.
interval_count :
        specifies the multiplier used to calculate the PTS for this disparity update
        from the initial PTS value. The calculation for the PTS for this update is
        PTSnew = PTSprevious + (interval_duration * interval_count)
        where interval count $\geq$ 1, where PTSnew increases with every iteration
        of the loop and where the initial value of PTSprevious is the PTS signalled
        in the PES header.
disparity_shift_update_integer_part :
        specifies the integer part of the disparity update value which should
        be applied to all subtitle pixel data enclosed within this page or this subregion.
        This allows the disparity to excurse + 127 to -128 pixel.

## FIG. 41

BROADCAST RECEPTION CONCEPT (3D RECEPTION)

frame0

A B C

Position − Disparity1

A B C

Position + Disparity1

frame1

A B C

3DTV

300

3D subtitle
stream

Region 0

A B C

SR 00
-Position
-Disparity1

BROADCASTING
STATION

100

3D STB

200

HDMI

Position − Disparity1

A B C

Position + Disparity1

frame0

A B C

frame1

A B C

3DTV

300

74

## FIG. 42

BROADCAST RECEPTION CONCEPT (LEGACY 2D RECEPTION)

2D subtitle
stream
Region 0

A B C

SR 00
-Position
-Disparity1

BROADCASTING
STATION
100

A B C

Legacy
2D STB
200

A B C

TV
300

HDMI

A B C

Legacy 2DTV
300

A B C

## FIG. 43

Service and decode streams

2D Receiver

Service Target: 3D, 2D receiver

Video (3D)

SBS (*)

Subtitle (2D)

"A B C"

Subtitle (3D)

Disparity information

(*) Subtitle delivery stays the same
in service compatible application.

2D mode

A B C

3D Receiver

3D mode    2D mode

L

A B C    A B C

D

R

A B C

# FIG. 44

Stream Configuration

Subtitle

composition
Page_id = 0xXXXX

Subtitling Type

Language Code

(ENGLISH SERVICE)

Type 2D — "eng" — 2D PES — PID1

Type 3D — "zxx" — DSS PES — PID2

composition
Page_id = 0xYYYY

Subtitling Type

Language Code

(GERMAN SERVICE)

Type 2D — "ger" — 2D PES — PID3

Type 3D — "zxx" — DSS PES — PID4

## FIG. 45

Transport Stream

PMT

EIT

Subtitle ES loop

Component descriptor
(stream_content= subtitle, component_type=2D,
ISO_639_language_code=eng)

Component descriptor
(stream_content= subtitle, component_type=3D,
ISO_639_language_code=zxx)

Component descriptor
(stream_content= subtitle, component_type=2D,
ISO_639_language_code=ger)

Component descriptor
(stream_content= subtitle, component_type=3D,
ISO_639_language_code=zxx)

(2D STREAM)

PID1: Subtitle PES1

(3D EXTENSION STREAM)

PID2: Subtitle PES2

Segments
(page_id= 0xXXXX)

Segments
(page_id= 0xXXXX)

(2D STREAM)

PID1: Subtitle PES3

(3D EXTENSION STREAM)

PID2: Subtitle PES4

Segments
(page_id= 0xYYYY)

Segments
(page_id= 0xYYYY)

Stream_type (= private1 "subtitle")
Elementary PID (PID1)
Subtitle descriptor
    (subtitling_type=2D, composition_page_id = 0xXXXX,
ISO_639_language_code=eng)

Stream_type (= private1 "subtitle")
Elementary PID (PID1)
Subtitle descriptor
    (subtitling_type=2D, composition_page_id = 0xYYYY,
ISO_639_language_code=ger)

Stream_type (= private1 "subtitle")
Elementary PID (PID2)
Subtitle descriptor
    (subtitling_type=3D, composition_page_id = 0xXXXX,
ISO_639_language_code=zxx)

Stream_type (= private1 "subtitle")
Elementary PID (PID2)
Subtitle descriptor
    (subtitling_type=3D, composition_page_id = 0xYYYY,
ISO_639_language_code=zxx)

78

# FIG. 46

Stream Configuration

## *FIG. 47*

# FIG. 48

(a)

```
SDT
    service descriptor
        (service_type
            = 0x1C, 0x1D, 0x1E; frame compatible
                                    stereo scopic service)
```

(b)

```
EIT
    component descriptor
        (stream_content
            = 0x05; MPEG4-AVC video)
        (component_type
            = 0x80 ~ 0x83 ; frame compatible
                                    side-by-side or top-bottom)
```

# FIG. 49

START — ST1

IS service_type OF service descriptor 3D? — ST2

no

DOES stream_content AND component_type OF component descriptor REPRESENT 3D FORMAT? — ST4

yes

no

yes

DETERMINE AS 2D SERVICE — ST5

DETERMINE AS 3D SERVICE — ST3

# FIG. 50

START — ST11

IS service_type OF service descriptor 3D? — ST12

yes

no

DOES stream_content AND component_type OF component descriptor REPRESENT 3D FORMAT? — ST13

no

yes

DETERMINE AS 2D SERVICE — ST15

DETERMINE AS 3D SERVICE — ST14

*FIG. 51*

DETERMINE AS 3D SERVICE ～ST21

IS "component_type" OF component descriptor OF FIRST STREAM WHOSE "stream_type" REPRESENTS "0x03(subtitle)" REPRESENTED BY "3D"? ～ST22

yes

no

DETERMINE TARGET PES AS 2D STREAM ～ST26

DETERMINE THAT 3D EXTENSION STREAM IS SEPARATELY PRESENT ～ST27

SEARCH FOR 3D EXTENSION STREAM SHARING Composition_page_id ～ST28

IS 3D EXTENSION STREAM SEPARATELY PRESENT ～ST29

yes

no

DECODE 2D SEGMENT, CAUSE SUBTITLE TO OVERLAP 3D VIDEO, AND CAUSE DISPARITY TO OCCUR IN SUBTITLE ACCORDING TO SPECIFICATION OF RECEIVER ～ST30

DETERMINE TARGET PES AS 3D PES ～ST23

DETERMINE THAT 3D EXTENSION SEGMENT IS PRESENT IN TARGET PES ～ST24

DECODE 2D SEGMENT, THEN DECODE 3D EXTENSION SEGMENT, AND CAUSE SUBTITLE TO OVERLAP 3D VIDEO IN TERMS OF DISPARITY INFORMATION ～ST25

# FIG. 52

CONFIGURATION OF 3D STREAM

| Type 3D | "eng" | 2D, DSS PES |

PES payload

| PES Header | DDS | PCS | RCS | CDS | ODS | DSS | EDS |

## FIG. 53

(a)

BACKGROUND

NEAR-VIEW OBJECT

Image Popped Up !

SUBTITLE

(b)

BACKGROUND

NEAR-VIEW OBJECT
SUBTITLE

## FIG. 54

(a)

BACKGROUND

NEAR-VIEW OBJECT

Image Popped Up ! ← SUBTITLE

(b)

LGI
Image Popped Up !

RGI
Image Popped Up !

(c)

Image Popped Up !!

## FIG. 55

## FIG. 56

201

TS → DEMULTIPLEXER (221) → VIDEO DECODER (222) → VIDEO OVERLAPPING UNIT (228) → Vout

DEMULTIPLEXER → ENCODED DATA BUFFER (223) → SUBTITLE DECODER (224) → PIXEL BUFFER (225) → VIDEO OVERLAPPING UNIT

SUBTITLE DECODER → DISPARITY INFORMATION INTERPOLATING UNIT (226) → POSITION CONTROL UNIT (227) → VIDEO OVERLAPPING UNIT

DEMULTIPLEXER → AUDIO DECODER (229) → Aout

## FIG. 57

## FIG. 58

## FIG. 59

Stream Configuration

Subtitling Type | Language Code | (ENGLISH SERVICE)

Subtitle | composition Page_id = 0xXXXX | Type 3D | "eng" | 2D PES | PID1

Type 3D | "zxx" | DSS PES | PID2

## FIG. 60

Transport Stream

PMT

EIT

Component descriptor
(stream_content= subtitle,
component_type=3D,
ISO_639_language_code=eng )

Component descriptor
(stream_content= subtitle,
component_type= 3D,
ISO_639_language_code=zxx )

Subtitle ES loop

Stream_type (= private1 "subtitle")
Elementary PID (PID1)
Subtitle descriptor
    (subtitling_type=3D, composition_page_id = 0xXXXX,
ISO_639_language_code=eng)

Stream_type (= private1 "subtitle")
Elementary PID (PID2)
Subtitle descriptor
    (subtitling_type=3D, composition_page_id = 0xXXXX,
ISO_639_language_code=zxx)

(2D STREAM)

PID1: Subtitle PES1

Segments
(page_id= 0xXXXX)

(3D EXTENSION STREAM)

PID2: Subtitle PES2

Segments
(page_id= 0xXXXX)

Same
value

# FIG. 61

Stream Configuration

*FIG. 62*

DETERMINE AS 3D SERVICE — ST41

IS "component_type" OF component descriptor OF FIRST STREAM WHOSE "stream_type" REPRESENTS "0x03(subtitle)" REPRESENTED BY "3D"? — ST42

yes

no

DETERMINE TARGET PES AS 2D PES — ST50

DETERMINE TARGET PES AS 3D PES — ST43

IS 3D EXTENSION SEGMENT PRESENT IN TARGET PES? — ST44

yes

no

DETERMINE TARGET PES AS 2D STREAM — ST47

DETERMINE THAT 3D EXTENSION segment IS PRESENT IN TARGET PES — ST45

DETERMINE THAT 3D EXTENSION STREAM IS SEPARATELY PRESENT — ST48

SEARCH FOR 3D EXTENSION STREAM SHARING Composition_page_id — ST49

DECODE 2D SEGMENT, CAUSE SUBTITLE TO OVERLAP 3D VIDEO, AND CAUSE DISPARITY TO OCCUR IN SUBTITLE ACCORDING TO SPECIFICATION OF RECEIVER — ST51

DECODE 2D SEGMENT, THEN DECODE 3D EXTENSION SEGMENT, AND CAUSE SUBTITLE TO OVERLAP 3D VIDEO IN TERMS OF DISPARITY INFORMATION — ST46

# FIG. 63

Stream Configuration

Subtitling Type | Language Code | (ENGLISH SERVICE)

Subtitle | composition Page_id = special_valueA

Type 2D | "eng" | 2D PES | PID1

Type 3D | "zxx" | DSS PES | PID2

## FIG. 64

Transport Stream

PMT

EIT

(2D STREAM)

PID1: Subtitle PES1

Component descriptor
(stream_content= subtitle,
component_type=2D,
ISO_639_language_code=eng )

Segments
(page_id= special_valueA)

(3D EXTENSION STREAM)

Component descriptor
(stream_content= subtitle,
component_type= 3D,
ISO_639_language_code=zxx)

PID2: Subtitle PES2

Subtitle ES loop

Segments
(page_id= special_valueA)

Stream_type (= private1 "subtitle")
Elementary PID (PID1)
Subtitle descriptor
        (subtitling_type=2D, composition_page_id =special_valueA,
ISO_639_language_code=eng)

Stream_type (= private1 "subtitle")
Elementary PID (PID2)
Subtitle descriptor
        (subtitling_type=3D, composition_page_id = special_valueA,
ISO_639_language_code=zxx)

Same
value

# FIG. 65

Stream Configuration

Subtitling Type — Language Code

(ENGLISH SERVICE)

Subtitle

composition Page_id = special_valueA

Type 2D — "eng" — 2D PES — PID1

Type 3D — "zxx" — DSS PES — PID2

Subtitling Type — Language Code

(GERMAN SERVICE)

composition Page_id = special_valueB

Type 2D — "ger" — 2D PES — PID3

Type 3D — "zxx" — DSS PES — PID4

*FIG. 66*

DETERMINE AS 3D SERVICE ⌐ST61

ST62

IS "component_type" OF
component descriptor OF FIRST STREAM
WHOSE "stream_type" REPRESENTS "0x03(subtitle)"
REPRESENTED BY "3D"?

yes

ST63
DETERMINE TARGET PES AS 3D PES

ST64
DETERMINE THAT 3D PES IS
PRESENT IN TARGET PES

no

DETERMINE TARGET PES AS 2D STREAM ⌐ST66

ST67

IS Composition_page_id
OF descriptor REPRESENTING TARGET
PES SPECIAL VALUE REPRESENTING
Dual stream?

yes

ST68
DETERMINE 3D EXTENSION
STREAM IS SEPARATELY PRESENT

SEARCH FOR 3D EXTENSION STREAM ⌐ST69
SHARING Composition_page_id

no

ST70
DETERMINE THAT THERE IS
NO ASSOCIATED STREAM

ST71
DECODE 2D SEGMENT, CAUSE SUBTITLE TO
OVERLAP 3D VIDEO, AND CAUSE DISPARITY
TO OCCUR IN SUBTITLE ACCORDING
TO SPECIFICATION OF RECEIVER

DECODE 2D SEGMENT, THEN DECODE 3D ⌐ST65
EXTENSION SEGMENT, AND CAUSE
SUBTITLE TO OVERLAP 3D VIDEO IN
TERMS OF DISPARITY INFORMATION

## FIG. 67

Stream Configuration

## FIG. 68

stream_association_ID descriptor

syntax

| Stream_assiciation_ID descriptor(){ | | |
|---|---|---|
| descriptor_tag | 8 | uimsbf |
| descriptor_length | 8 | uimsbf |
| reserved | 4 | bslbf |
| stream_content | 4 | uimsbf |
| component_type | 8 | uimsbf |
| association_ID | 4 | bslbf |
| reserved | 4 | bslbf |
| } | | |

## FIG. 69

semantics

stream_content (4)
        specifying the type of component, same semantics to
        component descriptor.
component_type(4)
        specifying the type of component, same semantics to
        component descriptor.
association_ID (4)
        the component is associated with other component
        with the same association_ID.

# FIG. 70

## component descriptor

syntax

| component_descriptor(){ | | |
|---|---|---|
| descriptor_tag | 8 | uimsbf |
| descriptor_length | 8 | uimsbf |
| reserved_future_use | 3 | bslbf |
| extended_flag (*) | 1 | bslbf |
| stream_content | 4 | uimsbf |
| component_type | 8 | uimsbf |
| component_tag | 8 | uimsbf |
| ISO_639_language_code | 24 | bslbf |
| for (i=0;i<N;i++){ | | |
| text_char | 8 | uimsbf |
| } | | |
| if(extended_flag){ | | |
| extension_type | 8 | |
| extension_length | 8 | |
| association_ID | 4 | |
| reserved | 4 | |
| } | | |
| } | | |

# FIG. 71

Semantics

extended_flag (1)

'1'   descriptor is extended

'0'   descriptor is not extended

extension_type (8)

0x01   specifies component is associated with other component with association ID

Other values   reserved

extension_length (8)

total byte size of extension following the element

association_ID (4)

the component is associated with other component with the same association_ID

## FIG. 72

Transport Stream

PMT

EIT

Component descriptor
(stream_content= subtitle,
component_type=2D,association_ID)

Component descriptor
(stream_content= subtitle,
component_type=3D,association_ID)

Subtitle ES loop

(2D STREAM)

PID1: Subtitle PES1

Segments
(page_id= 0xXXXX)

(3D EXTENSION STREAM)

PID2: Subtitle PES2

Segments
(page_id= 0xXXXX)

Stream_type (= private1 "subtitle")
Elementary PID (PID1)
Subtitle descriptor
       (subtitling_type=2D, composition_page_id =0xXXXX,
ISO_639_language_code=eng)
Stream_association_ID descriptor
       (stream_content=subtitle, component_type=2D, association_ID)

Stream_type (= private1 "subtitle")
Elementary PID (PID2)
Subtitle descriptor
       (subtitling_type=3D, composition_page_id =0xXXXX,
ISO_639_language_code=zxx)
Stream_association_ID descriptor
       (stream_content=subtitle, component_type=3D, association_ID)

# FIG. 73

Stream Configuration

Subtitle

composition
Page_id = 0xXXXX

Subtitling Type

Language Code

Type 2D    "eng"    2D PES    PID1

Type 3D    "zxx"    DSS PES    PID2

(ENGLISH SERVICE)

descriptor

composition
Page_id = 0xYYYY

Subtitling Type

Language Code

Type 2D    "ger"    2D PES    PID3

Type 3D    "zxx"    DSS PES    PID4

(GERMAN SERVICE)

descriptor

*FIG. 74*

Transport Stream

PMT

Subtitle ES loop

EIT

Component descriptor
(stream_content= subtitle,
component_type= 2D,
association_ID_1)

Component descriptor
(stream_content= subtitle,
component_type= 3D,
association_ID,_1 ,component_tag )

Component descriptor
(stream_content= subtitle,
component_type= 2D,
association_ID_2)

Component descriptor
(stream_content= subtitle,
component_type= 3D,
association_ID_2, component_tag )

Stream_type (= private1 "subtitle")
Elementary PID (PID1)
Subtitle descriptor
(type=2D, composition_page_id =
0xXXXX)
Stream_association_ID descriptor
stream_content=subtitle,
component_type =2D,
association_ID_1

Stream_type (= private1 "subtitle")
Elementary PID (PID3)
Subtitle descriptor
(type=2D, composition_page_id =
0xYYYY)
Stream_association_ID descriptor
stream_content=subtitle,
component_type =2D,
association_ID_2

PID1: Subtitle PES1

Segments
(page_id= 0xXXXX)

PID2: Subtitle PES2

Segments
(page_id= 0xXXXX)

Stream_type (= private1 "subtitle")
Elementary PID (PID2)
Subtitle descriptor
(type=3D, composition_page_id =
0xXXXX)
Stream_association_ID descriptor
stream_content=subtitle,
component_type =3D,
association_ID_1

Stream_type (= private1 "subtitle")
Elementary PID (PID2)
Subtitle descriptor
(type=3D, composition_page_id =
0xYYYY)
Stream_association_ID descriptor
stream_content=subtitle,
component_type =3D,
association_ID_2

PID3: Subtitle PES3

Segments
(page_id= 0xYYYY)

PID4: Subtitle PES4

Segments
(page_id= 0xYYYY)

*FIG. 75*

DETERMINE AS 3D SERVICE ⟋ST81

IS "association_ID" PRESENT IN descriptor OF PMT OR EIT? ⟋ST82

yes

no

COMPARE association_ID OF STREAMS ⟋ST83

RECOGNIZE ASSOCIATION STATE OF 2D STREAM AND 3D EXTENSION STREAM ⟋ST84

IS "component_type" OF component descriptor OF FIRST STREAM WHOSE "stream_type" REPRESENTS "0x03(subtitle)" REPRESENTED BY "3D"? ⟋ST86

yes

no

DETERMINE TARGET PES AS 3D PES ⟋ST87

DETERMINE TARGET PES AS 2D STREAM AND DETERMINE THAT THERE IS NO 3D EXTENSION STREAM ⟋ST89

DETERMINE THAT 3D EXTENSION SEGMENT IS PRESENT IN TARGET PES TOGETHER WITH 2D SEGMENT ⟋ST88

DECODE 2D SEGMENT, CAUSE SUBTITLE TO OVERLAP 3D VIDEO, AND CAUSE DISPARITY TO OCCUR IN SUBTITLE ACCORDING TO SPECIFICATION OF RECEIVER ⟋ST90

DECODE 2D SEGMENT, THEN DECODE 3D EXTENSION SEGMENT, AND CAUSE SUBTITLE TO OVERLAP 3D VIDEO IN TERMS OF DISPARITY INFORMATION ⟋ST85

*FIG. 76*

## FIG. 77

<u>300A</u>

DRAM 323

FLASH ROM 322

CPU 321

RC RECEIVING UNIT 325

RC TRANSMITTER 326

324

AUDIO SIGNAL PROCESSING CIRCUIT 310

AUDIO AMPLIFYING CIRCUIT 311

312

NETWORK INTERFACE 314

TS

BIT STREAM PROCESSING UNIT 306

3D SIGNAL PROCESSING UNIT 301

VIDEO/ GRAPHICS PROCESSING CIRCUIT 307

PANEL DRIVING CIRCUIT 308

DISPLAY PANEL 309

313

303 HDMI RECEPTION UNIT

302

## FIG. 78

<u>10A</u>

BROADCASTING STATION

110 ~ TRANSMISSION DATA GENERATING UNIT

100

TS

TV

BIT STREAM PROCESSING UNIT

306

3D SIGNAL PROCESSING UNIT

301

300

## FIG. 79

C

B(Lb,Rb)

SCREEN

Ra ← La

DPa

Lc → Rc

DPc

A

LEFT EYE

RIGHT EYE

## INTERNATIONAL SEARCH REPORT

International application No.

PCT/JP2012/067017

### A. CLASSIFICATION OF SUBJECT MATTER
*H04N13/00*(2006.01)i, *H04N7/173*(2011.01)i

According to International Patent Classification (IPC) or to both national classification and IPC

### B. FIELDS SEARCHED

Minimum documentation searched (classification system followed by classification symbols)
H04N13/00, H04N7/173

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>A | JP 2011-30193 A  (Sony Corp.),<br>10 February 2011 (10.02.2011),<br>paragraphs [0037] to [0275], [0322] to [0361];<br>fig. 1 to 21, 93 to 102<br>& US 2011/0134213 A1 | 1,12-15<br>2-11 |
| A | JP 10-215442 A  (Electronics and<br>Telecommunications Research Institute),<br>11 August 1998 (11.08.1998),<br>paragraph [0031]<br>& US 6040850 A          & KR 10-0212449 B1 | 1-15 |

| ☒ | Further documents are listed in the continuation of Box C. | ☐ | See patent family annex. |
|---|---|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>27 July, 2012 (27.07.12) | Date of mailing of the international search report<br>07 August, 2012 (07.08.12) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2012/067017

| C (Continuation). | DOCUMENTS CONSIDERED TO BE RELEVANT | |
|---|---|---|
| Category* | Citation of document, with indication, where appropriate, of the relevant passages | Relevant to claim No. |
| A | Codes for the Representation of Names of LanguagesCodes arranged alphabetically by alpha-3/ISO 639-2 Code, International Organization for Standardization, 2010.08.18, URL:http://www.loc.gov/standards/iso639-2/php/code_list.php | 1-15 |
| A | WO 2011/080911 A1 (Panasonic Corp.), 07 July 2011 (07.07.2011), entire text; all drawings & CN 102334338 A | 1-15 |

Form PCT/ISA/210 (continuation of second sheet) (July 2009)

**EP 2 600 621 A1**

## REFERENCES CITED IN THE DESCRIPTION

**Patent documents cited in the description**

- JP 2005006114 A